# EUROPEAN PATENT APPLICATION

(11) **EP 4 734 540 A1**
(43) Date of publication of application: **29.04.2026**
(21) Application number: 24926755.0
(22) Date of filing: 08.10.2024
(51) Int. Cl.: H04N 23/55, H04N 23/57, G02B 7/105

(54) **CAMERA MODULE AND ELECTRONIC DEVICE**

(30) Priority: 26.02.2024 CN 202410211716; 29.03.2024 CN 202410385559
(71) Applicant: Huawei Technologies Co., Ltd., Shenzhen, Guangdong 518129 (CN)
(72) Inventor: LI, Zhangcheng, Shenzhen, Guangdong 518129 (CN); ZHU, Xueqian, Shenzhen, Guangdong 518129 (CN); CHU, Yutian, Shenzhen, Guangdong 518129 (CN); WAN, Haibo, Shenzhen, Guangdong 518129 (CN); LIU, Zichen, Shenzhen, Guangdong 518129 (CN)
(74) Representative: Maiwald GmbH
(86) International application number: PCT/CN2024/123481
(87) International publication number: WO 2025/179889

(57) **Abstract**

Embodiments of this application provide a camera module and an electronic device. The camera module includes a base, a first support, a second support, a lens assembly, a variable aperture, a first drive mechanism, a second drive mechanism, and a third drive mechanism. Both the first support and the second support are disposed on the base, and the second support is connected to the base through an SMA wire. The first support is of an annular structure, and forms a hollow cavity. The lens assembly is disposed in the cavity and fastened on the first support. An optical axis of the lens assembly is parallel to a central axis of the cavity. The variable aperture is disposed on a side that is of the lens assembly and that is away from the base. The second support is sleeved on an outer side of the first support. The first drive mechanism drives the first support and the lens assembly to move along the optical axis of the lens assembly. The second drive mechanism is connected to the base and the second support, and the second drive mechanism drives the first support, the second support, and the lens assembly to move along a plane perpendicular to the optical axis of the lens assembly.

## Description

This application claims priorities to Chinese Patent Application No. 202410211716.X, filed with the China National Intellectual Property Administration on February 26, 2024 and entitled "CAMERA MODULE AND ELECTRONIC DEVICE", and to Chinese Patent Application No. 202410385559.4, filed with the China National Intellectual Property Administration on March 29, 2024 and entitled "CAMERA MODULE AND ELECTRONIC DEVICE", both of which are incorporated herein by reference in their entireties.

### TECHNICAL FIELD

Embodiments of this application relate to the field of semiconductors, and in particular, to a camera module and an electronic device.

### BACKGROUND

Currently, electronic devices such as a mobile phone, a tablet computer, and a personal computer (personal computer, PC) are generally provided with a camera module used for photographing/video recording. To make a shot/recorded image clear, automatic focusing (automatic focusing, AF) and optical image stabilization (Optical Image Stabilizer, OIS) are needed. The camera module includes an optical lens assembly and a base. A camera motor is configured to drive the optical lens assembly to move relative to the base, to implement automatic focusing or optical image stabilization.

With popularization of electronic devices, users have an increasingly high requirement on aesthetic appeal of the electronic devices, so that the electronic devices gradually become thinner.

However, to enable the electronic device to have a better photographing function, a stroke of the optical lens assembly increases accordingly, affecting a thickness of the electronic device.

### SUMMARY

This application provides a camera module and an electronic device, to resolve a problem that a thickness of an electronic device is affected due to a long-stroke camera module.

To achieve the foregoing objective, the following technical solutions are used in embodiments of this application.

According to one aspect of this application, a camera module is provided. The camera module may be used in an electronic device having photographing and video recording functions. The camera module includes a base, a first support, a second support, a lens assembly, a variable aperture, a first drive mechanism, a second drive mechanism, and a third drive mechanism. Both the first support and the second support are disposed on the base, and the second support is connected to the base through an SMA wire. The first support is of an annular structure, and forms a hollow cavity. The lens assembly is disposed in the cavity and fastened on the first support. An optical axis of the lens assembly is parallel to a central axis of the cavity. The variable aperture is disposed on a side that is of the lens assembly and that is away from the base. The third drive mechanism is connected to the variable aperture. The second support is sleeved on an outer side of the first support. The first drive mechanism is connected to the first support and the second support. The first drive mechanism drives the first support and the lens assembly to move along the optical axis of the lens assembly. The second drive mechanism is connected to the base and the second support, and the second drive mechanism drives the first support, the second support, and the lens assembly to move along a plane perpendicular to the optical axis of the lens assembly. The second drive mechanism includes the SMA wire, and the second support is connected to the base through the SMA wire. Therefore, the second drive mechanism of the camera module is an SMA drive mechanism. The SMA drive mechanism has a simple structure and occupies small space, so that a size of a camera drive motor can be compressed, thereby implementing miniaturization of the camera module.

In an optional implementation, the lens assembly includes a first side surface and a second side surface, and a radian of the first side surface is less than a radian of the second side surface. Therefore, the circular lens assembly may be cut to form the first side surface, and the cut lens assembly occupies smaller space, thereby further implementing miniaturization of the camera module.

In an optional implementation, the first side surface is a plane, and the second side surface is an arc-shaped surface. Therefore, space occupied by the lens assembly can be further reduced.

In an optional implementation, a shape of the first support fits a shape of the lens assembly. Therefore, space occupied by the first support can be reduced, and miniaturization of the camera module can be further implemented.

In an optional implementation, the camera module further includes an elastic member, the elastic member is disposed between the base and the second support, the elastic member is configured to provide an elastic force for the second support and the lens assembly to move from a first position to a second position, a direction pointing from the first position to the second position is along the optical axis of the lens assembly, the first position is closer to the base than the second position, the first drive mechanism drives the second support and the lens assembly to move between the second position and a third position along the optical axis of the lens assembly, and the second position is between the first position and the third position. Therefore, a stroke of the first support carrying the lens assembly not only includes a focusing stroke between the second position and the third position, but also includes an elastic member reset stroke between the first position and the second position, that is, the first support carrying the lens assembly moves between the first position and the third position. Compared with only the focusing stroke between the second position and the third position, the lens assembly in this application has a larger stroke.

In an optional implementation, the elastic member is fastened on the first support. When the second support and the lens assembly are located at the first position, the second support is in contact with the elastic member, and the elastic member deforms and generates an elastic force pointing from the first position to the second position. Therefore, the elastic member is disposed between the first support and the base. When the first support and the lens assembly are located at the first position, the elastic member is squeezed, so that the elastic member generates the elastic force.

In an optional implementation, when the second support and the lens assembly move between the second position and the third position, the second support is separated from the elastic member. Therefore, when a focusing drive mechanism drives the first support and the lens assembly to move along the optical axis of the lens assembly to implement automatic focusing, the elastic member does not generate an elastic force for the first support and the lens assembly.

In an optional implementation, the elastic member includes a first support lug, a second support lug, and an elastic section connected between the first support lug and the second support lug, both the first support lug and the second support lug are fastened on the first support, and the connection end extends to a side that is of the second support and that is close to the base.

In an optional implementation, the camera module includes a sliding rod, the sliding rod is connected to the second support, a sliding slot is provided on the first support, and the sliding rod is slidably connected to the sliding slot. Therefore, an axial direction of the first sliding rod is consistent with an optical axis direction of the lens assembly, the first sliding rod is fastened relative to the first support, and the first support is slidably connected to the first sliding rod. When the first support and the lens assembly move between the first position and the third position, the first support slides in the axial direction of the first sliding rod.

Because the first support slidably fits the first sliding rod, the first support carrying the lens assembly may slide along the first sliding rod. In this case, even if a stroke of the first support and the lens assembly is relatively large, or a driving force for driving the first support and the lens assembly to move is relatively large, movement stability of the lens assembly and the first support is relatively high, reducing a risk that the first support and the lens assembly deviate from the optical axis.

In an optional implementation, the camera module further includes a first magnetic component, and the first magnetic component is configured to generate an attraction force between the first support and the sliding rod. Therefore, when the first support and the lens assembly move along the optical axis of the lens assembly, the first support slides in the axial direction of the first sliding rod under attraction of the attraction force.

When the first support carrying the lens assembly moves relative to the first support in the direction of the optical axis of the lens assembly, to enable the first support to stably slide along the sliding rod, in this implementation, the first magnetic component is disposed, the first magnetic component may generate an attraction force between the first support and the sliding rod, and the first support slides along the sliding rod under the action of the attraction force.

In an optional implementation, the first magnetic component includes a magnet, the magnet is fastened on the first support and is disposed close to the first sliding rod, and an attraction force is generated between the magnet and the first sliding rod.

When the first support carrying the lens assembly moves relative to the first support in the direction of the optical axis of the lens assembly, to enable the first support to stably slide along the sliding rod, in embodiments of this application, the magnet is disposed, so that an attraction force (which may be referred to as an axis holding force) is generated between the magnet and the sliding rod. In this way, in a moving process, the first support can hold the sliding rod tightly, and stably slide along the sliding rod, thereby improving movement stability.

In an optional implementation, the first drive mechanism includes a magnet and a coil opposite to the magnet, one of the magnet and the coil is disposed on the second support, and the other is disposed on the first support. Therefore, electromagnetic induction is generated between the coil and the magnet in the focusing drive mechanism.

In an optional implementation, one of a first magnet and a first coil is disposed on the first support, and the other is disposed on the first support. The first sliding rod and the magnet are disposed beside the first magnet, and the magnet is farther away from the first magnet than the first sliding rod. Therefore, a magnetic attraction force may be generated between the sliding rod and the magnet. To weaken impact between electromagnetic induction and the magnetic attraction force, in an example of this application, the magnet is disposed farther away from the magnet in the drive mechanism than the sliding rod.

In an optional implementation, the focusing drive mechanism includes a first magnet and a first coil facing the first magnet, and includes a second magnet and a second coil facing the second magnet. The first magnet and the second magnet are symmetrically disposed with respect to the optical axis of the lens assembly. The camera drive motor further includes a second sliding rod. The first sliding rod is disposed beside the first magnet, the second sliding rod is disposed beside the second magnet, and the first sliding rod and the second sliding rod are symmetrically disposed with respect to the optical axis of the lens assembly.

In an optional implementation, the first support has a sliding slot that slidably fits the first sliding rod, and when the first support slides in an axial direction of the first sliding rod, the sliding rod is in contact with the sliding slot.

This facilitates contact between the sliding rod and the sliding slot, so that the first support can stably slide along the sliding rod.

In an optional implementation, the camera module includes a first groove, a second groove, and a ball, the first groove is disposed on the base, the second groove is disposed on the second support, the first groove and the second groove are disposed opposite to each other, and the ball is disposed in a region enclosed by the first groove and the second groove. Therefore, a plurality of balls are disposed between the first support and the base. When an image stabilization drive mechanism drives the first support and the first support to move along the plane perpendicular to the optical axis, the first support slides along the plurality of balls.

Through the plurality of balls disposed between the first support and the base, a friction coefficient between the first support and the base can be reduced, and image shooting quality can be improved.

In an optional implementation, the plurality of balls include a first group of balls, a second group of balls, and a third group of balls, any one of the first group of balls, the second group of balls, and the third group of balls includes a plurality of balls, and the first group of balls, the second group of balls, and the third group of balls are arranged at intervals in a circumferential direction of the base.

A connection line between the first group of balls, the second group of balls, and the third group of balls is in a shape of a triangle. In this way, on the basis of reducing a movement friction coefficient of the first support, movement stability of the first support can be further improved by using stability of the triangle.

In an optional implementation, the camera module further includes a second magnetic component, the second magnetic component is disposed between the base and the second support, the second support is in contact with the ball under the action of a magnetic attraction force of the second magnetic component, and there is a gap between the second support and the base in a state in which the second support is in contact with the ball. Therefore, the second magnetic component is disposed between the base and the first support, so that when the first support moves relative to the base, a risk that the first support tilts due to gravity of the first support is reduced under the action of the magnetic attraction force of the second magnetic component.

In an optional implementation, the second magnetic component includes a magnet and a magnetic attractive sheet, one of the magnet and the magnetic attractive sheet is disposed on the base, and the other is disposed on the first support.

For example, a mounting groove may be disposed on the base, and the magnet is disposed in the mounting groove. In this way, a thickness dimension of the entire camera drive motor can be reduced.

In an optional implementation, the plurality of balls include a plurality of groups of balls, the plurality of groups of balls are arranged at intervals in the circumferential direction of the base, and a second magnetic component is disposed between two adjacent groups of balls.

In an optional implementation, the second drive mechanism includes a movable clamping jaw and a stationary clamping jaw, the SMA wire is connected to the movable clamping jaw and the stationary clamping jaw, the movable clamping jaw is fastened on the first support, and the stationary clamping jaw is fastened on the base. Each group of drive units includes one movable clamping jaw, one stationary clamping jaw, and one SMA wire, and one SMA wire is connected between one movable clamping jaw and one stationary clamping jaw. In the circumferential direction of the base, movable clamping jaws in two adjacent groups of drive units are disposed close to each other and connected, and stationary clamping jaws in two adjacent groups of drive units are disposed close to each other and separated.

In an optional implementation, the image stabilization drive mechanism includes four groups of drive units, so that the drive mechanism is a four-wire SMA drive mechanism.

In an optional implementation, the second support includes: a main body portion, where the main body portion has a cavity, the first support is disposed in the cavity, and the first drive mechanism is disposed between the main body portion and the first support; and an extension portion, where the extension portion is disposed on a side that is of the main body portion and that is close to the base, the extension portion extends away from the main body portion in a circumferential direction of an outer edge of the main body portion, there is a gap between the extension portion and the base, and the second drive mechanism is disposed in the gap. In this way, there is some space on a periphery of the main body portion, and another mechanical part in the camera module may be disposed by using the space.

In an optional implementation, the camera module further includes a module circuit board and an electrical connection structure. The first drive mechanism, the second drive mechanism, and the third drive mechanism are all electrically connected to the circuit board of the camera drive motor through the electrical connection structure.

In an optional implementation, the electrical connection structure includes: a first FPC, where the first FPC is disposed on the second support, and the first FPC is electrically connected to the module circuit board; a first conductive lead, where the first conductive lead is disposed on the second support, a first end of the first conductive lead is electrically connected to the first drive mechanism, and a second end of the first conductive lead is electrically connected to the first FPC; a first spring arm, where a first end of the first spring arm is connected to the second support, and a second end of the first spring arm is fastened to the base; a second conductive lead, where the second conductive lead is disposed on the base, and the second drive mechanism is electrically connected to the module circuit board through the second conductive lead; a ground lead, where the ground lead is disposed on the base, one end of the ground lead is electrically connected to the second end of the first spring arm, and the other end of the ground lead is electrically connected to the module circuit board of the camera module; and a second spring arm, where a first end of the second spring arm is electrically connected to the variable aperture, and a second end of the second spring arm is fastened on the first support.

In an optional implementation, a first drive chip is disposed on the module circuit board, and the first drive mechanism is electrically connected to the first FPC through the first conductive lead, and is electrically connected to the first drive chip through the first FPC.

In an optional implementation, the second drive mechanism is electrically connected to the first drive chip through the second conductive lead.

In an optional implementation, the camera module further includes a position sensor. The position sensor is configured to detect a position of the second support relative to the base, and the position sensor is electrically connected to the first drive chip through the first FPC. Therefore, the position sensor is used to detect a sliding position of the first support, so that a focusing position can be determined.

In an optional implementation, the electrical connection structure further includes a third conductive lead, the third conductive lead is disposed in the second support, the variable aperture includes a second drive chip and a second FPC, the third drive mechanism is electrically connected to the second drive chip, the second drive chip is electrically connected to the second FPC, the first end of the second spring arm is connected to the second FPC, and the second end of the second spring arm is electrically connected to the first FPC through the third conductive lead, so that the second drive chip is electrically connected to the module circuit board through the second FPC, the second spring arm, the third conductive lead, and the first FPC.

In an optional implementation, the variable aperture further includes: a fastening base, having a first light transmitting hole; a rotating carrier, located in the fastening base and rotatably connected to the fastening base, where the rotating carrier is disposed around a periphery of the first light transmitting hole; and a plurality of blades, disposed on the rotating carrier, where the blades are slidably connected to the rotating carrier and rotatably connected to the fastening base, the plurality of blades are distributed annularly to enclose an aperture hole, and the aperture hole is in communication with the first light transmitting hole. The third drive mechanism includes: a magnet component, disposed on a side that is of the rotating carrier and that is away from the blade, and connected to the rotating carrier; and a coil, disposed on a side that is of the magnet component and that faces the fastening base. The coil is disposed on the side that is of the magnet component and that faces the fastening base.

In an optional implementation, the variable aperture includes a fastening base, a rotating carrier, a plurality of blades, and at least one third drive mechanism. The third drive mechanism includes a magnet component and a coil. The fastening base has a first light transmitting hole. The rotating carrier is located in the fastening base, and the rotating carrier is rotatably connected to the fastening base. The rotating carrier is disposed around a periphery of the first light transmitting hole. The plurality of blades are disposed on the rotating carrier, and the blades are slidably connected to the rotating carrier and rotatably connected to the fastening base. The plurality of blades are distributed annularly to enclose an aperture hole, and the aperture hole is in communication with the first light transmitting hole. In the third drive mechanism, the magnet component is disposed on a side that is of the rotating carrier and that is away from the blade, and the magnet component is connected to the rotating carrier. The coil is disposed on a side that is of the magnet component and that faces the fastening base.

In conclusion, the rotating carrier is located in the fastening base and rotatably connected to the fastening base. In addition, the blades are slidably connected to the rotating carrier and rotatably connected to the fastening base. In this case, when the rotating carrier rotates relative to the fastening base, the blade may be driven to slide relative to the rotating carrier, and the blade may be further caused to rotate relative to the fastening base. Based on this, a hole diameter of the aperture hole enclosed by the plurality of blades that are distributed annularly may change with rotation of the rotating carrier, to adjust the hole diameter of the aperture hole. On this basis, to drive the rotating carrier to rotate, it can be learned from the foregoing that the third drive mechanism includes the magnet component and the coil. The magnet component is disposed on a side that is of the rotating carrier and that is away from the blade. The coil is disposed on a side that is of the magnet component and that faces the fastening base. In this case, a magnetic field is generated between the coil and the magnet component by energizing the coil. Under the effect of the magnetic field, the magnet component disposed on a mover (that is, the rotating carrier) may be driven to move relative to the coil. In addition, the rotating carrier is rotatably electrically connected to the fastening base, so that the rotating carrier may be driven to rotate relative to the fastening base by using the magnet component.

In this way, in the variable aperture provided in embodiments of this application, because the magnet component is disposed on the rotating carrier used as a mover, the variable aperture may be a moving-magnet variable aperture. Based on this, the coil that needs power supply does not need to be disposed on the mover (that is, a moving-coil variable aperture), so that an electrical connection structure of the variable aperture can be simplified. In addition, in this application, the plurality of blades can be driven to move by using the rotating carrier through only rotatable cooperation between the rotating carrier used as a mover and the fastening base used as a stator, to adjust the hole diameter of the aperture hole, thereby reducing a quantity of components used to adjust the hole diameter of the variable aperture, and simplifying a structure of the variable aperture. On this basis, the rotating carrier is disposed in the fastening base, so that a thickness of the variable aperture can be reduced. In addition, the magnet component is disposed on the side that is of the rotating carrier and that is away from the blade, and the coil is disposed on the side that is of the magnet component and that faces the fastening base. Compared with that in a solution in which a magnet and a coil are disposed on a periphery of a rotating carrier, an area of the variable aperture in a transverse direction (perpendicular to an optical axis of the variable aperture) can be reduced, thereby reducing a size of the variable aperture. In this case, the structure of the variable aperture is simplified, and the thickness and the transverse area of the variable aperture are reduced, thereby facilitating a miniaturization design of an entire camera module, and improving an integration level of an electronic device.

In addition, when an image sensor in the camera module having the variable aperture has a relatively large target surface, a dimension of a lens assembly of the camera module in an optical axis direction is relatively large. Therefore, for the image sensor with the relatively large target surface, a size of the entire camera module can be effectively reduced by using the variable aperture provided in embodiments of this application.

In an optional implementation, the magnet component may include a plurality of magnets, and the plurality of magnets may be of a Halbach array structure. A surface that is of the magnet component having the Halbach array structure and that faces the coil has a relatively high magnetic field strength, so that a very small current can push the rotating carrier connected to the magnet component, thereby reducing power consumption.

In an optional implementation, the second FPC is disposed on a side that is of the fastening base and that is away from the blade, and the second FPC is connected to the fastening base. The coil passes through the fastening base and is disposed on a side that is of the second FPC and that faces the rotating carrier, and the coil is connected to the second FPC. In this way, the second FPC is disposed on the side that is of the fastening base and that is away from the blade. Compared with that in a solution in which a second FPC is disposed in an arc shape around a periphery of a mover, the second FPC may be disposed in a flat plate structure, thereby simplifying a manufacturing process of the second FPC. In addition, the coil passes through the fastening base, so that a thickness of the coil overlaps a part of a thickness of the fastening base, thereby helping reduce the thickness of the variable aperture. In addition, the coil that needs power supply is disposed on the side that is of the second FPC and that faces the rotating carrier, and the coil is connected to the second FPC, so that the coil is disposed opposite to the magnet component, and power is directly supplied to the coil by using a metal ground trace on the second FPC, thereby simplifying the electrical connection structure of the variable aperture.

In an optional implementation, the fastening base includes a first plastic part and a first metal support. The first metal support is embedded in the first plastic part, and the first metal support and the first plastic part are connected to form a first integrated mechanical part. In this way, the first integrated mechanical part may be formed by using an insert molding process. Because the fastening base has the first metal support, a mechanical strength of the fastening base can be increased, and in a process of performing a reliability test (such as a rolling test or a drop test) on the variable aperture and a use process of a user, when a collision occurs on the fastening base, a probability that the fastening base is damaged can be reduced, thereby prolonging a service life of a product. In addition, the first metal support may be further grounded on the FPC. For example, the first metal support may be electrically connected to a copper exposure region on the FPC by using a conductive adhesive, to implement grounding of the first metal support, thereby reducing electromagnetic interference.

In an optional implementation, the first plastic part has a first hollow zone, a part of a surface of the first metal support is exposed from the first hollow zone, and the surface is used to create a product identifier. In this way, the product identifier representing product-related information may be directly prepared on the first metal support, and a magnetic conductive sheet used to create the product identifier does not need to be separately disposed, thereby simplifying a manufacturing process.

In an optional implementation, the coil is disposed on the fastening base, and the coil is directly connected to the fastening base. The fastening base used as a stator is in a static state relative to the rotating carrier in a process of changing the hole diameter of the aperture hole of the variable aperture. In this way, the coil disposed on the fastening base may be in a static state relative to the magnet component disposed on the rotating carrier, so that the variable aperture is a moving-magnet variable aperture.

In an optional implementation, the fastening base includes a first plastic part, a first metal support, a metal ground trace, a metal signal trace, a metal ground terminal, and a metal signal terminal. The first metal support, the metal ground trace, and the metal signal trace are embedded in the first plastic part, and the metal signal trace, the metal ground trace, the first metal support, and the first plastic part are connected to form a first integrated mechanical part. Same as described above, the first integrated mechanical part may be formed by using an insert molding process. A technical effect of the first metal support is the same as that described above, and details are not described herein again. In addition, because the fastening base includes the metal ground trace, the metal signal trace, the metal ground terminal, and the metal signal terminal, the metal ground trace, the metal signal trace, the metal ground terminal, and the metal signal terminal may replace the foregoing FPC. The metal ground terminal is connected to the metal ground trace, so that the first metal support may be electrically connected to the module circuit board through the metal ground trace and the metal ground terminal, to implement grounding of the first metal support. In addition, the variable aperture may further include a second drive chip for controlling a rotation position of the rotating shaft carrier. The second drive chip is electrically connected to the metal signal trace. Because the metal signal terminal is connected to the metal signal trace, the second drive chip is electrically connected to the module circuit board through the metal signal terminal and the metal signal trace, so that a processor can transmit a control signal to the second drive chip through the module circuit board.

In an optional implementation, the fastening base includes a bottom plate, a boss, and a side plate. The boss is disposed on the bottom plate, and the first light transmitting hole penetrates the boss and the bottom plate. The side plate is disposed on the bottom plate, and the side plate is disposed around a periphery of the boss. The side plate, a side wall of the boss, and the bottom plate enclose a first mounting groove, and at least a part of the rotating carrier is located in the first mounting groove. In this way, the side plate, the side wall of the boss, and the bottom plate enclose the first mounting groove, and the rotating carrier can be disposed in the fastening base, so that thicknesses of the rotating carrier and the fastening base can overlap, thereby reducing the thickness of the variable aperture.

In an optional implementation, the rotating carrier includes an annular portion and a convex lug. The annular portion is located in the first mounting groove and is disposed around the periphery of the boss, and the annular portion is slidably connected to the blade. The convex lug is disposed on a side wall of the annular portion, and is connected to the annular portion. The magnet component is disposed on the convex lug, and the magnet component is connected to the convex lug. The side plate is provided with a first opening, the first opening penetrates the side plate in a direction perpendicular to the bottom plate, the first opening is in communication with the first mounting groove, and the convex lug is located in the first opening. The annular portion may be located in the first mounting groove as a main body portion of the rotating carrier, and is slidably connected to the blade. In addition, the convex lug is embedded in the first opening on the side plate, and is connected to the magnet component, so that the magnet component can be carried.

In an optional implementation, there may be a stroke gap between a side wall of the first opening and the convex lug. Therefore, in a rotation direction of the rotating carrier, an opening length of the first opening may be a rotation stroke of the rotating carrier. When the rotating carrier abuts against the side wall of the first opening, the rotating carrier rotates to a maximum stroke.

In an optional implementation, the third drive mechanism may further include a first magnetic conductive sheet, the first magnetic conductive sheet may be disposed on a side that is of the bottom plate of the fastening base and that faces the rotating carrier, and the first magnetic conductive sheet is used for attraction with the magnet component. The magnetic conductive sheet is also referred to as a magnetic attractive sheet, and has a high magnetic permeability, a low resistivity, and a small iron loss. Based on this, in a thickness direction of the variable aperture, the first magnetic conductive sheet can attract the magnet component. In addition, a vertical projection of the first opening on the side wall of the boss overlaps a vertical projection of the first magnetic conductive sheet on the side wall of the boss. It can be learned from the foregoing that, in the rotation direction of the rotating carrier, the opening length of the first opening may be the rotation stroke of the rotating carrier. Therefore, when the vertical projection of the first opening on the side wall of the boss overlaps the vertical projection of the first magnetic conductive sheet on the side wall of the boss, the first magnetic conductive sheet may be disposed within a stroke range of the rotating carrier. In this way, in a rotation process of the rotating carrier, the magnet component is attracted by the first magnetic conductive sheet in the thickness direction of the variable aperture, so that separation between the rotating carrier and the fastening base in a rotation process of the camera module can be reduced, thereby improving reliability of the variable aperture.

In addition, when a quantity and positions of first magnetic conductive sheets and a spacing between the first magnetic conductive sheet and the magnet component are adjusted, an attraction force between the first magnetic conductive sheet and the magnet component can be adjusted. In this case, when an attraction force between all first magnetic conductive sheets in the variable aperture and the magnet component can reach about 10 times a weight of the rotating carrier and the magnet component, a friction force between the rotating carrier and the fastening base may be increased. In this case, when the rotating carrier rotates to drive the aperture hole formed through movement of the plurality of blades to reach an f-stop, for example, a maximum f-stop, because the friction force between the rotating carrier and the fastening base is relatively large, it is difficult for the rotating carrier to further rotate relative to the fastening base, and therefore power supply to the coil may be terminated, so that positions of the rotating carrier and the fastening base are relatively fixed, thereby achieving aperture self-locking. In this way, when the user shoots a photo or a video in a fixed scenario, and does not need to change the aperture, because the aperture is self-locked and the coil is in a power-off state, power consumption can be reduced.

In an optional implementation, a second mounting groove is provided on a part that is of the bottom plate and that is used as a groove bottom of the first mounting groove, and the first magnetic conductive sheet is located in the second mounting groove. The second mounting groove is disposed at an end that is of the coil and that faces the boss. The second mounting groove is provided on the bottom plate, so that the first magnetic conductive sheet located in the second mounting groove can be embedded in the bottom plate of the fastening base. In this way, a thickness of the first magnetic conductive sheet overlaps a partial thickness of the bottom plate, thereby helping reduce the thickness of the variable aperture. In addition, the second mounting groove is disposed at the end that is of the coil and that faces the boss, so that the first magnetic conductive sheet located in the second mounting groove is located at the end that is of the coil and that faces the boss, and is closer to the magnetic attractive component.

In an optional implementation, the third drive mechanism includes two first magnetic conductive sheets, and the end that is of the coil and that faces the boss is located between the two first magnetic conductive sheets. In this way, an attraction force between all the first magnetic conductive sheets and the magnetic attractive component can be increased by increasing a quantity of first magnetic conductive sheets, thereby helping achieve aperture self-locking after the coil is powered off.

In an optional implementation, the side wall of the boss includes a first semi-ring side wall and a second semi-ring side wall that are connected. In addition, the variable aperture further includes a second magnetic conductive sheet and a first rolling part. The second magnetic conductive sheet is disposed on the first semi-ring side wall, and the second magnetic conductive sheet is used for attraction with the magnet component. A vertical projection of the first opening on the first semi-ring side wall overlaps a vertical projection of the first magnetic conductive sheet on the first semi-ring side wall. The first rolling part is disposed between the rotating carrier and the bottom plate, the first rolling part is located on a side on which the second semi-ring side wall is located, the rotating carrier and the fastening base are in contact with the first rolling part, and the rotating carrier is rotatably connected to the fastening base through the first rolling part.

In this way, because the second magnetic conductive sheet is disposed on the first semi-ring side wall, when the second magnetic conductive sheet and the magnet component attract each other, the rotating carrier moves toward a position of the second semi-ring side wall of the fastening base. Because the first rolling part is located on the side on which the second semi-ring side wall is located, the rotating carrier and the fastening base may be in contact with the first rolling part, that is, the first rolling part is in a state of zero fitting with both the rotating carrier and the fastening base. In this case, when the rotating carrier is rotatably connected to the fastening base through the first rolling part, because the rotating carrier and the fastening base may be in contact with the first rolling part, the rotating carrier may always lean on the first rolling part in a rotation process, and rotate relative to the fastening base, thereby improving stability of the rotating carrier in the rotation process and consistency of the rotating carrier rotating to various angles, and improving product reliability.

In an optional implementation, the first rolling part may include one ball or one roller. Alternatively, the first rolling part may include a plurality of balls or a plurality of balls. For example, the first rolling part includes a plurality of balls. The plurality of balls may be arranged in the thickness direction of the variable aperture.

In an optional implementation, the variable aperture further includes a second rolling part, the second rolling part may be disposed between the rotating carrier and the bottom plate, and the second rolling part is located on a side on which the first semi-ring side wall is located. There is an adjustment gap H1 between the second rolling part and the rotating carrier, and 30 µm≤H1≤70 µm. It can be learned from the foregoing that, when the second magnetic conductive sheet and the magnet component attract each other, the rotating carrier moves toward the position of the second semi-ring side wall of the fastening base. In this case, there may be the adjustment gap H1 between the second rolling part located on the side on which the first semi-ring side wall is located and the rotating carrier. In this way, in a process of performing a reliability test (such as a rolling test or a drop test) on the variable aperture and a use process of the user, when the rotating carrier has relatively large displacement in a horizontal plane (perpendicular to the optical axis of the variable aperture), a side that is of the rotating carrier and that is close to the second rolling part may be in contact with the second rolling part, so that the second rolling part limits further displacement of the rotating carrier, thereby reducing a displacement amount of the rotating carrier. This avoids a phenomenon that the plurality of blades slidably connected to the rotating carrier are damaged because the blades are pulled when the rotating carrier has relatively large displacement.

In an optional implementation, the second rolling part may include one ball or one roller. Alternatively, the second rolling part may include a plurality of balls or a plurality of balls. For example, the second rolling part includes a plurality of balls. The plurality of balls may be arranged in the thickness direction of the variable aperture.

In an optional implementation, the variable aperture includes two drive components, two first rolling parts, and two second rolling parts. The two drive components are respectively a first drive component and a second drive component, the first drive component is disposed on the side on which the first semi-ring side wall is located, and the second drive component is disposed on the side on which the second semi-ring side wall is located. The first drive component is located between the two second rolling parts. The second drive component is located between the two first rolling parts. In this way, the first drive component is disposed on the side on which the first semi-ring side wall of the boss is located, and the second drive component is disposed on the side on which the second semi-ring side wall is located, so that the rotating carrier can be evenly subject to a force in a rotation process. In addition, the second drive component is disposed between the two first rolling parts, and a quantity of first rolling parts is increased, so that the rotating carrier can be in contact with the first rolling parts on both sides of the first drive component, thereby helping further improve consistency, stability, and reliability of movement. In addition, the first drive component is disposed between the two second rolling parts, and a quantity of the second rolling parts is increased, so that displacement of the rotating carrier can be further limited in a process of performing a reliability test (such as a rolling test or a drop test) on the variable aperture and a use process of the user, thereby effectively reducing a displacement amount of the rotating carrier.

In an optional implementation, the rotating carrier includes a second plastic part and a second metal support. The second metal support is embedded in the second plastic part, and the second metal support and the second plastic part are connected to form a second integrated mechanical part. In this way, the second integrated mechanical part may be formed by using an insert molding process. Because the rotating carrier has the second metal support, a mechanical strength of the rotating carrier can be increased, and in a process of performing a reliability test (such as a rolling test or a drop test) on the variable aperture and a use process of the user, when a collision occurs on the rotating carrier, a probability that the rotating carrier is damaged can be reduced, thereby prolonging a service life of a product. In addition, the magnet component and the second metal support are connected to each other and attract each other. In this way, for example, gel may be dispensed on a side that is of the second metal support and that faces the magnet component, so that the magnet component is connected to the second metal support. On this basis, because the second metal support can be attracted by the magnet component, reliability of a connection between the component and the second metal support in this case is improved. In addition, separate disposing of a magnetic conductive sheet for connecting the rotating carrier and the magnet component may be avoided, thereby simplifying a manufacturing process.

In an optional implementation, the variable aperture further includes a cover plate, the cover plate is disposed on a side that is of the plurality of blades and that is away from the rotating carrier, and the cover plate covers the fastening base. The cover plate includes a third plastic part, a third metal support, and a first soma. The third metal support is embedded in the third plastic part, and the third metal support and the third plastic part are connected to form a third integrated mechanical part. Similarly, the third integrated mechanical part may be formed by using an insert molding process. Because the cover plate has the third metal support, a mechanical strength of the cover plate can be increased, and in a process of performing a reliability test (such as a rolling test or a drop test) on the variable aperture and a use process of a user, when a collision occurs on the cover plate, a probability that the cover plate is damaged can be reduced, thereby prolonging a service life of a product. In addition, the third metal support is connected to the first metal support. For example, the third metal support in the cover plate may be connected to the first metal support in the fastening base through welding, so that reliability of a connection between the cover plate and the fastening base can be improved, and a probability that the cover plate falls off can be reduced. In some embodiments of this application, a plurality of welding positions may be provided on the cover plate, and the plurality of welding positions may be provided around the aperture hole, so that the connection between the cover plate and the fastening base can be stable. In addition, the first soma is stacked on a side that is of the third integrated mechanical part and that is away from the blade, and the first soma may block a part of a structure of the blade below the cover plate, so that a side surface that is of the first soma and that is away from the third integrated structure is used as a user-visible appearance surface, thereby achieving an effect of decoration and improving appearance quality, and increasing a control area of a product appearance to a maximum extent.

In addition, the third metal support in the cover plate is located in the third plastic part, and the cover plate is disposed on a side that is of the plurality of blades and that is away from the rotating carrier. In this way, in a rotation process of the blade, a component that is directly in contact with the blade and rubs the blade is the third plastic part in the cover plate. Compared with a surface of a metal material, a surface of the third plastic part may have a relatively small friction coefficient, so that a friction force between the blade and the third plastic part can be reduced, thereby further reducing a blade wear probability.

In an optional implementation, the third metal support is electrically connected to the first metal support, and the third metal support is grounded through the first metal support. It can be learned from the foregoing that both the cover plate and the fastening base may be prepared by using an insert molding process. In addition, in this case, the third metal support is electrically connected to the first metal support, so that the third metal support can be grounded through the first metal support. In this way, a manufacturing process for grounding of the cover plate may be simplified. In a related technology, a cover plate mainly including a steel plate needs to be electrically connected to a lead-out part of an FPC in a gel dispensing manner for grounding, and then a gel dispensing position is covered with a gel protection adhesive. Compared with the related technology, in this application, only the third metal support in the cover plate needs to be electrically connected to the first metal support in the fastening base, for example, through welding or gel dispensing, so that the lead-out part of the FPC and structures such as a gel dispensing layer and the gel protection adhesive for electrically connecting the lead-out part of the FPC and the cover plate do not need to be additionally disposed, thereby simplifying a structure and reducing a manufacturing process.

In an optional implementation, the cover plate has a second light transmitting hole, and the second light transmitting hole is in communication with the aperture hole. The third metal support has a plurality of hollow portions that penetrate the third metal support, and the hollow portions are disposed on a periphery of the second light transmitting hole. In this way, the second light transmitting hole is in communication with the aperture hole, and the second light transmitting hole may be used to enable external light to enter the aperture hole through the second light transmitting hole. In addition, the plurality of hollow portions are disposed on the third metal support, so that a weight of the entire third metal support can be reduced, thereby reducing the weight of the variable aperture.

In an optional implementation, the variable aperture further includes a second soma, and the second soma is stacked on a side that is of the plurality of blades and that faces the fastening base. The second soma is provided with a third light transmitting hole, and the third light transmitting hole is in communication with the aperture hole. The third light transmitting hole is in communication with the aperture hole, and the third light transmitting hole may be used to enable external light to enter the aperture hole through the third light transmitting hole.

In an optional implementation, a same material is used for the second soma, the first soma, and the blade. A specular reflectance G and an optical density value OD of the material, and an L value, an a value, and a b value in a color triplet of the material are respectively as follows: G≤0.3%; OD≥5.0; L≤8; |a|≤1; and |b|≤1. In this way, materials of the second soma, the first soma, and the blade may all be a super-black material, so that in a moving process of the blade, colors and glosses of parts of the first soma, the second soma, and the blade that can be seen by the user are consistent, thereby reducing a probability of a color difference between the three components and improving appearance quality.

In an optional implementation, a modulus of the material of the second soma, the first soma, and the blade is greater than or equal to 3000 MPa, a yield strength is greater than or equal to 80 MPa, and an elongation at break is greater than or equal to 10%. In this way, in a reliability test process, two or five rounds of drop tests can be passed, and 500 roller tests can be passed. If the roller test is performed more than 1000 times, there is a specific risk. In addition, a service life can reach 250,000 times.

In an optional implementation, a part that is of the fastening base and that is disposed around a periphery of the rotating carrier protrudes from a surface that is of the cover plate and that is away from the blade. In this way, the part that is of the fastening base and that is around the periphery of the rotating carrier, for example, the side plate, may be in contact with a lens covering the camera module or another decorative component on a rear housing, so that in a product test process or a use process of the user, a probability of deformation that occurs due to direct contact between the cover plate and the lens or the another apparatus component can be reduced, and a service life and reliability of a product can be improved.

In an optional implementation, in a same drive component, a vertical projection of the magnet component on the rotating carrier overlaps a vertical projection of the coil on the rotating carrier, so that in the same drive component, positions of the magnet component and the coil are corresponding. In this way, a magnetic field can be more easily generated between the energized coil and the magnet component.

In an optional implementation, the fastening base further includes a bonding structure, and the bonding structure is disposed on a surface that is of the bottom plate and that is away from the side plate. Both the bonding structure and the surface that is of the bottom plate and that is away from the side plate may be connected to a lens assembly located below the variable aperture. In this way, a connection surface between the variable aperture and the lens assembly may be an uneven surface, to improve bonding stability.

In an optional implementation, a vertical projection of the bonding structure on the bottom plate is in a shape of a sector, the sector has a first arc-shaped edge and a second arc-shaped edge, and an arc length of the first arc-shaped edge is greater than an arc length of the second arc-shaped edge. The first arc-shaped edge is provided farther away from the boss than the second arc-shaped edge. In this way, the bonding structure may be a dovetail structure, and a bonding groove in which the lens assembly fits the bonding structure may be a dovetail groove that matches the dovetail structure. In this case, when the camera module works, the variable aperture is in a horizontal plane (a surface perpendicular to the optical axis of the variable aperture), and cutting in the horizontal plane can be prevented in both an X direction and a Y direction. In addition, in a rotation direction of the blade in the variable aperture, a contact area between a side wall of the dovetail structure and the dovetail groove is relatively large, and the variable aperture may be effectively limited, to limit a position of the variable aperture.

In an optional implementation, a protrusion is disposed on a side that is of the variable aperture and that is close to the lens assembly, a groove is provided on the lens assembly, and the protrusion matches the groove.

In an optional implementation, a cross section of the groove is in a dovetail groove shape.

According to another aspect of this application, an electronic device is provided. The electronic device includes a rear housing and the camera module described above, and the camera module is disposed on the rear housing. The electronic device has a same technical effect as the variable aperture in the camera module provided in the foregoing embodiment, and details are not described herein again.

In an optional implementation, the electronic device further includes a processor. The camera module includes a module circuit board, and the module circuit board is electrically connected to the processor through a third FPC.

In an optional implementation, a first drive chip is disposed on the module circuit board, both the first drive mechanism and the second drive mechanism are electrically connected to the first drive chip, the first drive chip is electrically connected to the processor, and the first drive chip is configured to control the first drive mechanism and the second drive mechanism.

In an optional implementation, the electronic device further includes a position sensor, the position sensor is electrically connected to the first drive chip, the position sensor is configured to detect a position of the second support relative to the base, and the first drive chip is configured to control the second drive mechanism based on position information detected by the position sensor.

In an optional implementation, the position sensor includes a Hall sensor and a gyroscope.

In an optional implementation, the variable aperture includes a second drive chip, the second drive chip is electrically connected to the processor, the second drive chip is electrically connected to a third drive mechanism, and the second drive chip is configured to control the third drive mechanism.

In an optional implementation, a Hall sensor is integrated into the second drive chip.

### BRIEF DESCRIPTION OF DRAWINGS

FIG. 1 is a diagram of a disassembled structure of an electronic device according to an embodiment of this application;
FIG. 2 is a diagram of a structure of the camera module in FIG. 1;
FIG. 3 is an exploded view of a structure of the camera module in FIG. 2;
FIG. 4 is a diagram of a structure of a camera drive motor according to an embodiment of this application;
FIG. 5 is a diagram of a structure of a camera drive motor from which a housing is removed according to an embodiment of this application;
FIG. 6 is an exploded view of a structure of a camera drive motor according to an embodiment of this application;
FIG. 7 is an exploded view of a structure that is of a camera drive motor and that is used to display a first drive mechanism according to an embodiment of this application;
FIG. 8a is an exploded view of a structure that is of a camera drive motor and that is used to display a second drive mechanism according to an embodiment of this application;
FIG. 8b is a diagram of a structure that is of a camera drive motor and that is used to display a second drive mechanism according to an embodiment of this application;
FIG. 8c is a diagram of a structure that is of a camera drive motor and that is used to display a second drive mechanism according to an embodiment of this application;
FIG. 9 is a diagram of a structure that is of a camera drive motor and that is used to display a second drive mechanism according to an embodiment of this application;
FIG. 10 is an exploded view of a structure that is of a camera drive motor and that is used to display a plurality of balls according to an embodiment of this application;
FIG. 11 is a diagram of a structure that is of a camera drive motor and that is used to display a plurality of groups of balls according to an embodiment of this application;
FIG. 12 is an exploded view of a structure that is of a camera drive motor and that is used to display a second magnetic component according to an embodiment of this application;
FIG. 13 is a diagram of a structure that is of a camera drive motor and that is used to display a disposing manner of a second magnetic component according to an embodiment of this application;
FIG. 14 is a diagram of a structure that is of a camera drive motor and that is used to display a disposing manner of a plurality of groups of balls and a plurality of groups of second magnetic components according to an embodiment of this application;
FIG. 15 is a diagram of a structure that is of a camera drive motor and that is used to display a disposing manner of a spring arm according to an embodiment of this application;
FIG. 16 is a diagram of a structure that is of a camera drive motor and that is used to display a disposing manner of a spring arm according to an embodiment of this application;
FIG. 17 is a diagram of a structure that is of a camera drive motor and that is used to display a spring arm according to an embodiment of this application;
FIG. 18 is a diagram of a structure that is of a camera drive motor and that is used to display a disposing manner of a spring arm according to an embodiment of this application;
FIG. 19 is a diagram of a structure of a camera drive motor according to an embodiment of this application;
FIG. 20 is a diagram of a structure of a camera drive motor according to an embodiment of this application;
FIG. 21 is a diagram of a structure that is of a camera drive motor and that is used to display a second support and movement of a lens according to an embodiment of this application;
FIG. 22 is a diagram of a structure that is of a camera drive motor and that is used to display a disposing manner of an elastic member according to an embodiment of this application;
FIG. 23 is an exploded view of a structure that is of a camera drive motor and that is used to display a disposing manner of an elastic member according to an embodiment of this application;
FIG. 24 is a diagram of a structure that is of a camera drive motor and that is used to display an elastic member according to an embodiment of this application;
FIG. 25 is a diagram of a structure that is of a camera drive motor and that is used to display a disposing manner of a sliding rod according to an embodiment of this application;
FIG. 26 is a diagram of a structure that is of a camera drive motor and that is used to display a disposing manner of a sliding rod according to an embodiment of this application;
FIG. 27 is an exploded view of a structure that is of a camera drive motor and that is used to display a disposing manner of a sliding rod according to an embodiment of this application;
FIG. 28 is a diagram of a circuit structure that is of a camera drive motor and that is used to display a position sensor according to an embodiment of this application;
FIG. 29 is a diagram of a structure that is of a camera drive motor and that is used to display a disposing manner of a spring arm according to an embodiment of this application;
FIG. 30 is a diagram of a structure that is of a camera drive motor and that is used to display a spring arm according to an embodiment of this application;
FIG. 31 is a diagram of a structure that is of a camera drive motor and that is used to display a second support according to an embodiment of this application;
FIG. 32 is an exploded view of a structure that is of a camera drive motor and that is used to display a second support according to an embodiment of this application;
FIG. 33 is a diagram of a structure that is of a camera drive motor and that is used to display an electrical connection structure according to an embodiment of this application;
FIG. 34 is a diagram of a structure that is of a camera drive motor and that is used to display an electrical connection structure according to an embodiment of this application;
FIG. 35 is a diagram of a structure that is of a camera drive motor and that is used to display an electrical connection structure according to an embodiment of this application;
FIG. 36 is a diagram of a structure that is of a camera drive motor and that is used to display an electrical connection structure according to an embodiment of this application;
FIG. 37 is a diagram of a structure that is of a camera drive motor and that is used to display an electrical connection structure according to an embodiment of this application;
FIG. 38 is a diagram of a structure that is of a variable aperture and that is used to display an electrical connection structure according to an embodiment of this application;
FIG. 39 is a diagram of a structure of a module circuit board according to an embodiment of this application;
FIG. 40 is a diagram of a structure of an internal support of a camera drive motor according to an embodiment of this application;
FIG. 41 is a diagram of a disassembled structure of an internal support of a camera drive motor according to an embodiment of this application;
FIG. 42 is a diagram of a structure of the variable aperture in FIG. 3;
FIG. 43 is an exploded view of a structure of the variable aperture in FIG. 4;
FIG. 44 is a diagram of a partial structure of a variable aperture according to an embodiment of this application;
FIG. 45 is a diagram of a structure of the rotating carrier mounted on the fastening base in FIG. 44;
FIG. 46 is a diagram of another partial structure of a variable aperture according to an embodiment of this application;
FIG. 47 is a diagram of a structure of the blade mounted on the fastening base and the rotating carrier in FIG. 46;
FIG. 48 is a sectional view obtained through cutting along the dashed line O3-O4 in FIG. 47;
FIG. 49 is a diagram of a structure of a magnet component according to an embodiment of this application;
FIG. 50 is a diagram of another structure of a magnet component according to an embodiment of this application;
FIG. 51 is a top view obtained in the Z direction in FIG. 44;
FIG. 52 is another top view obtained in the Z direction in FIG. 44;
FIG. 53 is a diagram of another partial structure of a variable aperture according to an embodiment of this application;
FIG. 54 is a diagram of another partial structure of a variable aperture according to an embodiment of this application;
FIG. 55 is another top view obtained in the Z direction in FIG. 44;
FIG. 56 is a sectional view obtained through cutting along the dashed line 01-02 in FIG. 55;
FIG. 57 is a diagram of another partial structure of a variable aperture according to an embodiment of this application;
FIG. 58 is another sectional view obtained through cutting along the dashed line O1-O2 in FIG. 55;
FIG. 59 is another top view obtained in the Z direction in FIG. 44;
FIG. 60 is another exploded view of a structure of the variable aperture in FIG. 4;
FIG. 61 is a bottom view obtained in the Z direction in FIG. 60;
FIG. 62 is a top view obtained in the Z direction in FIG. 60;
FIG. 63 is a diagram of another partial structure of a variable aperture according to an embodiment of this application;
FIG. 64 is an exploded view of a structure of a fastening base according to an embodiment of this application;
FIG. 65 is a diagram of a structure of a fastening base according to an embodiment of this application;
FIG. 66 is a diagram of another structure of a fastening base according to an embodiment of this application;
FIG. 67 is a diagram of a partial structure of a fastening base according to an embodiment of this application;
FIG. 68 is a diagram of another partial structure of a variable aperture according to an embodiment of this application;
FIG. 69 is another exploded view of a structure of a fastening base according to an embodiment of this application;
FIG. 70 is a diagram of another structure of a fastening base according to an embodiment of this application;
FIG. 71 is another diagram of a partial structure of a fastening base according to an embodiment of this application;
FIG. 72 is a diagram of another structure of the variable aperture in FIG. 3;
FIG. 73 is an exploded view of a structure of a rotating carrier according to an embodiment of this application;
FIG. 74 is a diagram of a structure of a rotating carrier according to an embodiment of this application;
FIG. 75 is a bottom view obtained in the Z direction in FIG. 74;
FIG. 76 is another exploded view of a structure of a variable aperture according to an embodiment of this application;
FIG. 77 is an exploded view of a structure of a cover plate according to an embodiment of this application;
FIG. 78 is a diagram of a partial structure of the cover plate in FIG. 77;
FIG. 79 is a diagram of another partial structure of a variable aperture according to an embodiment of this application;
FIG. 80 is a diagram of a structure of a variable aperture according to a related technology;
FIG. 81 is a diagram of another structure of the variable aperture in FIG. 3;
FIG. 82 is a diagram of another structure of the variable aperture in FIG. 3;
FIG. 83 is a diagram of a connection between a variable aperture and a lens assembly according to an embodiment of this application;
FIG. 84 is a block diagram of an electrical connection structure of a display module according to an embodiment of this application;
FIG. 85 is a block diagram of a structure of an electronic device according to an embodiment of this application; and
FIG. 86 is a diagram of a first application scenario of an electronic device according to an embodiment of this application.

Reference numerals:
1-electronic device; 2-display; 4-middle frame; 3-rear housing; 5-processor; 6-hole; 7-lens cover; 8-camera hole; 10-camera module; 11-position sensor; 20-variable aperture; 40-lens assembly; 4001-first side surface; 4002-second side surface; 41-motor; 413-base; 415-first support; 414-second support; 418-first drive mechanism; 421-second drive mechanism; 4212-SMA wire; 801-filter; 802-image sensor; 80-circuit board; 21-fastening base; 22-rotating carrier; 23-blade; 24-third drive mechanism; 241-magnet component; 242-coil; 25-cover plate; 26-second soma; 100-aperture hole; 101-first light transmitting hole; 103-third light transmitting hole; 28-second drive chip; 121-first limiting column; 122-second limiting column; 211-bottom plate; 212-boss; 213-side plate; 130-first opening; 110-first mounting groove; 221-annular portion; 222-convex lug; 123-coil mounting hole; 1210-rotating connection hole; 1220-sliding guide groove; 2410-magnet; 27-second FPC; 2101-first plastic part; 2102-first metal support; 214-first metal portion; 215-second metal portion; 2151-metal plate; 2152-metal rod; 2153-welding portion; 2100-first integrated mechanical part; 140-first hollow zone; 124-coil mounting groove; 2103-metal ground trace; 2104-metal signal trace; 2105-metal ground terminal; 2106-metal signal terminal; 243-first magnetic conductive sheet; 111-second mounting groove; 2121-first semi-ring side wall; 2122-second semi-ring side wall; 29-second magnetic conductive sheet; 31-first rolling part; 310-first rolling groove; 32-second rolling part; 320-second rolling groove; 2401-first drive component; 2402-second drive component; 2201-second plastic part; 2202-second metal support; 2200-second integrated mechanical part; 2501-third plastic part; 2502-third metal support; 2503-first soma; 102-second light transmitting hole; 2500-third integrated mechanical part; 25011-hollow portion; 34-anti-collision structure; 35-bonding structure; 351-first arc-shaped edge; 352-second arc-shaped edge; 36-bonding groove; 424-ball; 426-second magnetic component; 4181-magnet; 4182-coil; 4211-stationary clamping jaw; 4213-movable clamping jaw; 50-elastic member; 501-first support lug; 502-second support lug; 503-elastic section; 53-sliding rod; 531-sliding slot; 54-first magnetic component; 58-second spring arm; 61-first FPC; 621-first conductive lead; 427-first spring arm; 63-second conductive lead; 66-ground lead; 622-third conductive lead; and 803-first drive chip.

### DESCRIPTION OF EMBODIMENTS

To make the objectives, technical solutions, and advantages of this application clearer, the following further describes this application in detail with reference to the accompanying drawings.

The following terms "first", "second", and the like are merely used for description, but should not be understood as indicating or implying relative importance or implying a quantity of indicated technical features. Therefore, a feature limited by "first", "second", or the like may explicitly or implicitly include one or more features. In the descriptions of this application, unless otherwise stated, "a plurality of" means two or more.

In addition, in this application, position terms such as "top" and "bottom" are defined relative to positions of components in the accompanying drawings. It should be understood that these position terms are relative concepts used for relative description and clarification, and may correspondingly change based on changes in the positions of the components in the accompanying drawings.

An embodiment of this application provides an electronic device. The electronic device may have a display function. The electronic device may be applied to various communication systems or communication protocols, for example, a Bluetooth (Bluetooth, BT) communication technology, a global positioning system (global positioning system, GPS) communication technology, a global system for mobile communications (global system for mobile communications, GSM) communication technology, a wireless fidelity (wireless fidelity, Wi-Fi) communication technology, a wideband code division multiple access (wideband code division multiple access wireless, WCDMA) communication technology, long term evolution (long term evolution, LTE), a 5G communication technology, and another future communication technology. The electronic device in embodiments of this application may be a mobile phone (mobile phone), a tablet computer (pad), a notebook computer, a smart home, a smart wearable device (for example, a smartwatch, a smart band, smart glasses, or a smart helmet), a virtual reality (virtual reality, VR) electronic device, an augmented reality (augmented reality, AR) electronic device, or the like. Alternatively, the electronic device may be a handheld device that has a wireless communication function, a computing device or another processing device connected to a wireless modem, a vehicle-mounted device, an electronic device in a 5G network, an electronic device in a future evolved public land mobile network (public land mobile network, PLMN), or the like. This is not limited in embodiments of this application.

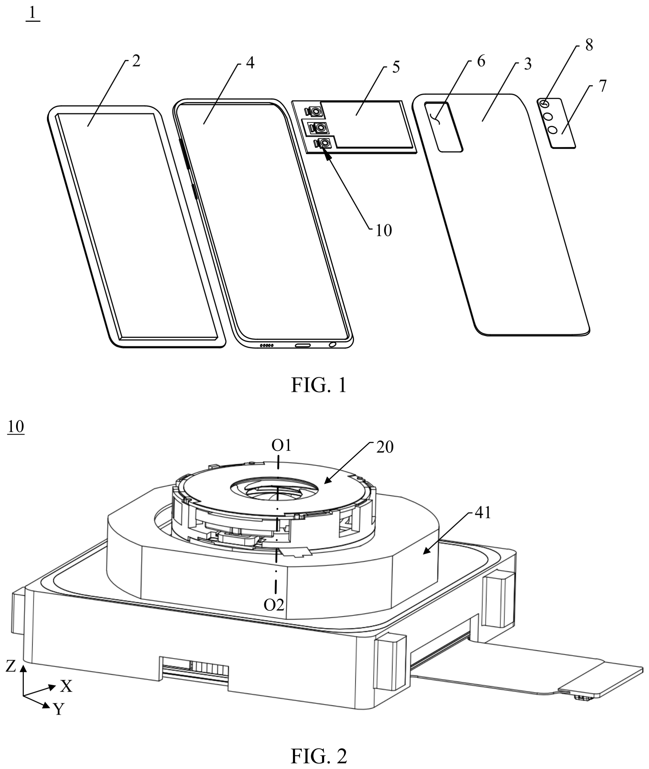

As shown in FIG. 1, an electronic device 1 includes a display 2, a rear housing 3 located on a rear surface (which is disposed opposite to a display surface of the display 2) of the display 2, and a middle frame 4 located between the display 2 and the rear housing 3. The middle frame 4 can support the display 2.

In a possible embodiment of this application, the display 2 is an organic light-emitting diode (organic light-emitting diode, OLED) display. Because an electroluminescent layer is disposed in each light-emitting subpixel of the OLED display, the OLED display can implement self-luminescence after receiving an operating voltage.

The middle frame 4 is located between the display 2 and the rear housing 3. A surface that is of the middle frame 4 and that is away from the display 2 is used to mount internal elements, for example, a battery, a printed circuit board (printed circuit board, PCB), a camera (camera), an antenna, and a processor 5. After the rear housing 3 and the middle frame 4 are snapped, the internal elements are located between the rear housing 3 and the middle frame 4. The processor 5 may provide display data for the display 2, to drive the display 2 to display an image.

In some embodiments, to enable the electronic device 1 to implement a photographing function, the electronic device 1 provided in embodiments of this application may further include a camera module 10. The camera module 10 may be a front-facing camera module or a rear-facing camera module. The front-facing camera module may be disposed on the rear surface of the display 2 shown in FIG. 1, and a photosensitive surface of the front-facing camera module is located on a display surface side of the display 2. The rear-facing camera module may be disposed on a side that is of the middle frame 4 and that is away from the display 2, that is, located in mounting space formed between the middle frame 4 and the rear housing 3. A photosensitive surface of the rear-facing camera module is located on a rear surface of the electronic device 1.

For example, the front-facing camera module or the rear-facing camera module may include a plurality of camera modules 10 shown in FIG. 1. The rear-facing camera module is used as an example. A hole 6 used to expose some camera modules 10 is provided on the rear housing 3. In addition, the electronic device 1 further includes a lens cover 7, which is snapped onto the camera module 10 to protect the camera module 10. The lens cover 7 has a camera hole 8 used to expose a lens of the camera module 10.

The camera module 10 may be one or more of a standard camera module, a long-focus camera module, a wide-angle camera module, an ultra-long-focus camera module, and an ultra-wide-angle camera module. A quantity of camera modules 10 is not limited in this application. FIG. 1 is described by using an example in which the rear-facing camera module includes three camera modules 10.

An electrical connection relationship of the camera module is not limited in embodiments of this application. In some embodiments, the camera module includes a module circuit board, the circuit board is disposed on a surface that is of the middle frame 4 and that faces the rear housing 3, and the module circuit board is electrically connected to the circuit board.

It should be noted that a specific structure of the electronic device 1 is not limited in this application, provided that the electronic device 1 has a camera module.

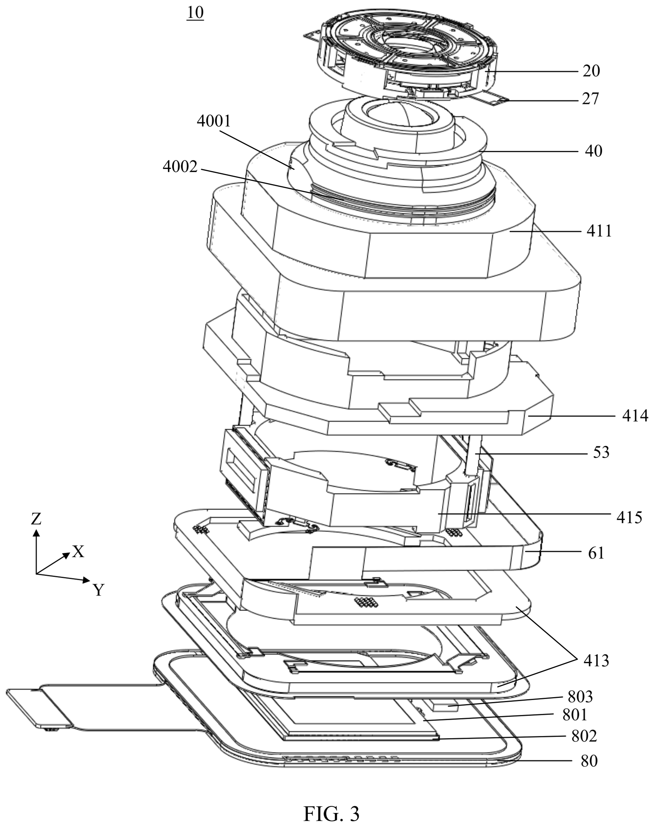

Refer to FIG. 2 and FIG. 3. FIG. 2 is an assembly diagram of the camera module 10 according to an embodiment of this application, and FIG. 3 is an exploded view of the camera module 10 according to an embodiment of this application.

The camera module 10 includes a base 413, a first support 415, a second support 414, a lens assembly 40, and a variable aperture 20.

Both the first support 415 and the second support 414 are disposed on the base 413. The second support 414 is connected to the base 413 through an SMA wire. The first support 415 is of an annular structure, and forms a hollow cavity. The lens assembly 40 is disposed in the cavity and fastened to the first support 415. An optical axis of the lens assembly 40 is parallel to a central axis of the cavity. The variable aperture 20 is disposed on a side that is of the lens assembly 40 and that is away from the base 413. The second support 414 is sleeved on an outer side of the first support 415.

For ease of description, XYZ coordinate axes are established in the accompanying drawings. A Z direction may be a direction of an optical axis O1-O2 of the lens assembly 40, that is, a thickness direction of the camera module 10. An XY plane including an X direction and a Y direction may be perpendicular to the direction of the optical axis O1-O2 of the lens assembly 40.

The direction of the optical axis O1-O2 may be a direction in which an optical system of the lens assembly 40 transmits light. For example, for the symmetric lens assembly 40, the optical axis O1-O2 may overlap a rotation center line of the optical system of the lens assembly 40. The optical axis O1-O2 of the lens assembly 40 may be used as an optical axis of the camera module 10, and an optical axis of the variable aperture 20 may overlap the optical axis of the camera module 10.

The lens assembly 40 includes a lens barrel and an optical lens group mounted in the lens barrel. The optical lens group is configured to: transmit scene light, and image a photographed scene. Through designing of structural composition of the optical lens group and a shape and size of an optical lens, lenses having different features such as a wide angle and a long focus may be obtained. Through replacement of different lenses, camera modules having different features such as a wide angle and a long focus may be assembled.

The variable aperture 20 includes a drive apparatus and a plurality of blades. The drive apparatus is configured to drive the plurality of blades, to adjust a size of a light inlet hole enclosed by the plurality of blades, and further adjust an amount of incident light.

As shown in FIG. 2, the camera module further includes a camera drive motor 41. The camera drive motor 41 may be configured to drive the first support 415 and the lens assembly 40 to move along the optical axis O1-O2 of the lens assembly, to implement automatic focusing of the lens, or may be configured to drive the first support 415, the second support 414, and the lens assembly 40 to move in the XY plane or rotate around the optical axis O1-O2 of the lens assembly 40, to implement image stabilization compensation for the camera module when the electronic device jitters in any direction. Alternatively, not only automatic focusing of the lens can be implemented, but also image stabilization compensation can be implemented.

To enable the camera module 10 to perform optical-to-electrical conversion on light incident to the camera module 10 to generate image information, as shown in FIG. 3, the camera module 10 may further include a filter 801, an image sensor 802, and a circuit board 80. The image sensor 802 is disposed on the circuit board 80, and the image sensor 802 is electrically connected to the circuit board 80.

For example, the image sensor 802 may be a charge coupled device (charge coupled device, CCD), or may be a complementary metal-oxide-semiconductor (complementary metal-oxide-semiconductor, CMOS) device. The image sensor 802 is disposed at a position of a focal plane of the camera module 10, so that a light image of the photographed object converged by the lens assembly 40 can be received. The image sensor 802 may include a plurality of photosensitive units, and each photosensitive unit converts a received amount of light into an electrical signal that is in a corresponding proportion to the amount of light.

In addition, to improve effective resolution and color reproduction of the image sensor 802, the filter 801 may be disposed on a light inlet side of the image sensor 802. For example, the filter 801 may be an infrared filter, and the infrared filter may filter out infrared light in ambient light and transmit visible light. Alternatively, for another example, the filter 801 may be a dual-band-pass filter, and can select bands in two regions of ambient light to pass through, for example, visible light and infrared light, visible light and ultraviolet light, or ultraviolet light and infrared light.

To describe orientations between mechanical parts more clearly below, in this application, a light propagation direction in the camera module is drawn in some of the following example structural diagrams. Light entering the variable aperture 20 is incident light, and light emitted from the lens 40 and entering the filter 801 is emergent light. For example, in FIG. 3, black dashed lines with arrows show propagation directions of light, and show incident light and emergent light.

Refer to FIG. 3. In some embodiments, the lens assembly 40 includes a first side surface 4001 and a second side surface 4002, and a radian of the first side surface 4001 is less than a radian of the second side surface 4002. Therefore, the circular lens assembly may be cut to form the first side surface, and the lens assembly obtained through cutting occupies smaller space, thereby helping implement miniaturization of the camera module.

For example, the first side surface 4001 is a plane, and the second side surface 4002 is an arc-shaped surface. Therefore, the space occupied by the lens assembly can be further reduced.

In an optional implementation, a shape of the first support 415 fits a shape of the lens assembly 40. Therefore, space occupied by the first support can be reduced, and miniaturization of the camera module can be further implemented.

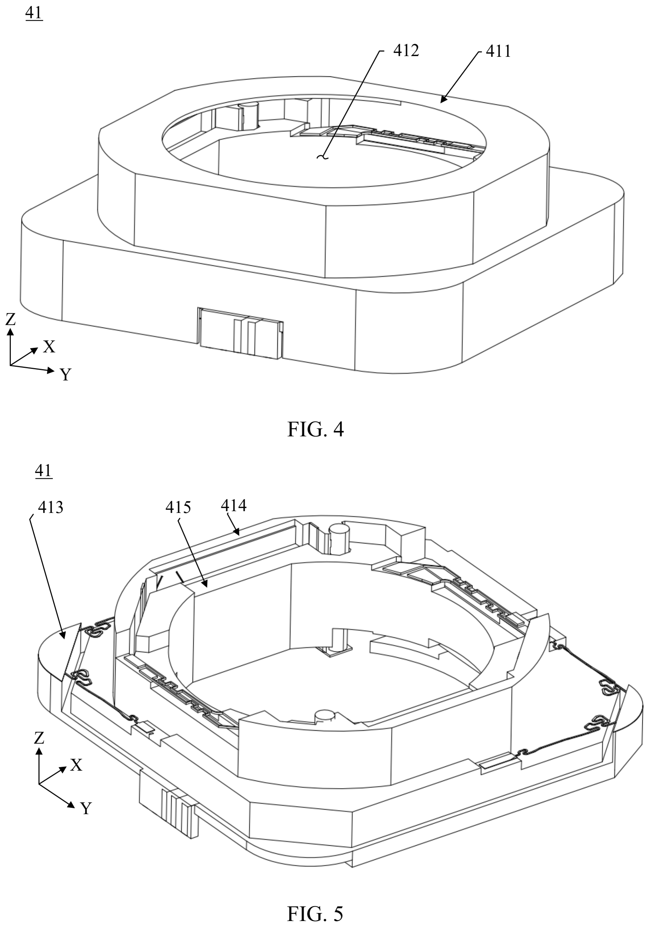

Refer to FIG. 4. FIG. 4 is a diagram of a structure of a camera drive motor according to an embodiment of this application. In this embodiment, the camera drive motor 41 includes a housing 411, and the housing 411 is configured to protect an internal structure of the camera drive motor from water and dust. When the electronic device is assembled, the camera drive motor is fastened in the electronic device through the housing.

An assembly cavity 412 is provided in the housing 411, and an opening communicating with the assembly cavity 412 is provided on the housing 411. A shape of the opening includes but is not limited to a circle, a square, an ellipse, and a polygon.

The assembly cavity 412 is configured to accommodate the lens assembly 40 and at least a part of the variable aperture 20. A specific avoidance gap is maintained between a periphery of a housing edge at the opening and both the lens assembly 40 and the variable aperture 20, to avoid the lens assembly 40 when the lens assembly tilts in any direction around.

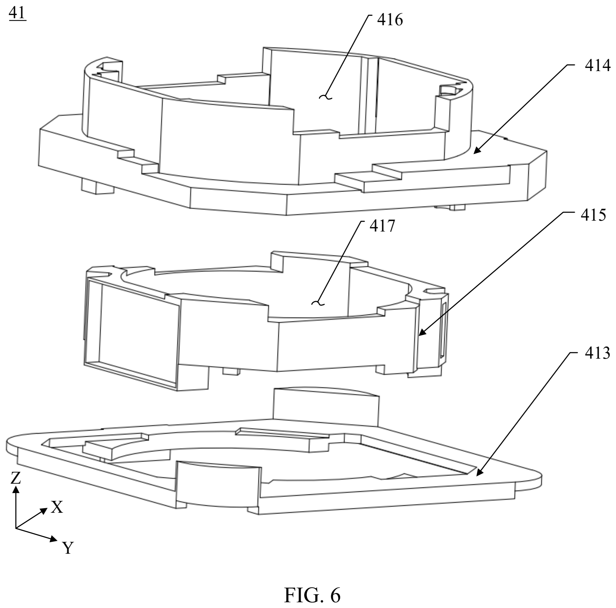

FIG. 5 is a diagram of a structure of the camera drive motor 41 from which the housing 411 is removed according to an embodiment of this application. FIG. 6 is an exploded view of FIG. 5. FIG. 6 shows partial decomposition but not complete decomposition of the camera drive motor.

In this embodiment, as shown in FIG. 5, the camera drive motor 41 further includes a base 413, a second support 414, and a first support 415. The base 413, the second support 414, and the first support 415 may be disposed in the housing 411 of the camera drive motor. The second support 414 is disposed on the base 413.

As shown in FIG. 6, an accommodating cavity 416 is formed in the second support 414, the first support 415 is disposed in the accommodating cavity 416, the first support 415 has a lens mounting hole 417, and the lens mounting hole 417 is used to assemble the lens assembly 40.

In addition to the base 413, the second support 414, and the first support 415, the camera drive motor 41 may further include a first drive mechanism 418. The first drive mechanism 418 may be located between the second support 414 and the first support 415, the first drive mechanism 418 is connected to the second support 414 and the first support 415, and the first drive mechanism 418 is configured to drive the first support 415 to move relative to the second support 414 in an axial direction (Z direction) of the lens mounting hole, to drive the lens assembly 40 in the lens mounting hole 417 to move in an extension direction of the optical axis O1-O2, thereby forming an automatic focusing camera module.

It may be understood that, when the camera module provided in embodiments of this application performs automatic focusing, the second support 414 is a stationary member, the first support 415 is a movable member, and the lens assembly 40 is fixedly connected to the first support 415 that is the movable member. Under driving of the first drive mechanism 418, when the movable member moves relative to the stationary member in the Z direction, the lens assembly 40 may be simultaneously driven to move in the Z direction, to implement automatic focusing.

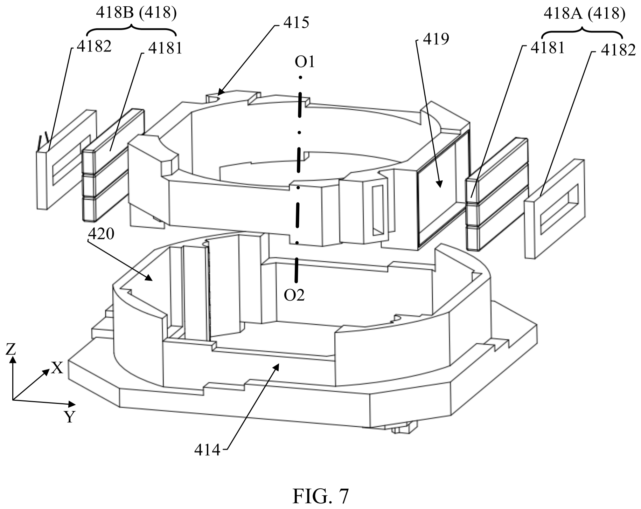

FIG. 7 shows an example of an implementable structure of the first drive mechanism 418. The first drive mechanism 418 includes a plurality of groups of focusing drive units, and the plurality of groups of focusing drive units are arranged at intervals in a circumferential direction of the first support 415. In some examples, the plurality of groups of focusing drive units may be symmetrically disposed with respect to the optical axis O1-O2 of the lens.

For example, in FIG. 7, two groups of focusing drive units are included, and the two groups of focusing drive units include: a focusing drive unit 418A and a focusing drive unit 418B. The focusing drive unit 418A and the focusing drive unit 418B are disposed opposite to each other, and the focusing drive unit 418A and the focusing drive unit 418B are symmetrically disposed with respect to the optical axis O1-O2 of the lens.

In an example of this application, each group of focusing drive units includes a magnet 4181 and a coil 4182. One of the magnet 4181 and the coil 4182 is disposed on the second support 414, and the other is disposed on the first support 415. For example, in FIG. 7, the magnet 4181 is disposed on the first support 415, and the coil 4182 is disposed on the second support 414.

The magnet 4181 is disposed on the first support 415 in a plurality of manners. For example, in the example in FIG. 7, a first mounting groove 419 is provided on a wall surface that is of the first support 415 and that faces the second support 414, and the magnet 4181 is disposed in the first mounting groove 419.

FIG. 7 shows an example of an arrangement manner of the coil 4182. A second mounting groove 420 is provided on a wall surface that is of the second support 414 and that faces the first support 415, and the coil 4182 is disposed in the second mounting groove 420.

In an example of this application, when the camera module performs automatic focusing, the first support 415 carrying the lens assembly moves up and down along the optical axis O1-O2 of the lens by using an ampere force generated by the magnet 4181 and the coil 4182, to implement automatic focusing.

In some optional structures, one focusing drive unit may include a plurality of magnets 4181, and each of the plurality of magnets 4181 may generate a magnetic field with the energized coil 4182, so that strength of the generated magnetic field can be increased. The plurality of magnets 4181 may be arranged in a Halbach array (Halbach array) structure shown in FIG. 7.

The camera drive motor in the example of this application not only includes the first drive mechanism for implementing automatic focusing, but also includes a second drive mechanism for implementing optical image stabilization.

In the example of this application, the second drive mechanism is connected to the base 413 and the second support 414, and the second drive mechanism drives the second support 414, the first support 415, and the lens assembly 40 to move along an XY plane perpendicular to the optical axis O1-O2 of the lens assembly, to implement image stabilization compensation.

The second support 414 in the example of this application is not only used as a stationary member for implementing an automatic focusing function, but also used as a movable member for implementing an optical image stabilization function. Compared with separately disposing a stationary member and a movable member for automatic focusing and a stationary member and a movable member for optical image stabilization, in this application, a quantity of mechanical parts can be reduced, a size of the entire camera drive motor can be reduced, and a miniaturization design of the camera drive motor can be implemented.

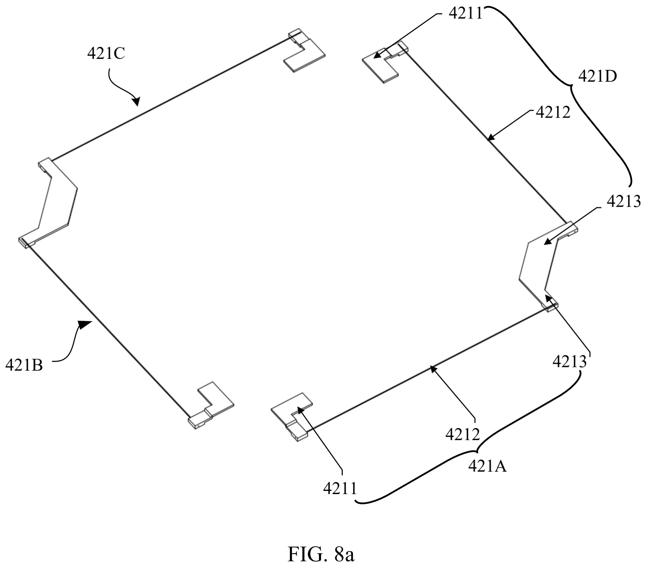

In some embodiments, FIG. 8a shows an example of an implementable structure of the second drive mechanism. The second drive mechanism may include a plurality of groups of image stabilization drive units, and the plurality of groups of image stabilization drive units may be arranged around the circumferential direction of the base.

For example, in FIG. 8a, the second drive mechanism includes four groups of image stabilization drive units: an image stabilization drive unit 421A, an image stabilization drive unit 421B, an image stabilization drive unit 421C, and an image stabilization drive unit 421D. The image stabilization drive unit 421A, the image stabilization drive unit 421B, the image stabilization drive unit 421C, and the image stabilization drive unit 421D are arranged in the circumferential direction of the base.

Still as shown in FIG. 8a, each group of image stabilization drive units includes a stationary clamping jaw 4211, a movable clamping jaw 4213, and a shape memory alloy (shape memory alloy, SMA) wire 4212 connected to the stationary clamping jaw 4211 and the movable clamping jaw 4213. One end of the SMA wire 4212 is connected to the movable clamping jaw 4213, and the other end is connected to the stationary clamping jaw 4211.

The second drive mechanism in the example of this application uses an SMA drive component, to form an SMA drive motor. The SMA drive component has features such as a large driving force and a small size. In this way, a size of the entire camera drive motor can be reduced.

In some implementable structures, as shown in FIG. 8a, each group of image stabilization drive units may include one movable clamping jaw 4213, one stationary clamping jaw 4211, and one SMA wire 4212, and one SMA wire 4212 is connected between one movable clamping jaw 4213 and one stationary clamping jaw 4211. The drive structure in the example of this application is a 4-wire SMA drive component. The 4-wire SMA drive component has a simple structure and occupies a small area.

Still as shown in FIG. 8a, movable clamping jaws 4213 of two adjacent groups of image stabilization drive units are disposed close to each other and connected. For example, the image stabilization drive unit 421A is adjacent to the image stabilization drive unit 421D, and the movable clamping jaw 4213 of the image stabilization drive unit 421A is connected to the movable clamping jaw 4213 of the image stabilization drive unit 421D. Alternatively, in some examples, the movable clamping jaw 4213 of the image stabilization drive unit 421A and the movable clamping jaw 4213 of the image stabilization drive unit 421D are an integrated mechanical part.

As shown in FIG. 8a, stationary clamping jaws 4211 of two adjacent groups of image stabilization drive units are disposed close to each other and separated. For example, the image stabilization drive unit 421A is adjacent to the image stabilization drive unit 421B, the stationary clamping jaw 4211 of the image stabilization drive unit 421A and the stationary clamping jaw 4211 of the image stabilization drive unit 421B are close to each other, and the two stationary clamping jaws 4211 are mechanical parts independent of each other.

In some examples, the stationary clamping jaw 4211 may be used as a wiring terminal of a first electrode of the SMA wire 4212, and the movable clamping jaw 4213 may be used as a wiring terminal of a second electrode of the SMA wire 4212. For example, the stationary clamping jaw 4211 may be used as a wiring terminal of a positive electrode of the SMA wire, and the movable clamping jaw 4213 may be used as a wiring terminal of a negative electrode of the SMA wire.

As shown in FIG. 8a, the image stabilization drive unit 421A and the image stabilization drive unit 421D are disposed adjacent to each other, and the movable clamping jaw 4213 of the image stabilization drive unit 421A is connected to the movable clamping jaw 4213 of the image stabilization drive unit 421D. For example, the stationary clamping jaw 4211 of the image stabilization drive unit 421A is used as a positive wiring terminal, and the stationary clamping jaw 4211 of the image stabilization drive unit 421D is also used as a positive wiring terminal, and the movable clamping jaw 4213 of the image stabilization drive unit 421A and the movable clamping jaw 4213 of the image stabilization drive unit 421D that are connected are used as negative wiring terminals. In the example of this application, the SMA wire 4212 is a wire structure made of an SMA. The SMA may be a nickel-titanium alloy material, and has a feature of heat shrinkage and cold expansion. When no current is applied to the SMA wire, the SMA wire is in a loose state. When a current flows into the SMA wire, due to a resistance characteristic, the SMA wire converts a part of electric energy into thermal energy. The SMA wire shrinks under the action of the thermal energy of the SMA wire, to apply a pulling force to the second support 414, so that the second support 414 can be driven to move in any direction around, thereby implementing optical image stabilization.

A position relationship between four SMA wires is defined, so that the SMA drive component can control electrical signals in the four SMA wires, to enable a combined force of the four SMA wires on the base to move along the XY plane. Because the second support 414 and the first support 415 carrying the lens may be translated relative to the base 413 at the same time, the SMA drive component can drive the lens assembly to translate, so that the camera module implements optical image stabilization.

The movable clamping jaw 4213, the stationary clamping jaw 4211, and the SMA wire 4212 of the second drive mechanism 421 are arranged in a plurality of manners.

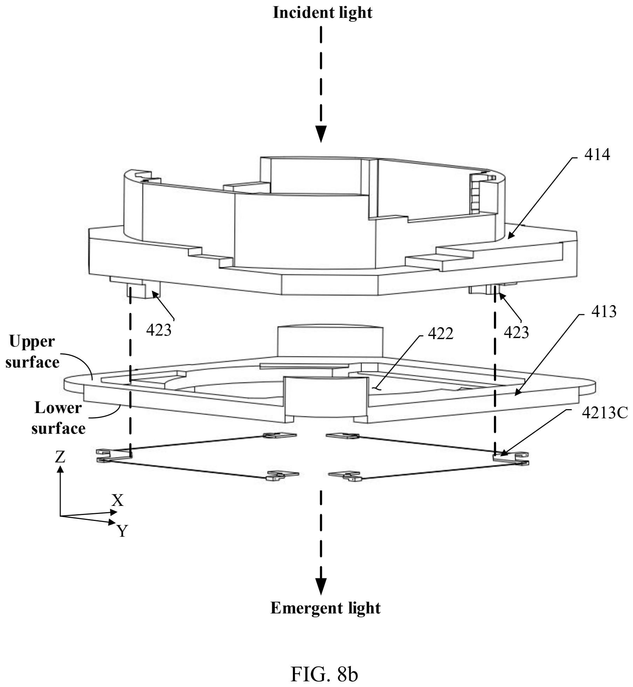

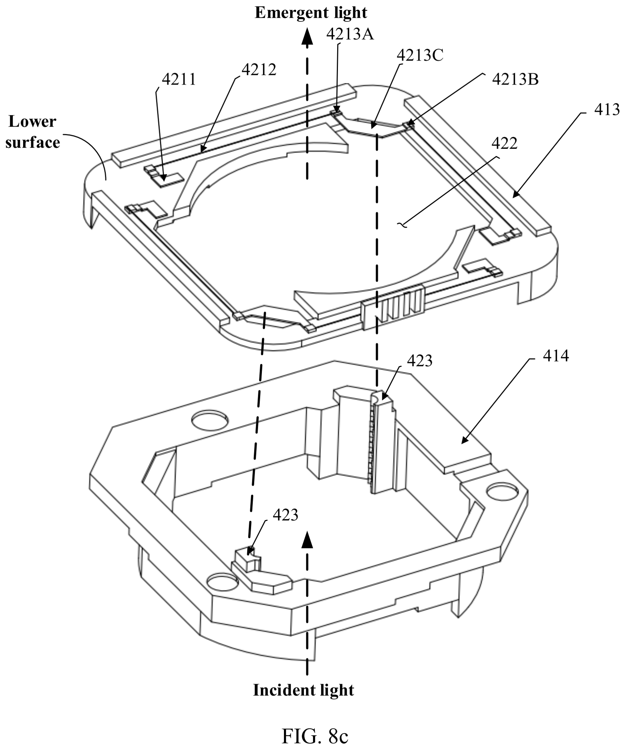

FIG. 8b is an exploded view of the second drive mechanism and another mechanical part. FIG. 8c is a visible view obtained after the structure shown in FIG. 8b is rotated by 180°.

With reference to FIG. 8b and FIG. 8c, the stationary clamping jaw 4211 is located on a lower surface of the base 413, and is fixedly connected to the base 413. It may be understood that the base 413 has an upper surface and a lower surface that are opposite to each other, the upper surface is close to a light inlet side of the light, the lower surface is close to a light outlet side of the light, and the stationary clamping jaw 4211 is fastened to the lower surface of the base 413.

As shown in FIG. 8b and FIG. 8c, a part of the movable clamping jaw 4213 is located on a lower surface of the second support 414, and is fixedly connected to the second support 414. The lower surface of the second support 414 may be understood as a surface close to the light outlet side of the light.

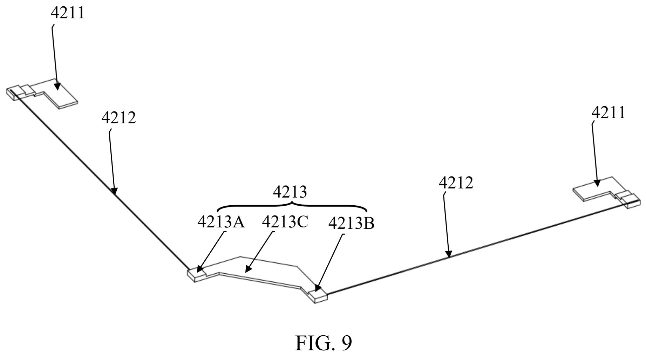

FIG. 9 shows an implementable structure of the movable clamping jaw 4213 according to this application. The movable clamping jaw 4213 includes a first part 4213A, a second part 4213B, and a third part 4213C connecting the first part 4213A and the second part 4213B. The first part 4213A and the second part 4213B are located on the lower surface of the base 413 and are separately connected to the SMA wire 4212. The third part 4213C is located on the lower surface of the second support 414, and is fixedly connected to the second support 414.

To enable the third part 4213C of the movable clamping jaw 4213 to be fixedly connected to the second support 414, as shown in FIG. 8b and FIG. 8c, a cavity 422 may be provided on the base 413, an extension portion 423 that can pass through the cavity 422 is disposed on the second support 414, the third part 4213C protrudes toward the cavity 422, and the third part 4213C extends to a lower side of the extension portion 423 and is fixedly connected to the extension portion 423. Two black dashed lines shown in FIG. 8b and FIG. 8c show a connection relationship between the extension portion 423 and the movable clamping jaw 4213.

Still refer to FIG. 8b and FIG. 8c. The SMA wire 4212 is located on the lower surface of the base 416. In the example of this application, an extension direction of the SMA wire 4212 is parallel to an extension direction of a side edge of the base.

When the camera module performs an optical image stabilization function, the first support 415 carrying the lens assembly and the second support 414 move relative to the base 413. There is a friction force between the first support 415 and the base 413, and a magnitude of the friction force affects an image shooting effect. For example, when the friction force is relatively large, a slight jitter (jitter) occurs in a preview image of the camera module.

The following briefly describes how the friction force affects image shooting quality.

In the second drive mechanism, a position of the lens is controlled by using a difference between actual lengths of two opposite SMA wires. The length of the SMA wire is related to a resistance. Within a specific range, the length of the SMA wire is in a linear relationship with the resistance. In other words, a longer length of the SMA wire indicates a larger resistance. Therefore, when different drive control signals are applied to the four SMA wires shown, a resistance difference between two SMA wires at opposite positions may be used as a feedback signal of a length difference of the SMA wires.

Because there is a friction force between the second support 414 and the base 413, there is a deviation between a target position of the control signal and an actual movement position of the lens. Therefore, feedback-compensation is continuously performed between the resistance feedback signal and the drive control signal. Therefore, when there is a large friction force opposite to the movement direction, due to resistance, the lens does not actually reach a position to which the lens should have accurately moved. In this case, the control system detects, through a resistor, that the lens does not move to the theoretical position, and then increases a drive signal to increase the pulling force of the SMA wire, so that the lens moves to the theoretical position. In addition, due to the friction force, the compensation is greater than that performed when there is no friction force. However, the compensation may be excessive. When the compensation is excessive, a driving force of the SMA wire is reduced. In this case, the lens moves reversely to approach the theoretical position. In this case, a direction of the friction force changes, and impact on the compensation effect is greater than that existing when there is no friction force. The friction force reduces control precision and compensation precision. Because resistance feedback-compensation is performed in real time, that is, the foregoing compensation action is continuously performed, a final result is that an actual lens position fluctuates back and forth in the theoretical position, resulting in slight jitter (jitter) of a preview image of the camera module. Because of the friction force, this degree of jitter is more severe than that when there is no friction or when there is little friction.

To reduce friction and weaken jitter, embodiments of this application provide some structures that can reduce a movement friction coefficient of the second support 414, to improve optical image stabilization performance and image quality.

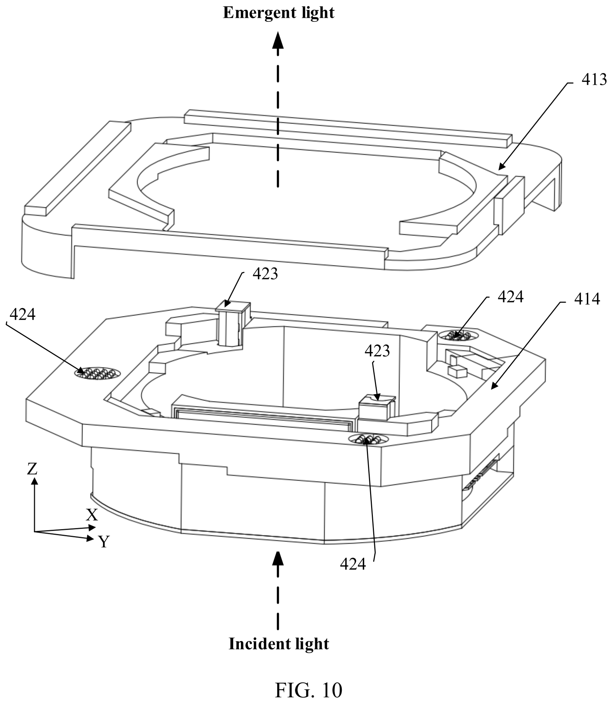

FIG. 10 is an example of an exploded view of the base 413 and the second support 414. A plurality of balls 424 are disposed between the second support 414 and the base 413. When the second drive mechanism drives the second support 414 and the first support 415 to move relative to the base 413 along the XY plane perpendicular to the optical axis, the second support 414 may slide along the plurality of balls 424.

The plurality of balls 424 are disposed between the base 413 and the second support 414, so that a friction coefficient in a movement process of the second support 414 can be reduced, and stroke control precision of the second drive mechanism is higher. This can reduce a jitter amount of the lens and improve a photographing effect.

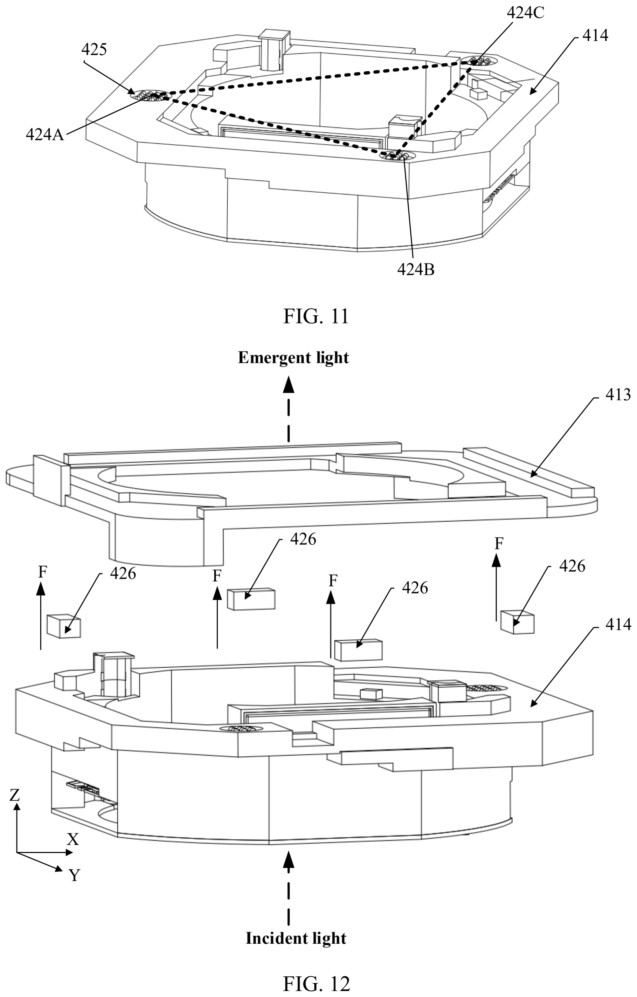

The plurality of balls in the example of this application have a plurality of disposing manners. For example, in the example in FIG. 11, an inlay groove 425 may be disposed on the second support 414, and the balls are disposed in the inlay groove 425 and can roll in the inlay groove 425. For another example, an inlay groove may be disposed on a side surface that is of the base 413 and that faces the second support 414, and the balls are located in the inlay groove.

As shown in FIG. 11, the inlay groove 425 in this example is disposed on the second support 414, a part of the ball 424 located in the inlay groove 425 protrudes from the inlay groove 425, and the part that is of the ball 424 and that protrudes from the inlay groove 425 is in contact with the base 413.

In a process of performing optical image stabilization, to improve stability of movement of the second support 414 relative to the base 413, as shown in FIG. 11, a plurality of groups of balls are included, each group of balls includes a plurality of balls, and the plurality of groups of balls may be arranged at intervals in a circumferential direction of the second support 414. In this way, the second support 414 can move stably.

For example, in FIG. 11, a first group of balls 424A, a second group of balls 424B, and a third group of balls 424C are included, the first group of balls 424A, the second group of balls 424B, and the third group of balls 424C are arranged at intervals in the circumferential direction of the second support 414.

As shown in FIG. 11, a connection between the first group of balls 424A, the second group of balls 424B, and the third group of balls 424C may be in a shape of a triangle, for example, a regular triangle. Based on stability of the triangle, movement stability of the second support 414 can be further improved.

In some implementable structures, a quantity of balls in each group may be the same or may be different.

A plurality of balls in each group of balls may be arranged in a same manner or different manners.

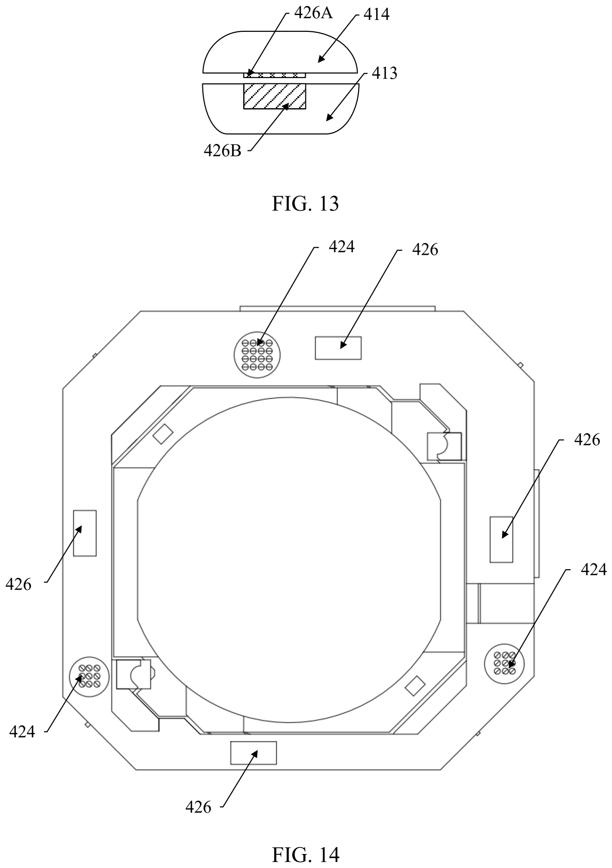

In the example of this application, when the second support 414 moves relative to the base 413, a risk that the second support 414 tilts under gravity of the second support needs to be reduced. As shown in FIG. 12, an exploded view shown in FIG. 12 is a structural diagram in which a light inlet side is located below and a light outlet side is located above. In the example, a magnetic attractive structure 426 may be further disposed between the base 413 and the second support 4144. It may be understood that, as shown in FIG. 14, a second magnetic component 426 is disposed between two opposite surfaces of the base 413 and the base body 414.

When the second drive mechanism drives the second support 414 to slide in the XY plane along the plurality of balls, the second magnetic component 426 generates a magnetic attraction force F between the base 413 and the second support 414. Through the magnetic attraction force F, the second support 414 in a moving process can have an attraction force toward the base 413. In this way, a probability that the moving second support 414 tilts can be reduced.

In some examples, as shown in FIG. 13, the second magnetic component 426 may include a magnetic attractive sheet 426A and a magnet 426B, one of the magnetic attractive sheet 426A and the magnet 426B is disposed on the base 413, and the other is disposed on the second support 414. For example, in FIG. 13, the magnet 426B may be disposed on the base 413, and the magnetic attractive sheet 426A may be disposed on the second support 414.

There is a gap between the magnetic attractive sheet 426A and the magnet 426B. An attraction force between the magnetic attractive sheet 426A and the magnet 426B is used to enable the second support 414 to move stably in the XY plane.

To reduce an area occupied by the magnet and the magnetic attractive sheet, for example, as shown in FIG. 13, a placement groove may be disposed in the base 413, and the magnet 426B is disposed in the placement groove.

In some other examples, a mounting groove may be disposed in the second support 414, and the magnetic attractive sheet 426A is disposed in the placement groove of the second support, to reduce space occupied by the magnetic attractive sheet 426A and the magnet 426B, so that a thickness dimension of the entire camera motor is reduced.

A plurality of groups of second magnetic components 426 may be disposed, and the plurality of groups of second magnetic components 426 are disposed at intervals in the circumferential direction of the second support 414. For example, the plurality of groups of second magnetic components may be symmetrically arranged with respect to the optical axis O1-O2 of the lens.

In some structures, when there are a plurality of groups of balls and a plurality of groups of second magnetic components, as shown in FIG. 14, one or more groups of second magnetic components 426 may be disposed between two adjacent groups of balls 424. The plurality of groups of balls and the plurality of groups of second magnetic components may be alternately arranged in the circumferential direction of the second support 414. In this way, movement stability of the second support can be further improved, jitter can be further weakened, and photographing image quality can be optimized.

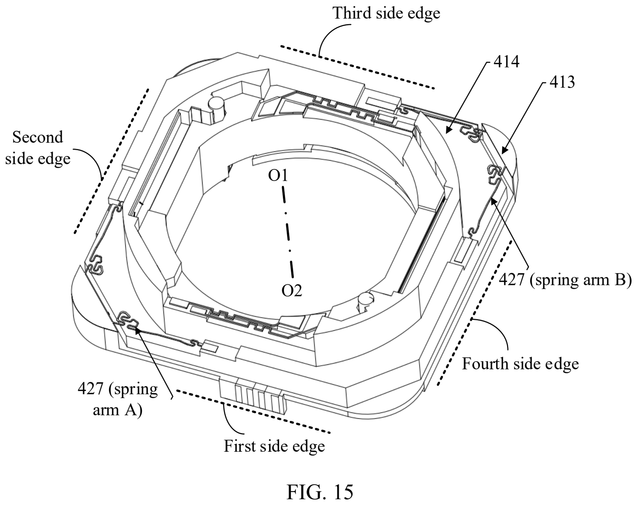

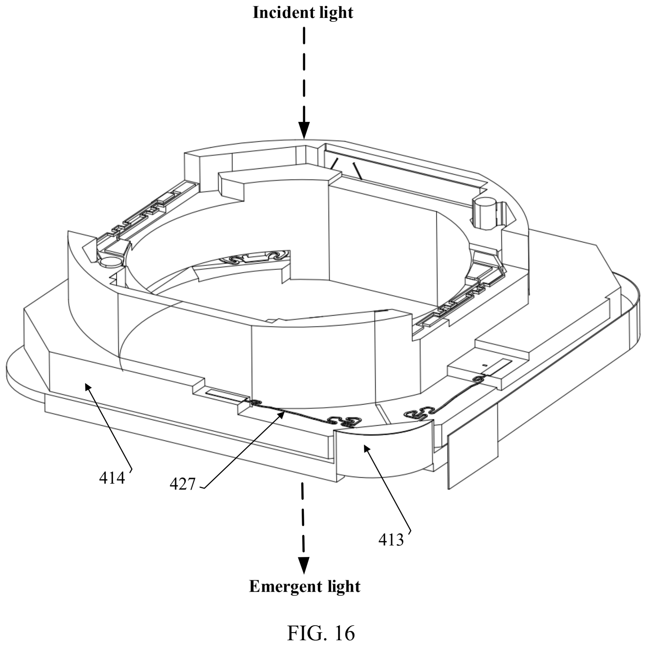

FIG. 15 and FIG. 16 show structures of the camera drive motor from different angles. In an example of this application, the camera drive motor may further include a first spring arm 427. A part of the first spring arm 427 is connected to the second support 414, and the other part is connected to the base 413.

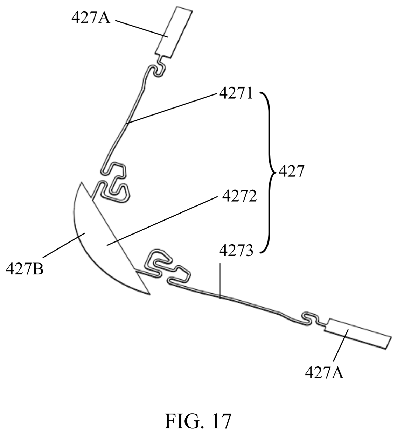

In some examples, FIG. 17 shows an example of a structure of the first spring arm 427. The first spring arm 427 may be of an L-shaped structure. The first spring arm 427 includes a first section 4271, a second section 4273, and a connection portion 4272 that connects the first section 4271 and the second section 4273.

Still as shown in FIG. 17, an end that is of the first section 4271 and that is away from the connection portion 4272 and an end that is of the second section 4273 and that is away from the connection portion 4272 are connected to the movable second support 414, and may be referred to as movable ends 427A. The connection portion 4272 is connected to the base 413, and may be referred to as a fastening end 427B.

In some mounting manners, the first spring arm 427 may be disposed between two opposite surfaces of the base 413 and the second support 414.

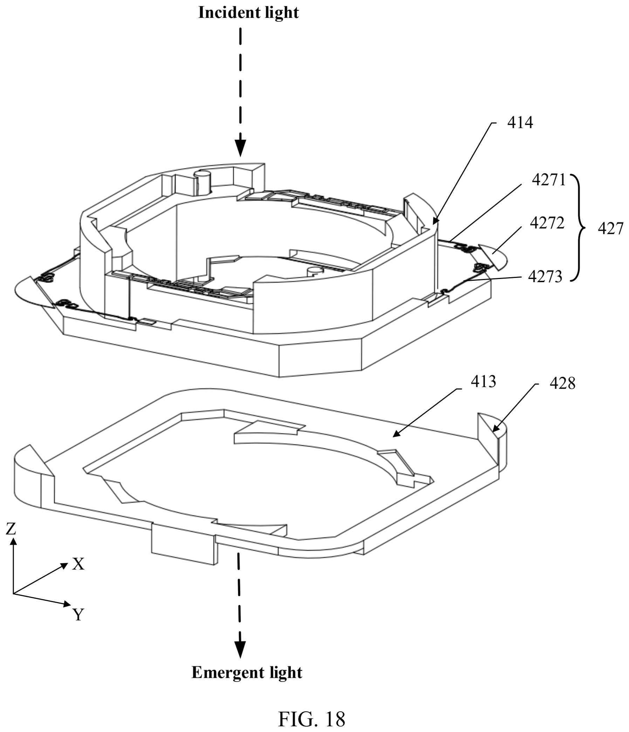

In some other mounting manners, as shown in FIG. 18, the first spring arm 427 may be disposed on a side that is of the second support 414 and that is away from the base 413.

Because the first spring arm 427 is fixedly connected to the base 413, as shown in FIG. 18, a boss 428 may be disposed on the base 413, the boss 428 extends toward the second support 414, and the connection portion 4272 of the first spring arm 427 is fixedly connected to the boss 428, so that the first spring arm 427 is fixedly connected to the base 413.

In embodiments of this application, the first spring arm 427 can balance and cushion a force applied to the second support 414 in a process in which the SMA wire is energized to drive the first support 415, the second support 414, and the lens assembly to move to implement image stabilization, so that the second support 414 moves more stably.

In addition, when the SMA wire is deenergized, the first spring arm can further drive, by using an elastic force generated through deformation in a process in which the SMA wire is energized to drive the second support to move, the second support 414 and the first support 415 carrying the lens assembly to move to an initial position.

In some examples, back to FIG. 15 and FIG. 16, two first spring arms 427 may be included, and the two first spring arms may be symmetrically arranged with respect to O1-O2 of the lens. In this case, the two symmetrically arranged first spring arms may generate a same deformation amount when the second support 414 moves.

As shown in FIG. 15, the two first spring arms may be respectively referred to as a spring arm A and a spring arm B. A first section 4271 of the spring arm A is parallel to the first side surface of the second support 414, and a second section 4273 of the spring arm A is parallel to the second side surface of the second support 414. A first section 4271 of the spring arm B is parallel to a third side edge of the second support 414, and a second section 4273 of the spring arm B is parallel to a fourth side edge of the second support. The first side surface is opposite to the third side edge, and the second side surface is opposite to the fourth side edge.

It may be understood that the first section of the spring arm A is disposed opposite to the first section of the spring arm B, and a shape of the first section of the spring arm A may be the same as a shape of the first section of the spring arm B. The second section of the spring arm A is disposed opposite to the second section of the spring arm B, and a shape of the second section of the spring arm A may be the same as a shape of the second section of the spring arm B. In this way, the two spring arms may be symmetrically arranged with respect to the optical axis of the lens, so that an elastic force is symmetrical.

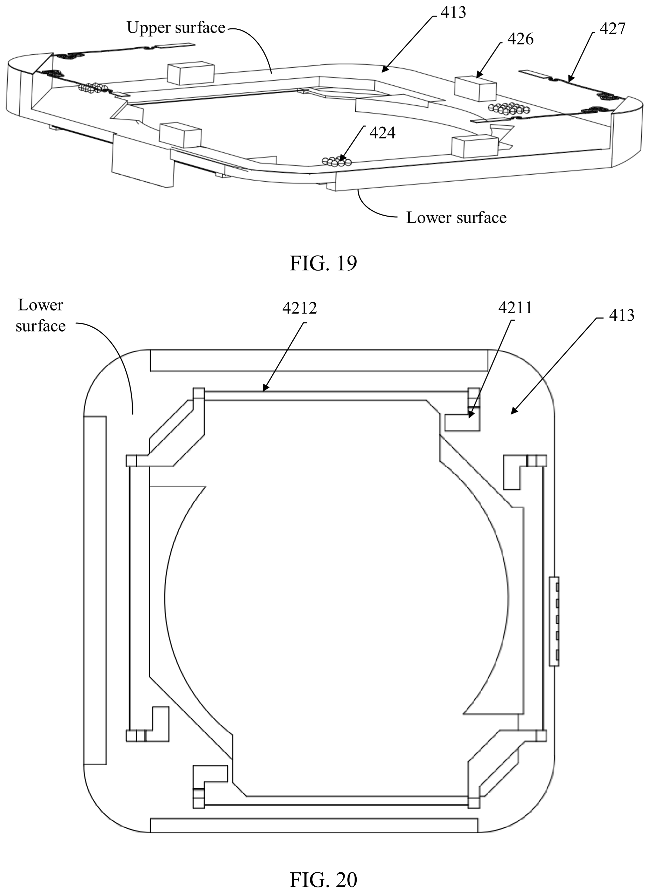

In embodiments of this application, FIG. 20 is a view from a lower surface of FIG. 19. The second drive mechanism including the movable clamping jaw 4213, the stationary clamping jaw 4211, and the SMA wire 4212 is disposed on a side that is of the base 413 and that is away from the second support 414. The ball 424 configured to reduce a movement friction coefficient of the second support 414 may be understood as being disposed on the upper surface of the base 413, the stationary clamping jaw 4211 and the SMA wire 4212 are disposed on the lower surface of the base 413, and the first spring arm 427 is disposed on a side that is of the second support 414 and that is away from the base 413. In other words, the second drive mechanism 421, the ball 424, the second magnetic component 426, and the first spring arm 427 are not centrally disposed, but are distributed at different positions. In this way, space at different positions can be fully used, and interference between a plurality of mechanical parts can be avoided.

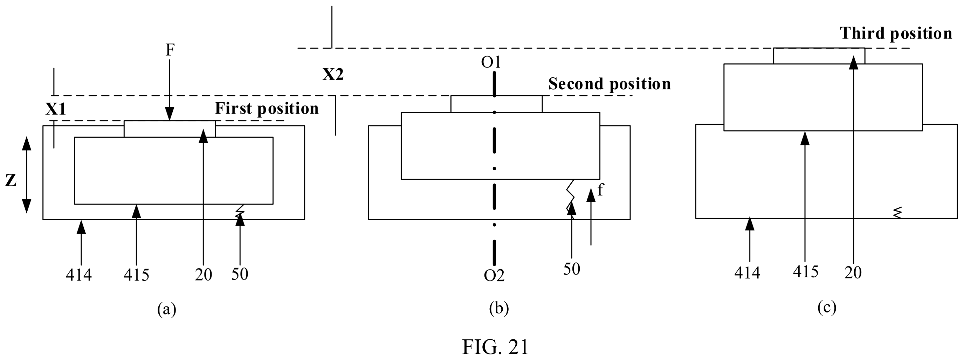

FIG. 21 briefly shows a position relationship between the second support 414, the first support 415, and the lens assembly 40. Because the camera drive motor has a dimension in a thickness direction (for example, the Z direction in FIG. 21) of the camera drive motor, with development of miniaturization, lightness, and thinness of terminal devices, the thickness dimension of the camera drive motor needs to be smaller. Alternatively, when the camera drive motor does not work, that is, when the camera drive motor does not perform either of the automatic focusing function or the image stabilization compensation function, the thickness dimension of the camera drive motor is small. When the camera drive motor works, the thickness dimension may be adjusted to a preset thickness dimension, to ensure normal use of automatic focusing and image stabilization compensation.

In some embodiments, the electronic device may include a prepressing drive mechanism and a cover plate. The cover plate is disposed on a side that is of the variable aperture 20 and that is away from the lens assembly 40.

When the camera drive motor does not work, as shown in (a) in FIG. 21, the prepressing drive mechanism may apply, to the cover plate, a prepressing force F facing the base, and the prepressing force F is transferred to the first support 415 and the lens assembly 40 sequentially through the cover plate and the variable aperture, to reduce a thickness dimension of the entire camera drive motor. For example, the first support 415 and the lens assembly 40 may be pressed to a first position. As shown in (b) in FIG. 21, when the camera drive motor needs to work, the first support 415 and the lens assembly 40 may move to a second position. A direction from the first position to the second position is along the optical axis O1-O2 of the lens, and the first position is closer to the second support 414 than the second position.

In this way, when the first support 415 and the lens assembly 40 are compressed to the first position, the thickness dimension of the entire camera drive motor can be reduced. When the first support 415 and the lens assembly 40 move to the second position, normal use of automatic focusing and image stabilization compensation is ensured.

In some camera drive mechanisms, as shown in (a) and (b) in FIG. 21, a distance X1 between the first position and the second position may reach more than 500 µm. In this way, a thickness dimension of the camera drive motor when the camera drive motor does not work can be significantly reduced.

When the camera drive motor needs to work, the prepressing force F of the prepressing drive mechanism of the electronic device on the cover plate is removed, so that the first support 415 and the lens assembly 40 are ejected.

In some embodiments, to enable the first support 415 and the lens assembly 40 to move from the first position to the second position, in the example of this application, as shown in FIG. 21, an elastic member 50 may be disposed in the camera drive motor, and the elastic member 50 is configured to provide an elastic force f for the first support 415 and the lens assembly 40 to move from the first position to the second position.

When automatic focusing needs to be performed, as shown in (b) and (c) in FIG. 21, the first support 415 carrying the lens assembly 40 may move between the second position and the third position under driving of the first drive mechanism, to implement focusing. The second position is between the first position and the third position.

When the first support 415 and the lens assembly 40 move between the second position and the third position, the first support 415 is separated from the elastic member 50, and the elastic member 50 does not generate an elastic force for the first support 415 and the lens assembly 40.

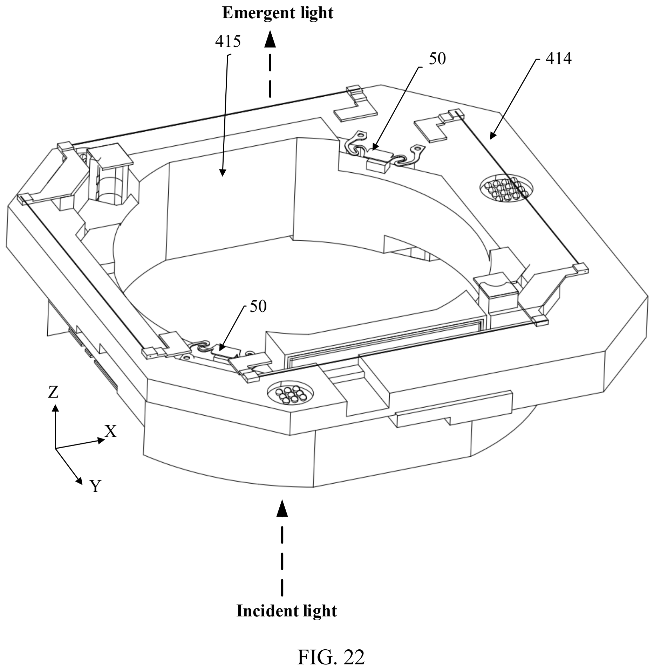

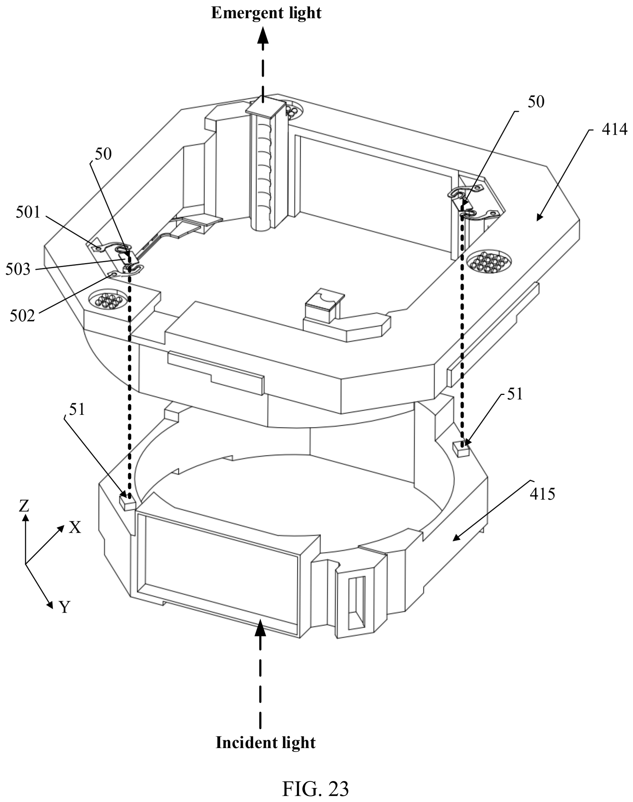

FIG. 22 shows a mounting manner of the elastic member 50, and FIG. 23 is an exploded view of FIG. 22. In the example, the elastic member 50 may be disposed below the first support 415. When the first support 415 and the lens assembly 40 are located at the first position, the first support 415 is in contact with the elastic member 50, and the elastic member 50 deforms and generates an elastic force from the first position to the second position. Under the elastic force of the elastic member 50, the first support 415 and the lens assembly 40 may move from the first position to the second position in a direction away from the base.

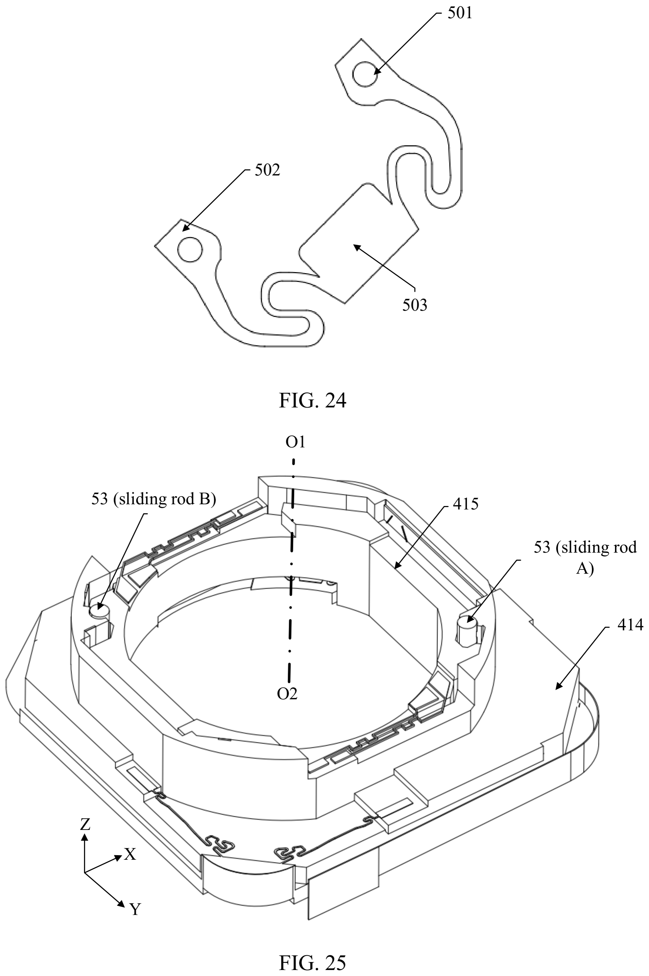

In some examples, as shown in FIG. 24, the elastic member 50 includes a first support lug 501, a second support lug 502, and an elastic section 503 connected between the first support lug 501 and the second support lug 502.

As shown in FIG. 23, the first support lug 501 and the second support lug 502 may be fastened to the second support 414, and the elastic section 503 may extend to a side that is of the first support 415 and that is close to the base 413.

For example, as shown in FIG. 23, a protrusion 51 may be disposed on a side surface that is of the first support 415 and that faces the base, and under the prepressing force F of the prepressing drive mechanism on the first support 415 and the lens assembly 40, when the first support 415 carrying the lens assembly 40 moves to the first position along the optical axis O1-O2, the elastic section 503 of the elastic member 50 is in contact with the protrusion 51, and the elastic section 503 deforms and generates an elastic force from the first position to the second position. After the prepressing force F of the prepressing drive mechanism on the first support 415 and the lens assembly 40 is removed, the elastic force of the elastic section 503 may enable the first support 415 and the lens assembly 40 to move from the first position to the second position.

As shown in FIG. 22 and FIG. 23, in some examples, a plurality of elastic members 50 may be included. The plurality of elastic members 50 may be symmetrically arranged with respect to the optical axis O1-O2, so that an elastic force is symmetrical, and the first support 415 and the lens assembly 40 move stably under the symmetrical elastic force.

In some camera drive mechanisms, back to FIG. 21, as shown in (b) and (c) in FIG. 21, when the camera module performs automatic focusing, a distance X2 between the second position and the third position may reach more than 1000 µm. In addition, the distance X1 between the first position and the second position may reach more than 500 µm. In this way, when the first support and the lens assembly move between the first position and the third position, a stroke (X1+X2) reaches more than 1500 µm.

It may be understood that, in the example of this application, the stroke of the first support 415 that carries the lens assembly 40 not only includes a cushioning stroke under the elastic force of the elastic member 50, but also includes a focusing stroke under a driving force of the first drive mechanism. Compared with including only a focusing stroke, a stroke of the lens assembly 40 and the first support 415 in the example of this application is larger.

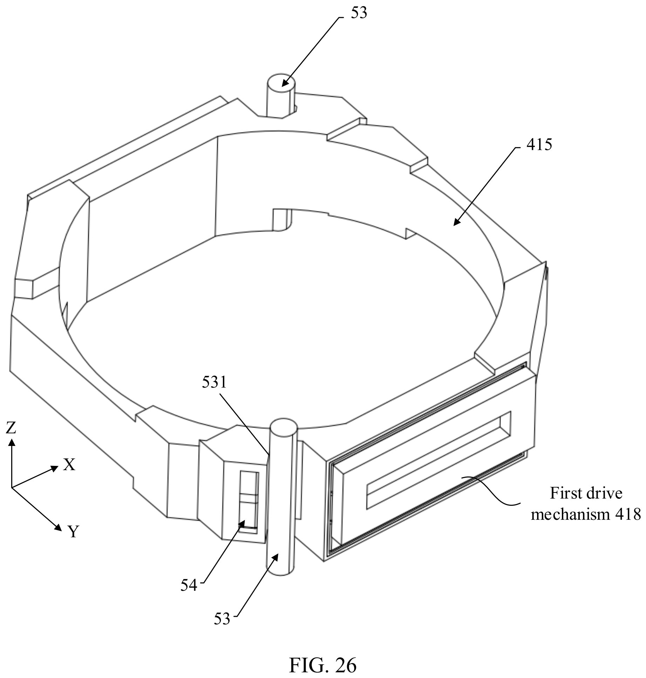

When the first support 415 carrying the lens assembly 40 has a relatively large stroke, to improve movement stability, as shown in FIG. 25 and FIG. 26, the camera drive motor may further include a sliding rod 53, an axial direction of the sliding rod 53 is consistent with the direction of the optical axis O1-O2 of the lens, the sliding rod 53 is fastened relative to the second support 414, and the first support 415 is slidably connected to the sliding rod 53.

When the first support 415 carrying the lens assembly 40 is in the cushioning stroke and the focusing stroke, that is, when the first support 415 and the lens assembly 40 move between the first position and the third position shown in FIG. 21, the sliding rod 53 is used as a guide structure, and the first support 415 slides in the axial direction of the sliding rod 53, to ensure that movement tracks of the first support 415 and the lens assembly 40 are basically planar movement.

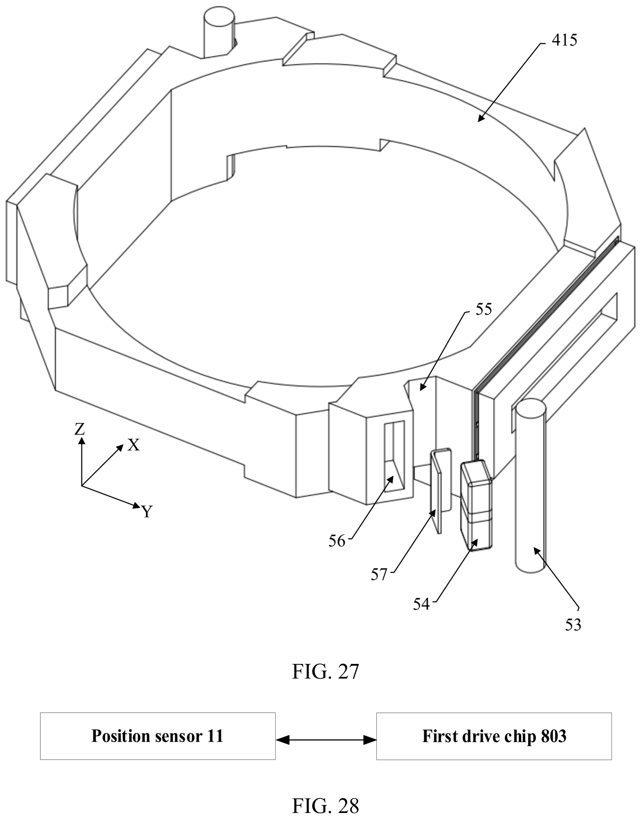

FIG. 27 shows an example of a disposing manner of the sliding rod 53. A guide groove 55 is disposed on the first support in the direction of the optical axis O1-O2 of the lens, and the sliding rod 53 is slidably disposed in the guide groove 55.

To further increase a relative movement speed between the sliding rod 53 and the guide groove 55, in some implementations, a lubrication structure may be disposed in the guide groove 55. For example, the guide groove 55 may be filled with lubricant. For another example, a film layer structure with a small friction coefficient may be formed on an inner wall surface of the guide groove 55.

When the first support 415 carrying the lens assembly 40 moves relative to the second support 414, to improve sliding stability of the first support 415 relative to the sliding rod 53, a plurality of sliding rods 53 may be disposed in the camera drive motor. For example, in the examples in FIG. 25 and FIG. 26, a sliding rod A and a sliding rod B are disposed. The sliding rod A and the sliding rod B may be arranged at intervals in the circumferential direction of the first support 415, and the sliding rod A and the sliding rod B are disposed in corresponding guide grooves.

In some examples, more sliding rods may be alternatively disposed. The plurality of sliding rods may be evenly distributed in the circumferential direction of the first support, or the plurality of sliding rods may be symmetrically disposed with respect to the optical axis O1-O2 of the lens, so that the lens moves more stably during focusing.

In some structures, as shown in FIG. 26, the first support 415 has a sliding slot 531 that slidably fits the sliding rod 53. When the first support 415 slides in the axial direction of the sliding rod 53, the sliding rod 53 is in contact with the sliding slot. The sliding rod 53 abuts against the sliding slot 531, to position movement of the sliding rod 53, and ensure that the first support 415 moves straightly in the axial direction of the sliding rod 53.

In some implementable structures, a plurality of sliding rods 53 and a plurality of elastic members 50 may be included. The plurality of sliding rods 53 and the plurality of elastic members 50 may be alternately arranged in the circumferential direction of the first support 415. In other words, one elastic member 50 may be disposed between two adjacent sliding rods 53, and one sliding rod 53 may be disposed between two adjacent elastic members 50.

To further enable the first support 415 carrying the lens assembly 40 to move straightly relative to the second support 414 in a direction parallel to the optical axis O1-O2 of the lens, in embodiments of this application, as shown in FIG. 26 and FIG. 27, a first magnetic component 54 is further added, the first magnetic component 54 may generate an attraction force between the first support 415 and the second support 414, and the attraction force has a component force perpendicular to the optical axis O1-O2 of the lens. In this way, when the first drive mechanism drives the first support 415 and the lens assembly 40 to move along the optical axis O1-O2 of the lens, the first support 415 can slide straightly in the axial direction of the sliding rod 53 under attraction of the attraction force.

In some examples, as shown in FIG. 27, the first magnetic component 54 may include a magnet. The magnet is fastened to the first support 415, and the magnet is disposed close to the sliding rod 53. For example, the sliding rod 53 may be a metal mechanical part with magnetic properties, an attraction force f is generated between the magnet and the sliding rod, and the attraction force f is used to enable the first support 415 to tightly hold the sliding rod 53 in a moving process, so as to slide in the axial direction of the sliding rod 53. Alternatively, the sliding rod 53 may be a non-magnetic mechanical part, for example, a ceramic, and a magnetic material may be formed on an outer wall surface of the ceramic.

In some other examples, the first magnetic component 54 may include a first magnet fastened to the first support 415 and a second magnet fastened to the second support 414, and a magnetic attraction force may be generated between the first magnet and the second magnet, the magnetic attraction force has a component force perpendicular to the sliding rod 53, and the component force is used to enable the first support 415 to tightly hold the sliding rod 53 to slide stably.

Refer to FIG. 27. When a manner in which the magnet tightly holds the sliding rod is used, a mounting cavity 56 may be disposed at a position that is of the first support 415 and that is located beside the sliding rod 53, and the magnet is disposed in the mounting cavity 56. For example, the magnet may be disposed in the mounting cavity 56 by using an adhesive layer 57.

In some examples, as shown in FIG. 26, the sliding rod 53 is disposed close to the coil and the magnet of the focusing drive unit, the magnet of the first magnetic component 54 is disposed close to the sliding rod 53, electromagnetic induction is generated between the coil and the magnet of the focusing drive unit, and a magnetic attraction force is generated between the magnet of the first magnetic component 54 and the sliding rod 53.

To avoid mutual impact between the electromagnetic induction between the coil and the magnet of the focusing drive unit and the magnetic attraction force between the magnet of the first magnetic component and the sliding rod, as shown in FIG. 26, the magnet of the first magnetic component 54 is farther away from the focusing drive unit than the sliding rod 53. In this way, mutual interference can be weakened.

In the example of this application, even if the first support 415 that carries the lens assembly 40 has a relatively large stroke, for example, includes the foregoing cushioning stroke and the focusing stroke under the driving force of the first drive mechanism, under the action of the sliding rod 53 and the first magnetic component 54, a movement track of the first support 415 carrying the lens assembly 40 can be basically along the optical axis O1-O2, thereby reducing a risk that the lens assembly deviates in a large stroke.

In the example of this application, a position sensor may be further included. The position sensor is configured to detect a sliding position of the first support 415 relative to the sliding rod 53.

For example, the position sensor may be an electromagnetic transducer (electromagnetic transducer). When the first support 415 carrying the lens assembly moves relative to the second support 414 for focusing, the electromagnetic transducer is used to sense a magnetic flux change, to convert the magnetic flux change into an output signal change, so as to determine a position of the lens.

In some examples, a detection magnet disposed opposite to the electromagnetic transducer may be disposed on the first support 415. In this case, when the first support 415 on which the lens assembly and the detection magnet are assembled moves in the direction of the optical axis O1-O2 of the lens, the electromagnetic transducer senses and detects a magnetic flux change of the magnet, to determine a lens position.

In some examples, the detection magnet in the position sensor 11 may be shared with the magnet in the first drive mechanism, so that a structure can be simplified.

Refer to FIG. 28. FIG. 28 is a diagram of an internal circuit of an electronic device. In embodiments of this application, the electronic device further includes a first drive chip 803. In some embodiments, the first drive chip 803 may be disposed on a main board, and the electromagnetic transducer in the position sensor 11 may be disposed on the first support. Certainly, the electromagnetic transducer and the first drive chip 803 may be alternatively disposed on another structure in the electronic device, for example, disposed on a circuit board on which a universal serial bus (universal serial bus, USB) component is located. FIG. 28 shows only an example in which the electromagnetic transducer is electrically connected to the first drive chip 803, and this cannot be considered as a special limitation on this application.

The position sensor 11 is configured to detect a lens position.

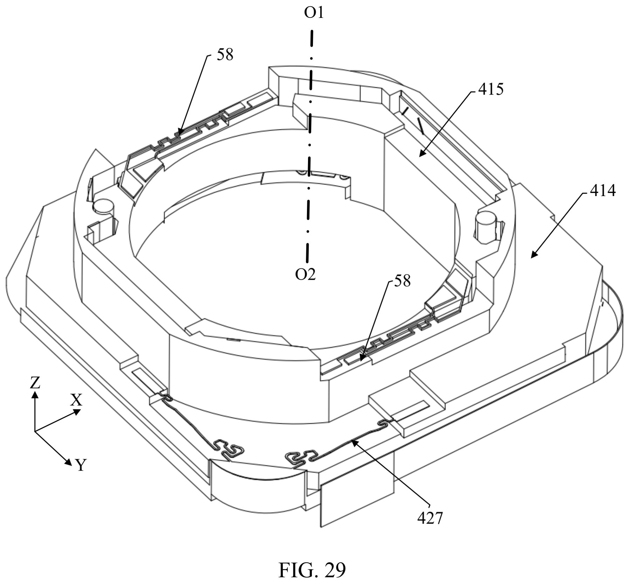

As shown in FIG. 29, the camera drive motor in the example of this application may further include a second spring arm 58. A part of the second spring arm 58 is connected to the second support 414, and the other part is connected to the first support 415. When the camera module performs automatic focusing, and the lens assembly 40, the first support 415, and the variable aperture move along the optical axis O1-O2 of the lens, the second spring arm 58 deforms, to balance and cushion a force applied to the variable aperture and the lens assembly, so that the variable aperture and the lens assembly move more stably.

In some examples, as shown in FIG. 29, a plurality of second spring arms 58 may be included, and the plurality of second spring arms 58 are arranged at intervals in the circumferential direction of the first support 415. For example, the plurality of second spring arms may be symmetrically arranged with respect to the optical axis O1-O2 of the lens. In this case, when the lens assembly, the variable aperture, and the first support move along the optical axis O1-O2 of the lens, the plurality of second spring arms may generate a same deformation amount, to provide a symmetrical elastic force.

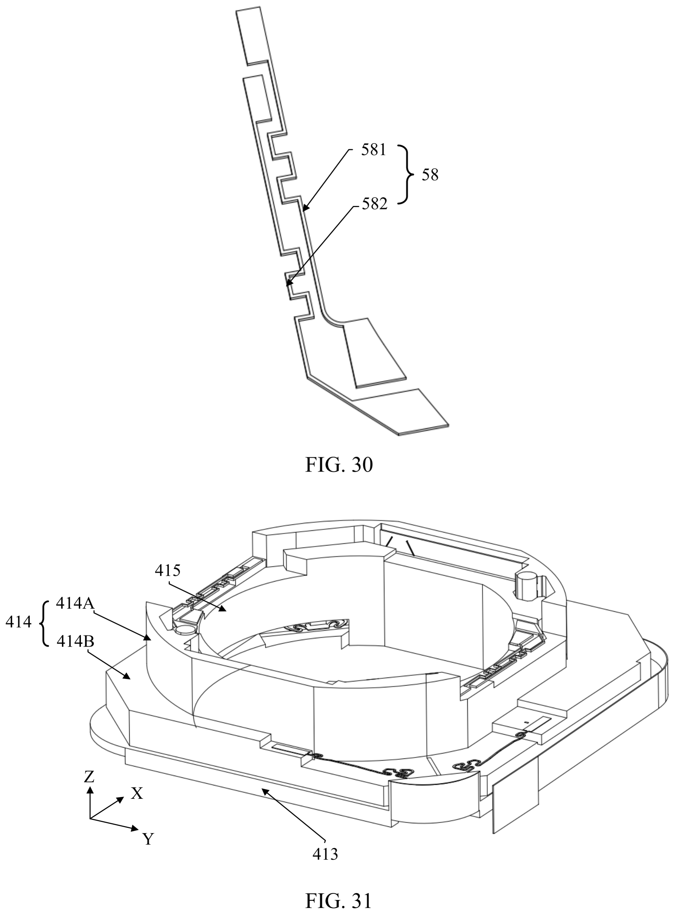

FIG. 30 shows an implementation structure of the second spring arm 58 according to an embodiment of this application. The second spring arm 58 includes a first branch arm 581 and a second branch arm 582, the first branch arm 581 and the second branch arm 582 may be disposed close to each other, one end of each branch arm is connected to the first support 415, and the other end is connected to the second support 414.

The plurality of separate branch arms disposed in FIG. 30 can further balance and cushion the force applied to the variable aperture and the lens assembly, so that the variable aperture and the lens assembly move more stably.

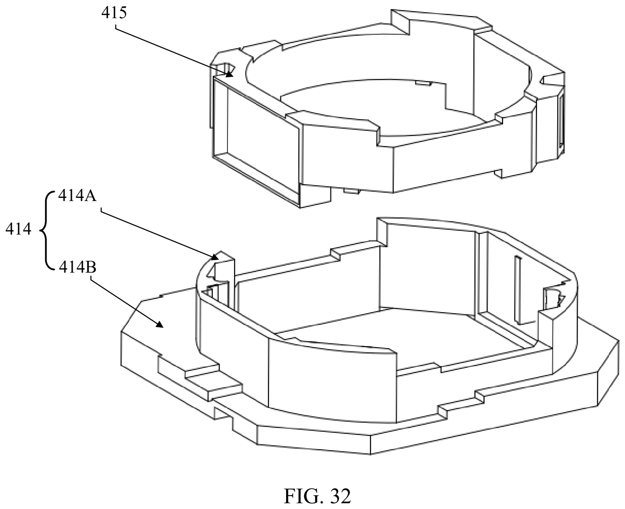

FIG. 32 is an exploded view of the second support 414 and the first support 415 in FIG. 31. The second support 414 in the example of this application may include a main body portion 414A and an extension portion 414B, and the extension portion 414B is disposed on a side that is of the main body portion 414A and that is close to the base. The extension portion 414B extends away from the main body portion 414A in a circumferential direction of an outer edge of the main body portion 414A. In this way, steps shown in FIG. 31 and FIG. 32 may be formed between the main body portion 414A and the extension portion 414B of the second support.

Through the second support with the steps in the example of this application, space may be formed on a periphery of the main body portion 414A, and another mechanical part in the camera module may be arranged by using the space.

In some structures, the main body portion 414A and the extension portion 414B may be an integrally formed mechanical part.

As shown in FIG. 31 and FIG. 32, in the direction of the optical axis O1-O2 of the lens, the main body portion 414A and the extension portion 414B have depth dimensions, an accommodating cavity is formed inside the main body portion 414A and the extension portion 414B, and the first support 415 is disposed in the accommodating cavity.

In some examples, the coil and the magnet of the first drive mechanism, the sliding rod, and the first magnetic component may be disposed in space between the first support 415 and the main body portion 414A.

In some examples, there is a gap between the extension portion 414B and the base, and the stationary clamping jaw, the movable clamping jaw, and the SMA wire of the second drive mechanism may be disposed in the gap.

The plurality of balls configured to reduce a movement friction coefficient of the second support 414 relative to the base 413, and the second magnetic component configured to provide a magnetic attraction force between the second support 414 and the base 413 may also be disposed in the gap.

Alternatively, in some examples, the stationary clamping jaw, the movable clamping jaw, and the SMA wire may be disposed on a side that is of the base 413 and that is away from the second support 414.

In the camera module, an electrical connection structure needs to be disposed, to electrically connect the drive mechanism of the variable aperture, the first drive mechanism, the second drive mechanism, and the like to the circuit board of the camera module.

For example, a circuit structure may be formed on the second support 414, a circuit structure is formed on the base 413, and the circuit structure on the second support 414 and the circuit structure on the base 413 are electrically connected to the circuit board of the camera module, so that the drive mechanism of the variable aperture, the first drive mechanism, the second drive mechanism, and the like form a drive path with the circuit board.

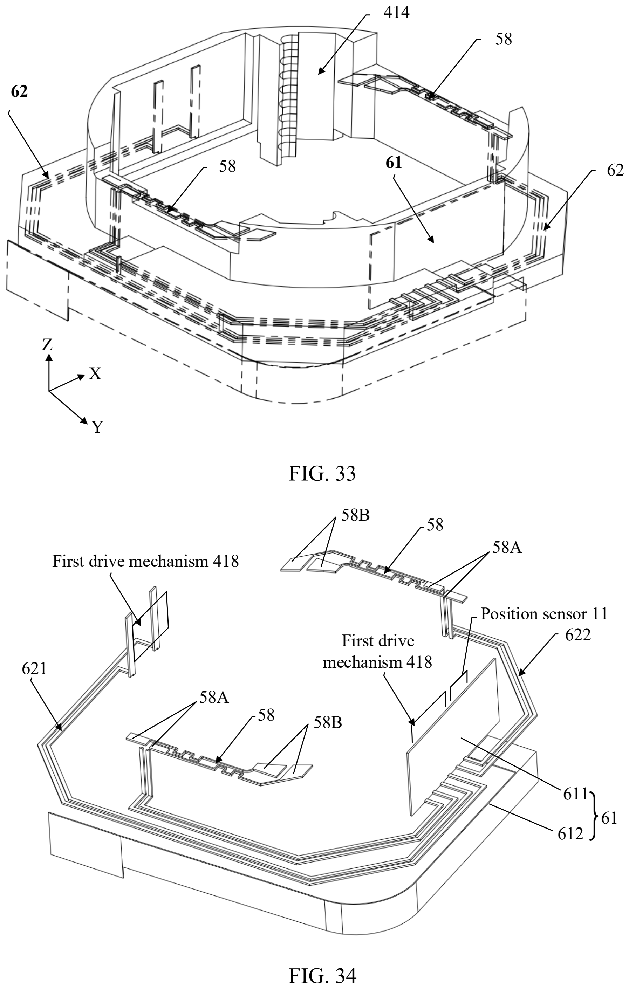

As shown in FIG. 33 and FIG. 34, an example of an electrical connection structure is provided. The electrical connection structure is a flexible structure. The electrical connection structure may include a second spring arm 58. The second spring arm 58 includes a first end 58A and a second end 58B. The second end 58B of the second spring arm 58 may be electrically connected to the drive mechanism of the variable aperture. For example, when the drive mechanism of the variable aperture includes a coil and a magnet, the second end 58B of the second spring arm 58 may be electrically connected to the coil of the variable aperture.

In the example in FIG. 34, two second spring arms 58 are included, each second spring arm 58 includes two branch arms, and each branch arm has one second end 58B. In this way, the two second spring arms 58 have four second ends 58B electrically connected to the coil of the variable aperture.

When the drive mechanism of the variable aperture includes four coils, two of the four second ends 58B are connected to two of the four coils, and the other two of the four second ends 58B are connected to the remaining two of the four coils.

In some examples, as shown in FIG. 33 and FIG. 34, a conductive structure such as a conducting wire may be disposed on the second support 414 to be electrically connected to a flexible printed circuit (flexible printed circuit, FPC) 61.

The conductive structure has a plurality of implementations. For example, a conductive lead may be formed in an electroplating manner. For another example, a conductive lead may be formed in a manner of embedding metal through insert molding (Insert Molding).

Refer to FIG. 33 and FIG. 34. The first end 58A of the second spring arm 58 may be electrically connected to the first FPC 61 by using a third conductive lead 622 disposed on the second support 414. In this way, the variable aperture may be electrically connected to the first FPC 61 by using the second spring arm 58 and the third conductive lead 622 disposed on the second support 414, and the first FPC 61 is electrically connected to the circuit board of the camera module. In this way, the circuit board of the camera module and the coil of the variable aperture form a drive path.

It may be understood that the second spring arm 58 in the example of this application not only has a function of cushioning and balancing movement stability of the lens, but also has an electrical connection function.

In some implementable structures, as shown in FIG. 33 and FIG. 34, the coil in the focusing drive unit may be electrically connected to the first FPC by using a conductive structure disposed on the second support 414, for example, a first conductive lead 621 formed in a manner of embedding metal through insert molding (Insert Molding). The coil in the first drive mechanism is electrically connected to the first FPC, and the first FPC is electrically connected to the circuit board of the camera module. In this way, the circuit board of the camera module and the coil in the first drive mechanism form a drive path.

In the example of this application, the position sensor 11 may be electrically connected to the first FPC by using the third conductive lead 622 shown in FIG. 34.

In some embodiments, as shown in FIG. 33 and FIG. 34, the first FPC 61 may include a first part 611 and a second part 612. The first part 611 may be disposed between the first support 415 and the second support 414, and is disposed opposite to the coil of the focusing drive unit. The second part 612 surrounds a periphery of the base 413 and the second support 414, and is electrically connected to the circuit board in the electronic device.

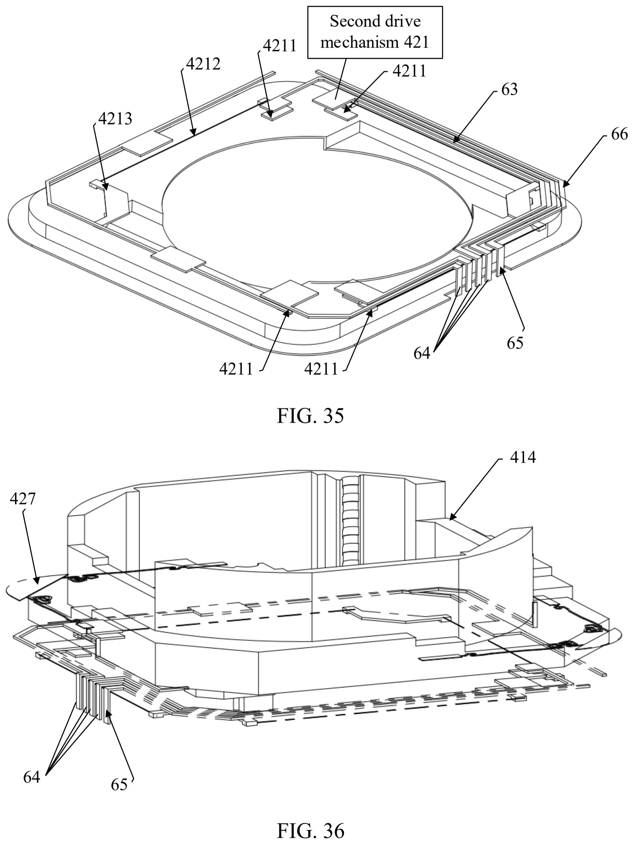

In an example of this application, the second drive mechanism includes an SMA drive component for optical image stabilization. To enable the SMA drive component and the circuit board of the camera module to form a drive path, FIG. 35 shows an electrical connection structure of the SMA drive component. A plurality of connection terminals may be included. For example, the plurality of connection terminals may include a signal connection terminal 64 electrically connected to the stationary clamping jaw 4211. In some implementable structures, a second conductive lead 63 may be formed in a manner of embedding metal through insert molding (Insert Molding). The signal connection terminal 64 is electrically connected to the stationary clamping jaw 4211 by using the second conductive lead 63.

As shown in FIG. 35, the SMA drive component includes four stationary clamping jaws 4211, the four stationary clamping jaws 4211 are electrically connected to corresponding signal connection terminals 64 by using the second conductive lead 63, and the signal connection terminals 64 are electrically connected to the circuit board in the camera module. In this way, the circuit board of the camera module and the stationary clamping jaw in the second drive mechanism form a drive path.

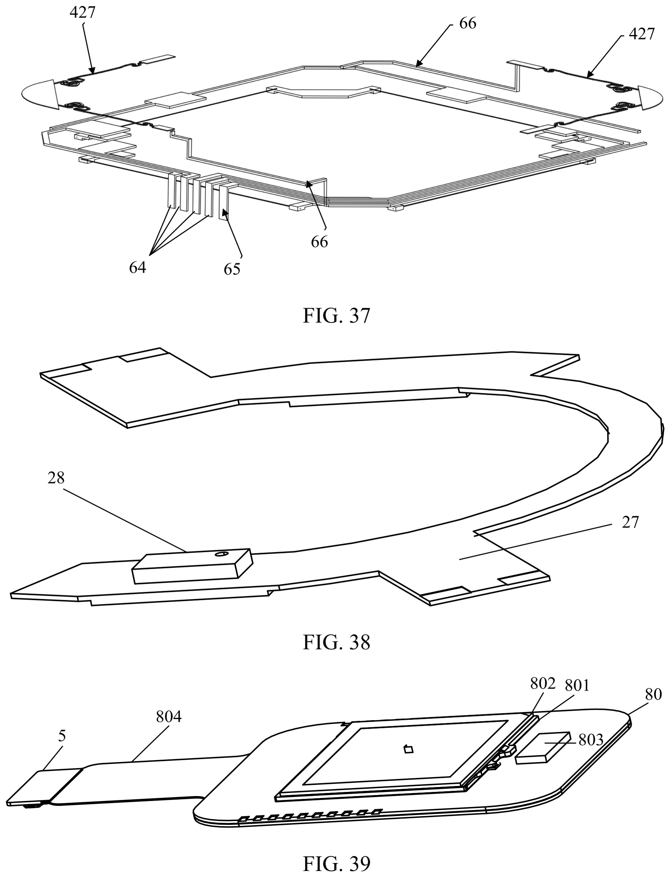

As shown in FIG. 36 and FIG. 37, the plurality of connection terminals further include a ground connection terminal 65, and the ground connection terminal 65 may be electrically connected to the first spring arm 427 by using a ground lead 66. The ground lead 66 may form a conductive lead in an electroplating manner, or may form a conductive lead in a manner of embedding metal through insert molding (Insert Molding).

In embodiments of this application, the first spring arm 427 in the example of this application not only has a function of cushioning and balancing movement stability of the second support, but also has a grounding function.

In this embodiment, the electrical connection structure includes: a first FPC 61, where the first FPC 61 is disposed on the second support 414, and the first FPC 61 is electrically connected to the module circuit board 80; a first conductive lead 621, where the first conductive lead 621 is disposed on the second support 414, a first end of the first conductive lead 621 is electrically connected to the first drive mechanism 418, and a second end of the first conductive lead 621 is electrically connected to the first FPC 61; a first spring arm 427, where a first end of the first spring arm 427 is connected to the second support 414, and a second end of the first spring arm 427 is fastened to the base 413; a second conductive lead 63, where the second conductive lead 63 is disposed on the base 413, and the second drive mechanism 421 is electrically connected to the module circuit board 80 through the second conductive lead 63; a ground lead 66, where the ground lead 66 is disposed on the base 413, one end of the ground lead 66 is electrically connected to the second end of the first spring arm 427, and the other end of the ground lead 66 is electrically connected to the module circuit board 80 of the camera module 10; and a second spring arm 58, where a first end of the second spring arm 58 is electrically connected to the variable aperture 20, and a second end of the second spring arm 58 is fastened on the first support 415.

In some embodiments, a first drive chip 803 is disposed on the module circuit board 80, and the first drive mechanism 418 is electrically connected to the first FPC 61 through the first conductive lead 621, and is electrically connected to the first drive chip 803 through the first FPC 61.

In some embodiments, the second drive mechanism 421 is electrically connected to the first drive chip 803 through the second conductive lead 63.

In some embodiments, the camera module 10 further includes a position sensor 11. The position sensor 11 is configured to detect a position of the second support 414 relative to the base 413. The position sensor 11 is electrically connected to the first drive chip 803 through the first FPC 61.

In some embodiments, the electrical connection structure further includes a third conductive lead 622, the third conductive lead 622 is disposed in the second support 414, the variable aperture 20 includes a second drive chip 28 and a second FPC 27, the third drive mechanism 24 is electrically connected to the second drive chip 28, the second drive chip 28 is electrically connected to the second FPC 27, the first end of the second spring arm 58 is connected to the second FPC 27, and the second end of the second spring arm 58 is electrically connected to the first FPC 61 through the third conductive lead 622, so that the second drive chip 28 is electrically connected to the module circuit board 80 through the second FPC 27, the second spring arm 58, the third conductive lead 622, and the first FPC 61.

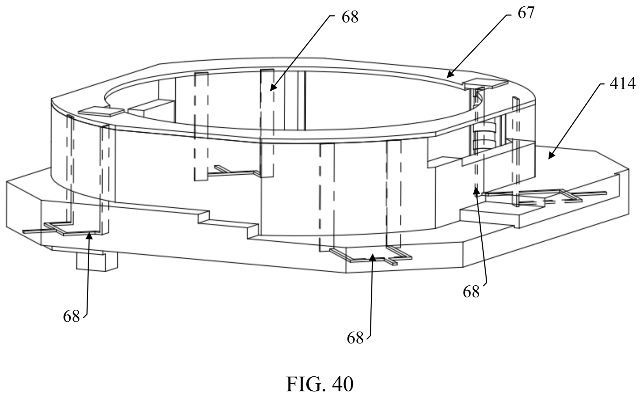

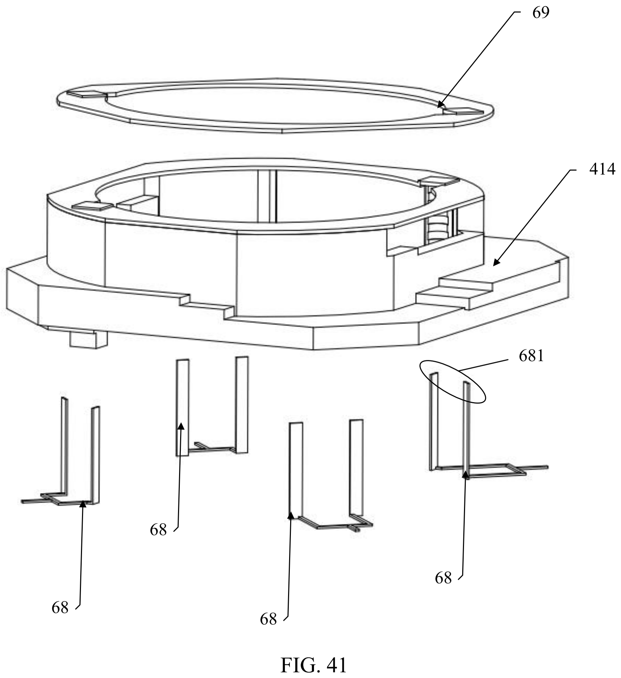

To increase a mechanical strength of the entire camera module, as shown in FIG. 40 and FIG. 41, a plurality of supports 68 may be disposed. For example, the support 68 may be embedded in the second support 414 in a manner of embedding metal through insert molding (Insert Molding), to enhance a strength of the second support 414.

In some structures, as shown in FIG. 41, a plurality of supports 68 may be disposed, and the plurality of supports 68 may be arranged at intervals in the circumferential direction of the second support 414.

As shown in FIG. 41, a reinforcing plate 69 may be disposed on a surface of the second support 414, and an end portion 681 of the support 68 embedded in the second support 414 may be connected to the reinforcing plate 69, to further improve the strength of the second support 414.

Alternatively, in some examples, the support 68 may be made of a metal material, and the support 68 is electrically connected to the ground lead 66 for grounding shown in FIG. 37.

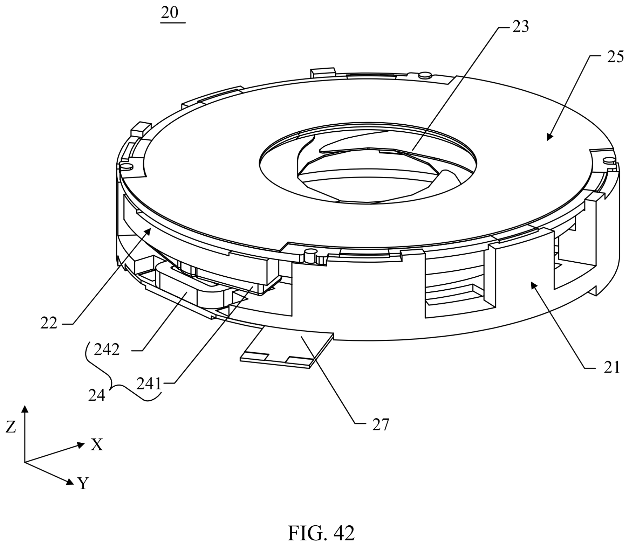

The variable aperture 20 shown in FIG. 3 may adjust the amount of external light that enters the camera module 10. The following describes a structure of the variable aperture 20 by using an example. In some embodiments of this application, as shown in FIG. 42, the variable aperture 20 includes a fastening base 21 (base) 21, a rotating carrier (carrier) 22, a plurality of blades 23, at least one third drive mechanism 24, and a cover plate (cover) 25. For example, the third drive mechanism 24 may include a magnet component 241 and a coil 242. The cover plate 25 covers the fastening base 21, the cover plate 25 and the fastening base 21 may form accommodating space, and the rotating carrier 22, the blades 23, and the at least one third drive mechanism 24 are located in the accommodating space.

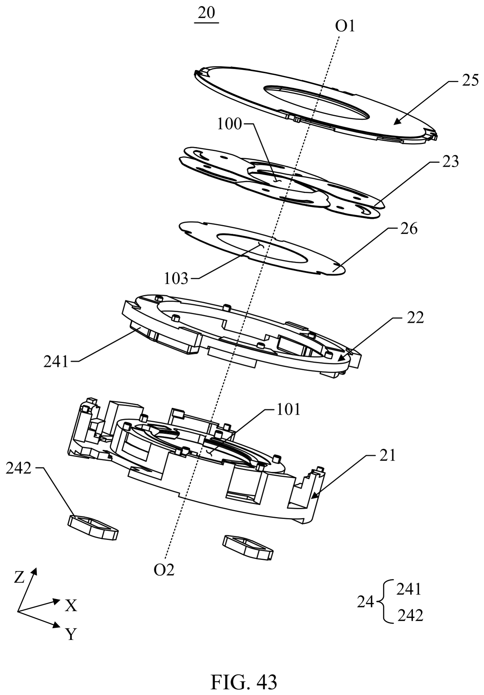

Based on this, as shown in FIG. 43 (which is an exploded view of the variable aperture 20 shown in FIG. 42), the rotating carrier 22 may be located in the fastening base 21, and the rotating carrier 22 is rotatably connected to the fastening base 21. In this case, the rotating carrier 22 may be used as a mover in the variable aperture 20, and the rotating carrier 22 may rotate around the optical axis O1-O2 relative to the fastening base 21. The fastening base 21 may be used as a stator in the variable aperture 20, and is in a static state relative to the rotating carrier 22.

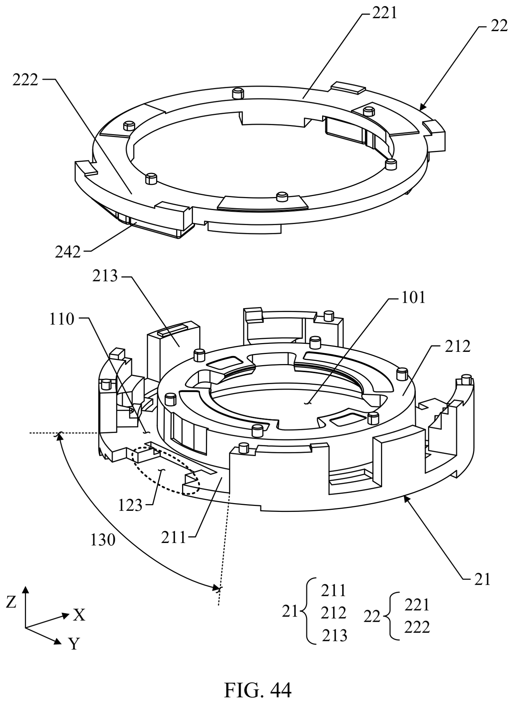

For example, to dispose the rotating carrier 22 in the fastening base 21, as shown in FIG. 44, the fastening base 21 may include a bottom plate 211, a boss 212, and a side plate 213. The boss 212 may be disposed on the bottom plate 211, the fastening base 21 has a first light transmitting hole 101, and the first light transmitting hole 101 may penetrate the boss 212 and the bottom plate 211. In addition, the side plate 213 is disposed on the bottom plate 211, and the side plate 213 may be disposed around a periphery of the boss 212. The bottom plate 211, the boss 212, and the side plate 213 may be formed by using one preparation process, for example, an injection molding process. In this case, the bottom plate 211, the boss 212, and the side plate 213 are connected to form an integrated structure.

Based on this, a first mounting groove 110 may be enclosed by the side plate 213, a side wall of the boss 212, and the bottom plate 211. At least a part of the rotating carrier 22 may be located in the first mounting groove 110, and the rotating carrier 22 located in the first mounting groove 110 may be disposed around a periphery of the first light transmitting hole 101.

In this way, the first mounting groove 110 is disposed on the fastening base 21, so that the rotating carrier 22 located in the first mounting groove 110 may be accommodated in the fastening base 21, and thicknesses (in the Z direction) of the rotating carrier 22 and the fastening base 21 can overlap, thereby reducing a thickness of the variable aperture 20.

On this basis, further as shown in FIG. 44, the rotating carrier 22 may include an annular portion 221 and a convex lug 222, the convex lug 222 is disposed on a side wall of the annular portion 221, and the convex lug 222 may be connected to the annular portion 221. For example, the convex lug 222 and the annular portion 221 are connected to form an integrated mechanical part by using an injection molding process. In addition, the magnet component 241 may be disposed on the convex lug 222, and the magnet component 241 is connected to the convex lug 222, so that the magnet component 241 can be carried by using the convex lug 222. In addition, a first opening 130 is provided on the side plate 213 of the fastening base 21, the first opening 130 penetrates the side plate 213 in a direction perpendicular to the bottom plate 211, and the first opening 130 is in communication with the first mounting groove 110.

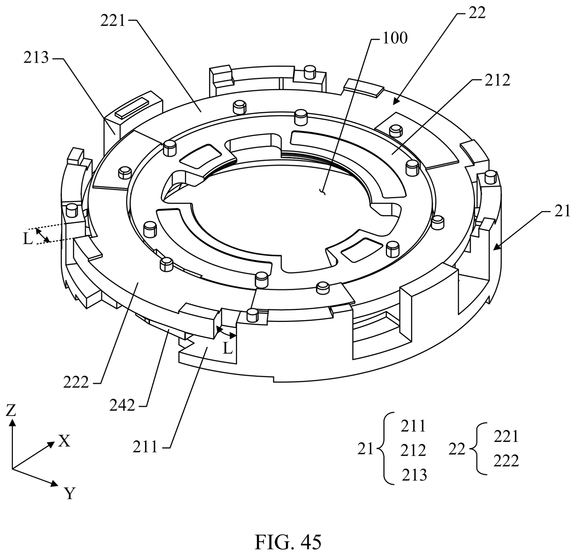

In this case, as shown in FIG. 45, the annular portion 221 of the rotating carrier 22 is located in the first mounting groove 110 (as shown in FIG. 44), and the annular portion 221 may be disposed around the periphery of the boss 212 of the fastening base 21. In addition, the convex lug 222 of the rotating carrier 22 and the magnet component 241 connected to the convex lug 222 may be located in the first opening 130 (as shown in FIG. 44). In this way, the first opening 130 is provided on the side plate 213 of the fastening base 21, so that the side plate 213 of the fastening base 21 can avoid positions of the convex lug 222 of the rotating carrier 22 and the magnet component 241 connected to the convex lug 222.

Based on this, there may be a stroke gap L shown in FIG. 45 between a side wall of the first opening 130 (as shown in FIG. 44) and the convex lug 222. Therefore, in a rotation direction of the rotating carrier 22, an opening length of the first opening 130 may be a rotation stroke of the rotating carrier 22. When the rotating carrier 22 abuts against the side wall of the first opening 130, the rotating carrier 22 rotates to a maximum stroke.

In addition, further as shown in FIG. 43, the cover plate 25 is disposed on a side that is of the plurality of blades 23 and that is away from the rotating carrier 22. The plurality of blades 23 are disposed on the rotating carrier 22, the blades 23 may be slidably connected to the rotating carrier 22, and the blades 23 may be further rotatably connected to the fastening base 21. The plurality of blades 23 are distributed annularly to enclose the aperture hole 100.

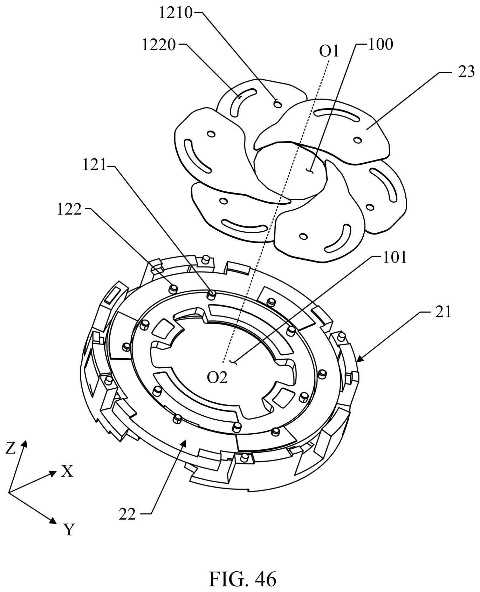

For example, the variable aperture 20 may further include a first limiting column 121 shown in FIG. 46 that is disposed on the fastening base 21, and a second limiting column 122 that is disposed on the rotating carrier 22. When the rotating carrier 22 includes the annular portion 221 and the convex lug 222 shown in FIG. 44, the second limiting column 122 may be disposed on the annular portion 221.

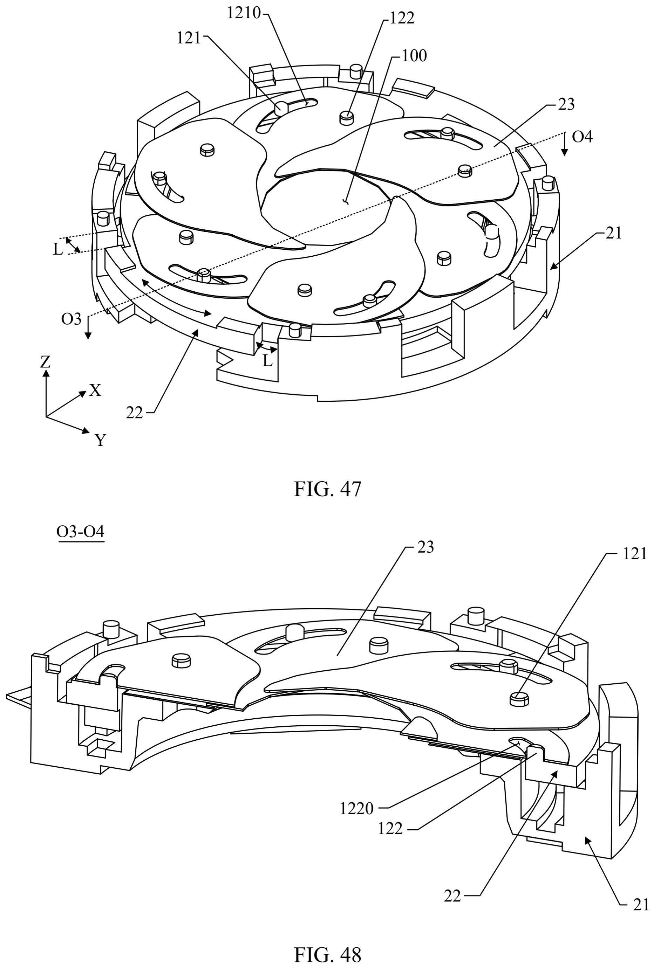

In addition, further as shown in FIG. 46, the blade 23 is provided with a rotating connection hole 1210 and a sliding guide groove 1220 that penetrate the blade 23. As shown in FIG. 47, one blade 23 is connected to one first limiting column 121 and one second limiting column 122. Specifically, as shown in FIG. 48 (a sectional view obtained through cutting along the dashed line O3-O4 in FIG. 47), the first limiting column 121 on the fastening base 21 is disposed in the rotating connection hole 1210 (as shown in FIG. 46) on the blade 23, so that the blade 23 is rotatably connected to the fastening base 21. The second limiting column 122 on the rotating carrier 22 is disposed in the sliding guide groove 1220 on the blade 23, so that the blade 23 is slidably connected to the rotating carrier 22.

In this case, in a process in which the rotating carrier 22 rotates relative to the fastening base 21 in a direction of an arc-shaped arrow in FIG. 47, the second limiting column 122 on the rotating carrier 22 moves along the sliding guide groove 1220 on the blade, so that the blade 23 can be pushed to rotate in an axial direction of the first limiting column 121. In a moving process of the plurality of blades 23, a size of the aperture hole 100 changes accordingly. Two ends of the sliding guide groove 1220 are limiting positions of the second limiting column 122. When the second limiting column 122 slides to either of the two limiting positions, the hole diameter of the aperture hole 100 may change to a maximum hole diameter or a minimum hole diameter.

In addition, further as shown in FIG. 46, the aperture hole 100 may be in communication with the first light transmitting hole 101, so that light transmitted through the aperture hole 100 may be incident to the lens assembly 40 shown in FIG. 3 after passing through the first light transmitting hole 101. Based on this, the minimum hole diameter of the aperture hole 100 may match a first limiting f-stop of the variable aperture 20, for example, a minimum f-stop. In this case, a luminous flux of light entering the lens assembly 40 through the variable aperture 20 may be the smallest. On the contrary, in some embodiments of this application, the maximum hole diameter of the aperture hole 100 may match a second limiting f-stop of the variable aperture 20, for example, a maximum f-stop. In this case, a luminous flux of light entering the lens assembly 40 through the variable aperture 20 may be the largest.

Alternatively, in some other embodiments of this application, further as shown in FIG. 43, the variable aperture 20 may further include a second soma (soma) 26, and the second soma 26 is stacked on a side that is of the plurality of blades 23 and that faces the fastening base 21. The second soma 26 is provided with a third light transmitting hole 103, and the third light transmitting hole 103 is in communication with the aperture hole 100. Light passing through the aperture hole 100 may first pass through the third light transmitting hole 103, and then enter the lens assembly 40 (as shown in FIG. 3) through the first light transmitting hole 101 on the fastening base 21.

Therefore, a hole diameter of the third light transmitting hole 103 may match the second limiting f-stop of the variable aperture 20, for example, the maximum f-stop. In this case, compared with an edge shape of the aperture hole 100 that is enclosed by the plurality of blades 23 and that has the maximum hole diameter, an edge shape of the third light transmitting hole 103 is closer to an ideal circle. When the aperture hole 100 is in a state with the maximum hole diameter, the blade 23 may be located outside an edge of the third light transmitting hole 103, to avoid blocking the third light transmitting hole 103.

In addition, further as shown in FIG. 43, to drive the rotating carrier 22 to rotate along the optical axis O1-O2 relative to the fastening base 21, it can be learned from the foregoing that the variable aperture 20 may further include the third drive mechanism 24. The magnet component 241 in the third drive mechanism 24 may be disposed on a side that is of the rotating carrier 22 and that is away from the blade 23, and the magnet component 241 is connected to the rotating carrier 22. Based on this, to enable the coil 242 in the third drive mechanism 24 to be disposed opposite to the magnet component 241, the coil 242 may be disposed on a side that is of the magnet component 241 and that faces the fastening base 21.

In this way, because the magnet component 241 is connected to the rotating carrier 22 that is used as a mover, when the coil 242 is energized, a magnetic field generated by the coil 242 interacts with a magnetic field generated by the magnet component 241 to generate an acting force. The acting force may enable the magnet component 241 to rotate relative to the coil 242, to drive the rotating carrier 22 connected to the magnet component 241 to rotate relative to the fastening base 21.

On this basis, in some embodiments of this application, in the same third drive mechanism 24, a vertical projection of the magnet component 241 on the rotating carrier 22 overlaps a vertical projection of the coil 242 on the rotating carrier 22. In this way, positions of the rotating carrier 22 and the coil 242 in the same third drive mechanism 24 are corresponding, so that the magnetic field generated by the energized coil 242 can more easily interact with the magnetic field of the magnet component 241.

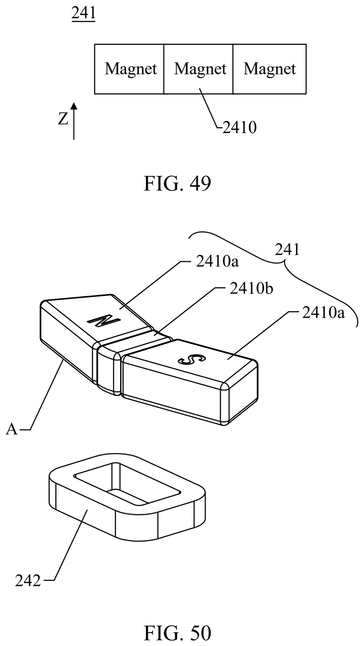

In some embodiments of this application, as shown in FIG. 49, the magnet component 241 may include a plurality of magnets 2410, and magnetic fields generated by the plurality of magnets 2410 may all interact with the magnetic field generated by the energized coil 242 (as shown in FIG. 43), so that a strength of the magnetic field generated by the magnet component 241 can be increased. For example, directions in which N poles of the plurality of magnets 241 in the magnet component 241 point to S poles may all be provided in the Z direction. Neither of the N pole and the S pole of the magnet 241 is shown in FIG. 49. An upper surface and a lower surface of the magnet 2410 in the Z direction may be the N pole and the S pole of the magnet 2410 mutually.

Alternatively, for another example, the plurality of magnets in the magnet component 241 may be arranged in a Halbach array (Halbach array) structure shown in FIG. 50. In the Halbach array structure, directions in which N poles of some magnets 2410a point to S poles are provided in the Z direction, and directions in which N poles of some other magnets 2410b point to S poles (the N poles and the S poles of the magnets 2410b are not shown in the figure) are provided in a direction of a horizontal plane (the XY plane). The magnets 2410a and the magnets 2410b are alternately arranged. In this way, a surface A that is of the magnet component 241 having the Halbach array structure and that faces the coil 242 has a relatively large magnetic field strength, so that when a very small current flows through the coil 242, the rotating carrier 22 connected to the magnet component 241 can be pushed, thereby increasing a pushing force on the rotating carrier 22 and reducing power consumption.

In conclusion, in the variable aperture 20 provided in embodiments of this application, the rotating carrier 22 shown in FIG. 46 is located in the fastening base 21, and the rotating carrier 22 is rotatably connected to the fastening base 21. In addition, the blade 23 shown in FIG. 43 is slidably connected to the rotating carrier 22, and the blade 23 is further rotatably connected to the fastening base 21. In this case, when the rotating carrier 22 rotates relative to the fastening base 21, the rotating carrier 22 may drive the blade 23 to slide relative to the rotating carrier 22, so that the blade 23 rotates relative to the fastening base 21. Based on this, in a rotation process of the rotating carrier 22, the hole diameter of the aperture hole 100 enclosed by the plurality of blades 23 that are distributed annularly may change with rotation of the rotating carrier 22, to adjust the hole diameter of the aperture hole 100 and finally adjust the f-stop of the variable aperture 20.

On this basis, to drive the rotating carrier 22 to rotate, it can be learned from the foregoing that the third drive mechanism 24 includes the magnet component 241 and the coil 242 shown in FIG. 43. The magnet component 241 is disposed on a side that is of the rotating carrier 22 and that is away from the blade 23. The coil 242 is disposed on a side that is of the magnet component 241 and that faces the fastening base 21. In this case, the coil 242 is energized, so that a magnetic field generated by the coil 242 interacts with a magnetic field generated by the magnet component 241 to generate an acting force. The acting force may drive the magnet component 241 to drive the rotating carrier 22 to rotate relative to the fastening base 21.

In this way, in the variable aperture 20 provided in embodiments of this application, because the magnet component 241 is disposed on the rotating carrier 22 used as a mover, the variable aperture 20 may be a moving-magnet variable aperture 20. Based on this, the coil 242 that needs power supply does not need to be disposed on the mover (that is, a moving-coil variable aperture), so that an electrical connection structure of the variable aperture 20 can be simplified. In addition, in embodiments provided in this application, the plurality of blades 23 can be driven to move by using the rotating carrier 22 through only rotatable cooperation between the rotating carrier 22 used as a mover and the fastening base 21 used as a stator, to adjust the hole diameter of the aperture hole 100, thereby reducing a quantity of components used to adjust the hole diameter of the variable aperture 20, and simplifying a structure of the variable aperture 20.

On this basis, as shown in FIG. 46, a thickness (a dimension in the Z direction) of the variable aperture 20 may be reduced by disposing the rotating carrier 22 in the fastening base 21. In addition, the magnet component 241 is disposed on the side that is of the rotating carrier 22 and that is away from the blade 23, and the coil 242 is disposed on the side that is of the magnet component 241 and that faces the fastening base 21. Compared with that in a solution in which a magnet and a coil are disposed on a periphery of a rotating carrier, an area of the variable aperture 20 on an XY surface (that is, in a transverse direction) can be reduced, thereby reducing a size of the variable aperture 20. In this case, the structure of the variable aperture 20 is simplified, and the thickness and the transverse area of the variable aperture 20 are reduced, thereby facilitating a miniaturization design of the entire camera module 10, and improving an integration level of the electronic device.

In addition, when the image sensor 802 (as shown in FIG. 3) in the camera module 10 has a relatively large target surface (that is, a size of the image sensor), a dimension of the lens assembly 40 of the camera module 10 in the Z direction is relatively large, so that the dimension of the lens assembly 40 matches the target surface of the sensor 802. Based on this, when the image sensor 802 with a relatively large target surface is used in the camera module 10, although it is difficult to further reduce the dimension of the lens assembly 40 in the Z direction, when the variable aperture 20 provided in embodiments of this application is used, because a dimension of the variable aperture 20 in the Z direction is relatively small, a size of the entire camera module 10 can be effectively reduced.

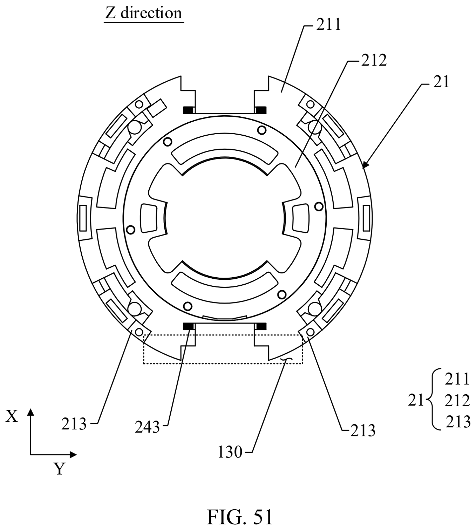

On this basis, the third drive mechanism 24 may further include a first magnetic conductive sheet 243 shown in FIG. 51 (a top view obtained in the Z direction in FIG. 44). The first magnetic conductive sheet 243 may be disposed on a side that is of the bottom plate 211 of the fastening base 21 and that faces the rotating carrier 22 (as shown in FIG. 44), and the first magnetic conductive sheet 243 is used for attraction with the magnet component 241 on the rotating carrier 22 shown in FIG. 44. The magnetic conductive sheet may also be referred to as a magnetic attractive sheet, and the magnetic conductive sheet has a high magnetic permeability, a low resistivity, and a small iron loss. Based on this, in a thickness direction of the variable aperture 20 (the Z direction in FIG. 44), the first magnetic conductive sheet 243 can attract the magnet component 241. Because the first magnetic conductive sheet 243 attracts the magnet component 241 in the Z direction, the first magnetic conductive sheet 243 may also be referred to as a Z-direction magnetic conductive sheet.

For example, the first magnetic conductive sheet 243 may include a ferromagnetic substance capable of attraction, for example, metal such as iron, nickel, or cobalt. For example, the first magnetic conductive sheet 243 may be a stainless steel sheet, which is referred to as a steel sheet for short. A manner of disposing a metal material that can be attracted by a magnetic substance in the following embodiments of this application is the same as that described above. Details are not described herein again.

In addition, further as shown in FIG. 51, a vertical projection of the first opening 130 on the side wall of the boss 212 overlaps a vertical projection of the first magnetic conductive sheet 243 on the side wall of the boss 212. It can be learned from the foregoing that, in the rotation direction of the rotating carrier 22, the opening length (a dimension in the Y direction) of the first opening 130 may be the rotation stroke of the rotating carrier 22. Therefore, when the vertical projection of the first opening 130 on the side wall of the boss 212 overlaps the vertical projection of the first magnetic conductive sheet 243 on the side wall of the boss, the first magnetic conductive sheet 243 may be disposed within a stroke range of the rotating carrier 22.

In this way, in a rotation process of the rotating carrier 22, the magnet component 241 is attracted by the first magnetic conductive sheet 243 in the thickness direction of the variable aperture 20, so that separation between the rotating carrier 22 and the fastening base 21 in a rotation process of the camera module 10 can be reduced, thereby improving reliability of the variable aperture 20.

In addition, when a quantity and positions of first magnetic conductive sheets 243 and a spacing between the first magnetic conductive sheet and the magnet component 241 are adjusted, an attraction force between the first magnetic conductive sheet 243 and the magnet component 241 can be adjusted. For example, as shown in FIG. 51, each third drive mechanism 24 may include two first magnetic conductive sheets 243. When the variable aperture 20 has two third drive mechanisms 24, the variable aperture 20 may have four first magnetic conductive sheets 243 (parts filled with black).

In this case, an attraction force between all first magnetic conductive sheets 243 in the variable aperture 20 and the magnet component 241 can reach about 10 times a weight of the rotating carrier 22 and the magnet component 241. In this case, a friction force between the rotating carrier 22 and the fastening base 21 in FIG. 44 may be increased.

Based on this, further as shown in FIG. 44, when the rotating carrier 22 rotates to drive the aperture hole 100 formed through movement of the plurality of blades 23 to reach an f-stop, for example, a maximum f-stop (for example, an f-stop 4), because the friction force between the rotating carrier 22 and the fastening base 21 is relatively large, it is difficult for the rotating carrier 22 to further rotate relative to the fastening base 21, and therefore power supply to the coil 242 may be terminated, so that positions of the rotating carrier 22 and the fastening base 21 are relatively fixed (in a steady state), thereby achieving aperture self-locking. In this way, when the user shoots a photo or a video in a fixed scenario, and does not need to change the aperture, because the aperture is self-locked and the coil 242 is in a power-off state (a current in the coil 242 may be 0), power consumption can be reduced.

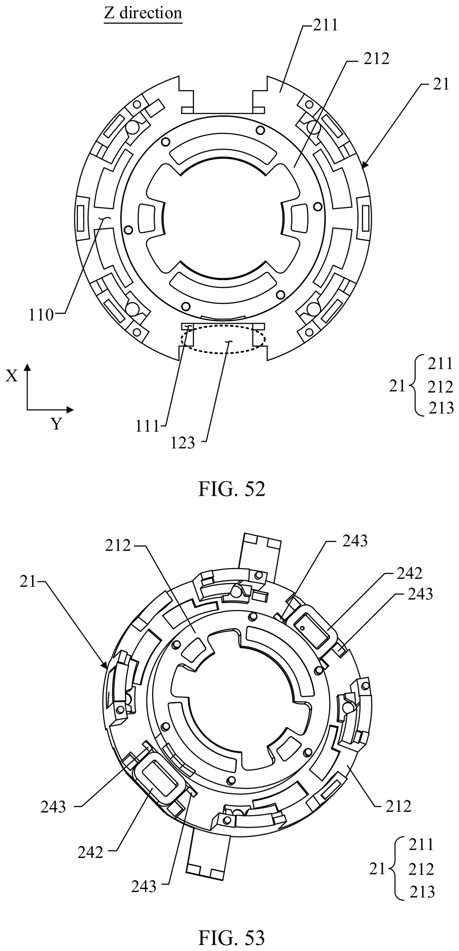

For example, as shown in FIG. 52 (a top view obtained in the Z direction in FIG. 44), a part that is of the bottom plate 211 of the fastening base 21 and that is used as a groove bottom of the first mounting groove 110 is provided with a second mounting groove 111. The first magnetic conductive sheet 243 (as shown in FIG. 51) is located in the second mounting groove 111. In this way, the second mounting groove 111 is provided on the bottom plate 211, so that the first magnetic conductive sheet 243 (as shown in FIG. 51) located in the second mounting groove 111 can be embedded in the bottom plate of the fastening base 21. In this way, a thickness of the first magnetic conductive sheet 243 overlaps a partial thickness of the bottom plate 211, thereby helping reduce the thickness of the variable aperture 20. In addition, the second mounting groove 111 is disposed at an end that is of the coil mounting hole 123 used to accommodate the coil 242 and that faces the boss 212, so that the first magnetic conductive sheet 243 located in the second mounting groove 111 is closer to the magnetic attractive component 241 (as shown in FIG. 44).

In some embodiments of this application, the third drive mechanism 24 may include two first magnetic conductive sheets 243. As shown in FIG. 53, an end that is of the coil 242 and that faces the boss is located between the two first magnetic conductive sheets 243. In this way, an attraction force between all the first magnetic conductive sheets 243 and the magnetic attractive component can be increased by increasing a quantity of first magnetic conductive sheets 243, thereby helping achieve aperture self-locking after the coil 242 is powered off.

It can be learned from the foregoing that, as shown in FIG. 50, the magnet component 241 having the foregoing Halbach array structure may provide a relatively large driving force for the rotating carrier 22. Therefore, the magnet component 241 having the foregoing Halbach array structure may also be referred to as a high-thrust magnet component 241. Therefore, disposing the magnet component 241 having the foregoing Halbach array structure may further resolve a problem that the rotating carrier 22 is stuck due to an excessively large friction force in a rotation process relative to the fastening base 21 because the first magnetic conductive sheet 243 (as shown in FIG. 53) attracts the magnet component 241. This helps increase fault tolerance for a product.

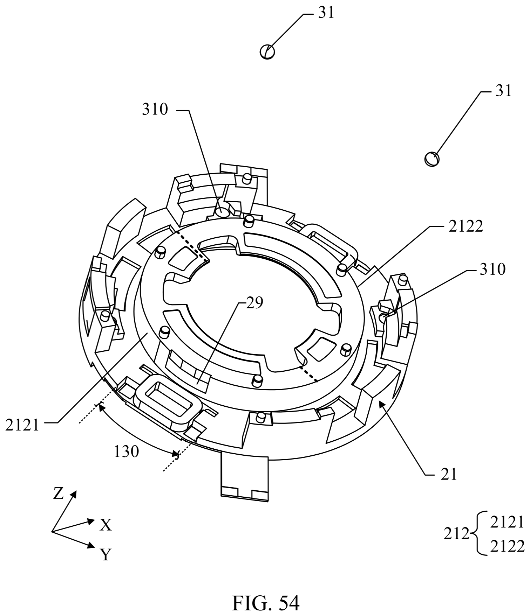

On this basis, as shown in FIG. 54, the side wall of the boss 212 of the fastening base 21 may include a first semi-ring side wall 2121 and a second semi-ring side wall 2122 that are connected, and the first semi-ring side wall 2121 and the second semi-ring side wall 2122 are spliced in a head-to-tail manner to form a complete side wall of the boss 212. A dashed line on the boss 212 in FIG. 54 is used as a boundary between the first semi-ring side wall 2121 and the second semi-ring side wall 2122. The dashed line is merely an example for describing division into the first semi-ring side wall 2121 and the second semi-ring side wall 2122, and does not constitute a limitation on a division manner of the first semi-ring side wall 2121 and the second semi-ring side wall 2122. In addition, the dashed line is not a structure that actually exists on the boss 212. For example, when the boss 212 is circular, arc lengths of the first semi-ring side wall 2121 and the second semi-ring side wall 2122 may be the same.

In addition, further as shown in FIG. 54, the variable aperture 20 further includes a second magnetic conductive sheet 29 and a first rolling part 31. The second magnetic conductive sheet 29 is disposed on the first semi-ring side wall 2121, and the second magnetic conductive sheet 29 is used for attraction with the magnet component 241. Because the second magnetic conductive sheet 29 is attached to a part of the side wall of the boss, for example, the first semi-ring side wall 2121, the second magnetic conductive sheet 29 may also be referred to as a lateral magnetic conductive sheet.

In addition, further as shown in FIG. 54, a vertical projection of the first opening 130 on the first semi-ring side wall 2121 overlaps a vertical projection of the second magnetic conductive sheet 29 on the first semi-ring side wall 2121. It can be learned from the foregoing that the first opening 130 may accommodate the coil 242, and the magnet component 241 is located on a side that is of the coil 242 and that faces the rotating carrier 22. Therefore, the magnet component 241 and the coil 242 are disposed in the Z direction. In this case, a part of the component 241 may also be located in the first opening 130. In this way, when the vertical projection of the first opening 130 on the first semi-ring side wall 2121 overlaps the vertical projection of the second magnetic conductive sheet 29 on the first semi-ring side wall 2121, the second magnetic conductive sheet 29 may be located near the magnet component 241, so that the second magnetic conductive sheet 29 may be more easily attracted by the magnet component 241.

In addition, further as shown in FIG. 54, the first rolling part 31 is disposed between the rotating carrier 22 and the bottom plate 211, the first rolling part 31 is located on a side on which the second semi-ring side wall 2122 is located, the rotating carrier 22 and the fastening base 21 are in contact with the first rolling part 31, and the rotating carrier 22 is rotatably connected to the fastening base 21 through the first rolling part 31. For example, a first rolling groove 310 configured to accommodate the first rolling part 31 may be disposed on the fastening base 21.

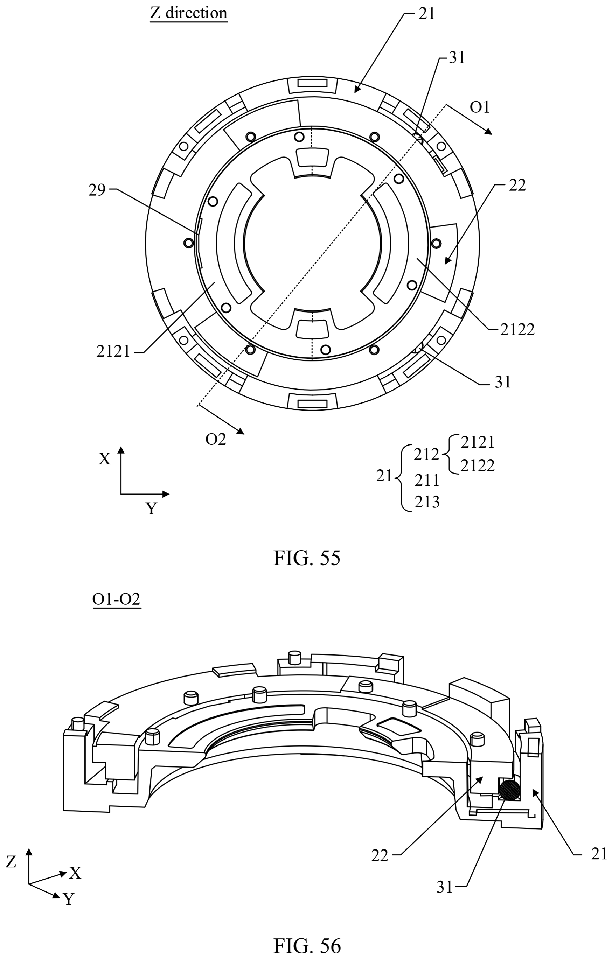

In this way, as shown in FIG. 55 (a top view obtained in the Z direction in FIG. 44), because the second magnetic conductive sheet 29 is disposed on the first semi-ring side wall 2121, when the second magnetic conductive sheet 29 and the magnet component 241 (as shown in FIG. 44) attract each other, the rotating carrier 22 moves in the Y direction toward a position of the second semi-ring side wall 2122 of the fastening base 21 (for example, toward the right). Because the first rolling part 31 is located on the side on which the second semi-ring side wall 2122 is located, that is, the second magnetic conductive sheet 29 and the first rolling part 31 may be located on two opposite sides of the boss 212, as shown in FIG. 56 (a sectional view obtained through cutting along the dashed line O1-O2 in FIG. 55), the rotating carrier 22 and the fastening base 21 may be in contact with the first rolling part 31, that is, the first rolling part 31 is in a state of zero fitting (or tight fitting) with both the rotating carrier 22 and the fastening base 21.

In this case, further as shown in FIG. 56, when the rotating carrier 22 is rotatably connected to the fastening base 21 through the first rolling part 31, because the rotating carrier 22 and the fastening base 21 may be in contact with the first rolling part 31, the rotating carrier 22 may always lean on the first rolling part 31 in a rotation process, and rotate relative to the fastening base 21, thereby improving stability of the rotating carrier 22 in the rotation process and consistency of the rotating carrier 22 rotating to various angles, and improving product reliability.

For example, the first rolling part 31 may include one ball or one roller. Alternatively, the first rolling part 31 may include a plurality of balls or a plurality of balls. For example, the first rolling part 31 includes a plurality of balls. The plurality of balls may be arranged in the thickness direction (that is, the Z direction) of the variable aperture 20.

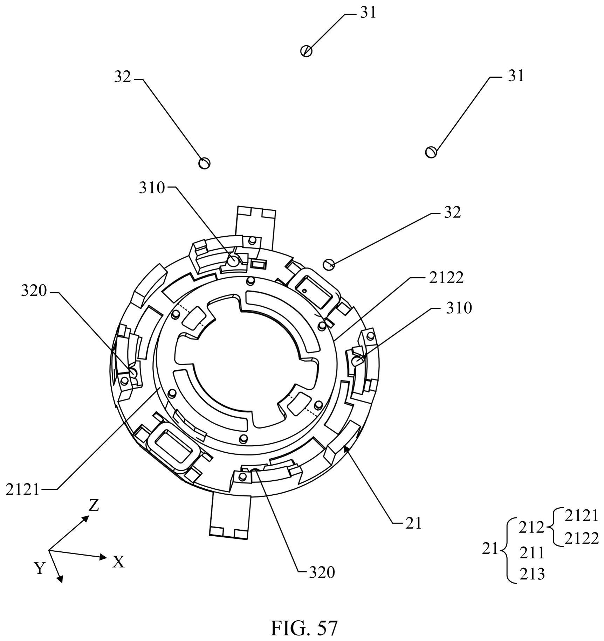

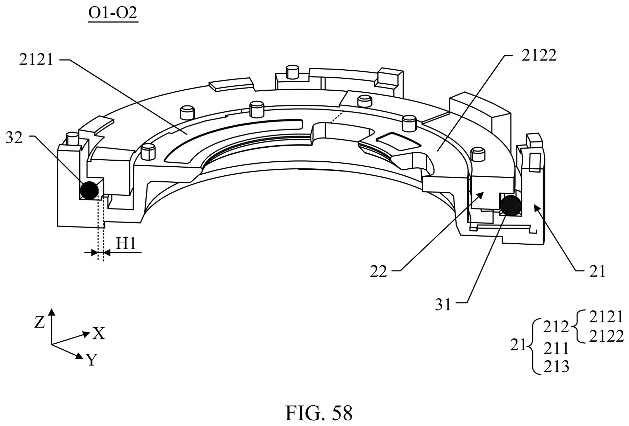

In addition, in some other embodiments of this application, the variable aperture 20 further includes a second rolling part 32 shown in FIG. 57. The second rolling part 32 may be disposed between the rotating carrier 22 (as shown in FIG. 44) and the bottom plate 211 of the fastening base 21, and the second rolling part 32 is located on a side on which the first semi-ring side wall 2121 is located. For example, a first rolling groove 320 configured to accommodate the second rolling part 32 may be disposed on the fastening base 21. There is an adjustment gap H1 shown in FIG. 58 (a sectional view obtained through cutting along the dashed line O1-O2 in FIG. 55) between the second rolling part 32 and the rotating carrier 22, and 30 µm≤H1≤70 µm.

It can be learned from the foregoing that, further as shown in FIG. 58, the second rolling part 32 and the second magnetic conductive sheet 29 are located on a same side of the boss 212. When the second magnetic conductive sheet 29 and the magnet component 241 (as shown in FIG. 44) attract each other, the rotating carrier 22 moves toward the position of the second semi-ring side wall 2122 of the fastening base. In this case, there may be the adjustment gap H1 between the second rolling part 32 located on the side on which the first semi-ring side wall 2121 is located and the rotating carrier 22.

In this way, in a process of performing a reliability test (such as a rolling test or a drop test) on the variable aperture 20 and a use process of the user, when the rotating carrier 22 has relatively large displacement in a horizontal plane (perpendicular to the optical axis of the variable aperture 20), a side that is of the rotating carrier 22 and that is close to the second rolling part 32 may be in contact with the second rolling part 32, so that the second rolling part 32 limits further displacement of the rotating carrier 22, thereby reducing a displacement amount of the rotating carrier 22. This avoids a phenomenon that the plurality of blades 23 slidably connected to the rotating carrier 22 are damaged because the blades 23 are pulled when the rotating carrier 22 has relatively large displacement.

For example, the second rolling part 32 may include one ball or one roller. Alternatively, the second rolling part 32 may include a plurality of balls or a plurality of balls. For example, the second rolling part 32 includes a plurality of balls. The plurality of balls may be arranged in the thickness direction (that is, the Z direction) of the variable aperture 20.

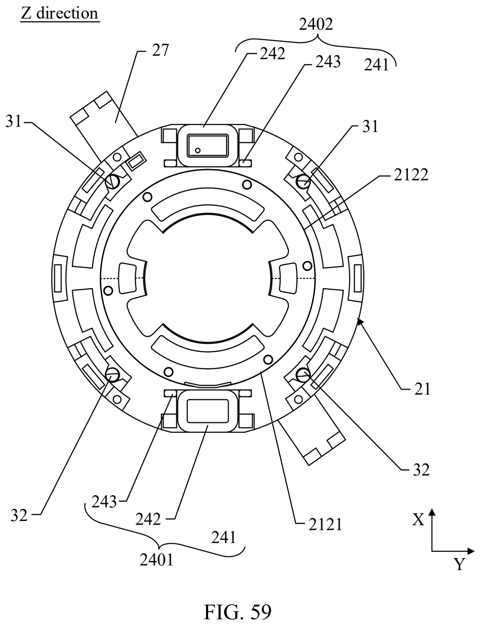

On this basis, as shown in FIG. 59 (a top view obtained in the Z direction in FIG. 44), the variable aperture 20 may include two drive components, two first rolling parts 31, and two second rolling parts 32. The two drive components are respectively a first third drive mechanism 2401 and a second third drive mechanism 2402, the first third drive mechanism 2401 is disposed on the side on which the first semi-ring side wall 2121 is located, and the second third drive mechanism 2402 is disposed on the side on which the second semi-ring side wall 2122 is located. The first third drive mechanism 2401 is located between the two second rolling parts 32. The second third drive mechanism 2402 is located between the two first rolling parts 31. In this way, the first third drive mechanism 2401 is disposed on the side on which the first semi-ring side wall 2121 of the boss 212 is located, and the second third drive mechanism 2402 is disposed on the side on which the second semi-ring side wall 2122 is located, so that the rotating carrier 22 can be evenly subject to a force in a rotation process.

In addition, the first third drive mechanism 2401 is disposed between the two second rolling parts 32, and a quantity of the second rolling parts 32 is increased, so that displacement of the rotating carrier 22 can be further limited in a process of performing a reliability test (such as a rolling test or a drop test) on the variable aperture 20 and a use process of the user, thereby effectively reducing a displacement amount of the rotating carrier 22. In addition, the second third drive mechanism 2402 is disposed between the two first rolling parts 31, and a quantity of first rolling parts 31 is increased, so that the rotating carrier 22 can be in contact with the first rolling parts 31 on both sides of the first third drive mechanism 2401, thereby helping further improve consistency, stability, and reliability of movement.

An example in which the variable aperture 20 has two drive components, that is, the first third drive mechanism 2401 and the second third drive mechanism 2402 (which may also be referred to as third drive mechanisms 24 disposed on two sides) is used for description above. In some other embodiments of this application, one third drive mechanism 24 (which may also be referred to as a third drive mechanism 24 disposed on one side) may be alternatively disposed.

It can be learned from the foregoing that, in FIG. 44, the magnet component 241 is connected to the rotating carrier 22 used as a stator. Based on this, in some embodiments of this application, the coil 242 may be indirectly or directly connected to the fastening base 21 used as a stator. The following describes a manner of connecting the coil 242 and the fastening base 21 by using an example.

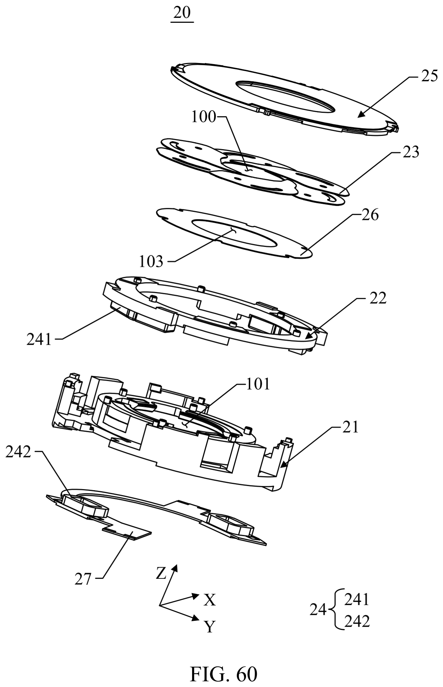

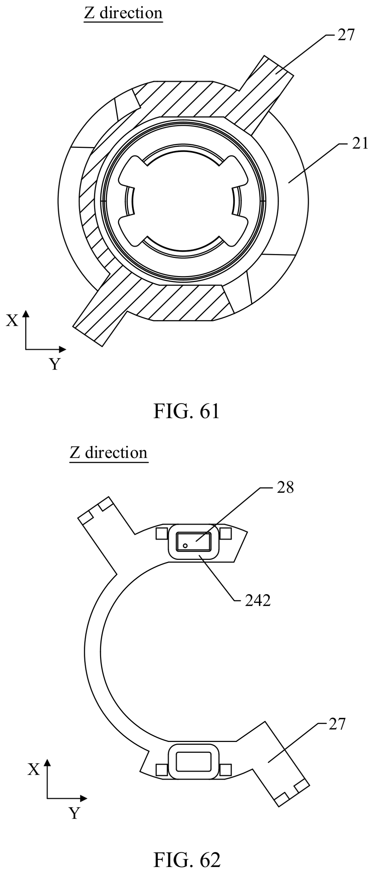

For example, as shown in FIG. 60, the variable aperture 20 may further include a flexible printed circuit (flexible printed circuit, FPC) 27, the FPC 27 is disposed on a side that is of the fastening base 21 and that is away from the blade 23, and the FPC 27 is connected to the fastening base 21. The coil 242 passes through the fastening base 21 and is disposed on a side that is of the FPC 27 and that faces the rotating carrier 22, and the coil 242 is connected to the FPC 27. For example, in an assembly process of the variable aperture 20, the coil 242 may be first assembled with the entire FPC 27, and then the FPC 27 on which the coil 242 is assembled is bonded to a lower surface (that is, a surface away from the cover plate 25) of the fastening base 21 by using a gel dispensing process. Based on this, the coil 242 may be indirectly connected to the fastening base 21 through the FPC 27. In this way, in comparison with that in a solution in which an FPC is bent into an arc around a periphery of a mover, the FPC 27 in this application does not need to be bent. As shown in FIG. 61 (a bottom view obtained in the Z direction in FIG. 60), the FPC 27 may be disposed as a flat plate structure parallel to the XY plane, so that a manufacturing process of the FPC 27 can be simplified.

In addition, it can be learned from the foregoing that, in a process in which the rotating carrier 22 rotates relative to the fastening base 21, the plurality of blades 23 may be driven to move, to adjust the hole diameter of the aperture hole 100 enclosed by the plurality of blades 23. Based on this, to control a rotation position of the rotating carrier 22 and implement precise control on the hole diameter of the aperture hole 100, the variable aperture 20 may further include a second drive chip (integrated circuit, IC) 28 shown in FIG. 62 (a top view obtained in the Z direction in FIG. 60), and the second drive chip 28 is configured to control the rotation position of the rotating carrier 22.

In some embodiments of this application, further as shown in FIG. 62, the second drive chip 28 may be electrically connected to the FPC 27, so that the second drive chip 28 is electrically connected to the circuit board 80 (as shown in FIG. 3) of the camera module 10 through the FPC 27. In this way, a processor on the circuit board 80 may transmit a control signal to the second drive chip 28, so that the second drive chip 28 can control the rotation position of the rotating shaft carrier. For example, the second drive chip 28 may be a Hall (Hall) chip. It can be learned from the foregoing that the coil 242 shown in FIG. 62 is connected to the FPC 27. Therefore, in some embodiments, both the coil 242 and the second drive chip 28 may be disposed on the FPC 27. For example, the second drive chip 28 is mounted (fastened) inside the coil 242, so that component layout space on the FPC 27 can be saved.

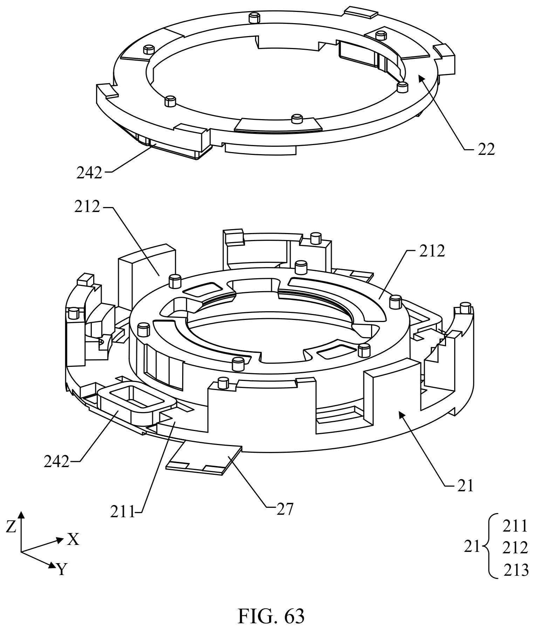

On this basis, as shown in FIG. 63, when the FPC 27 on which the coil 242 is disposed is connected to the lower surface of the fastening base 21, to reduce the thickness of the variable aperture 20, a coil mounting hole 123 (as shown in FIG. 44) that penetrates the bottom plate 211 may be provided on the bottom plate 211 of the fastening base 21, and the coil 242 may be disposed in the coil mounting hole 123, so that the coil 242 can be disposed through the fastening base 21. In this way, a thickness of the coil 242 overlaps a part of a thickness of the fastening base 21, thereby reducing the thickness of the variable aperture 20.

In addition, further as shown in FIG. 63, the coil 242 that needs power supply is disposed on the side that is of the FPC 27 and that faces the rotating carrier 22, and the coil 242 is connected to the FPC 27, so that the coil 242 is disposed opposite to the magnet component 241, and power is directly supplied to the coil 242 by using a metal trace on the FPC 27, thereby simplifying the electrical connection structure of the variable aperture 20.

Based on this, it can be learned from the foregoing that a lower surface (parallel to the XY plane) of the coil 242 is connected to the FPC 27, and an upper surface (parallel to the XY plane) of the magnet component 241 is connected to the rotating carrier 22. Therefore, the coil 242 and the magnet component 241 are disposed in a transverse direction (parallel to the XY plane) on a side that is of the rotating carrier 22 and that is away from the blade 23. Therefore, compared with that in a solution in which a coil and a magnet are disposed on a periphery of the rotating carrier 22, a size of the variable aperture 20 in the XY plane can be reduced.

In addition, the bottom plate 211 of the fastening base 21 is provided with the coil mounting hole 123 (as shown in FIG. 44) for accommodating the coil 242, and the side plate 213 of the fastening base 21 is provided with the first opening 130 (as shown in FIG. 44) for accommodating the magnet component 241. Therefore, in the Z direction shown in FIG. 63, the thickness of the coil 242 overlaps the thickness of the fastening base 21, and the thickness of the magnet component 241 overlaps the thickness of the fastening base 21, so that the thickness of the variable aperture 20 in the Z direction can be reduced.

In conclusion, the variable aperture 20 provided in embodiments of this application is a moving-magnet architecture in which the FPC 27 is attached to the bottom of the fastening base 21 and the coil 242 and the magnet component 241 are transversely arranged, and has performance of a small quantity of components, a simple structure and process, a small size, a light weight, good reliability, and low costs.

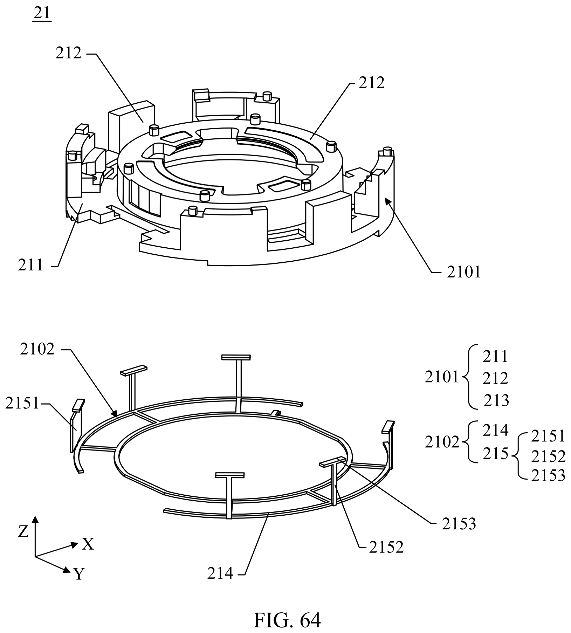

On this basis, to improve reliability of the variable aperture 20, in some embodiments of this application, the fastening base 21 may include a first plastic part 2101 and a first metal support 2102 that are shown in FIG. 64. A material of the first plastic part 2101 includes a plastic material, for example, polyester or polyethylene. The first plastic part 2101 may include the bottom plate 211, the boss 212, and the side plate 213. In addition, a material of the first metal support 2102 may include at least one metal element. For example, the first metal support 2102 may be a stainless steel support. The first metal support 2102 may include a first metal portion 214 and a second metal portion 215.

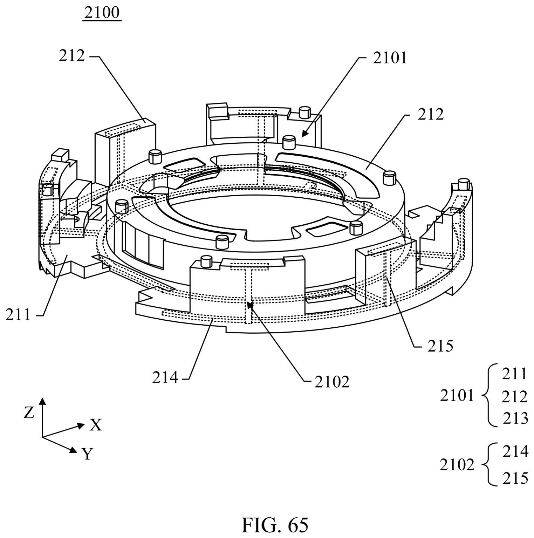

Based on this, as shown in FIG. 65, the first metal support 2102 may be embedded in the first plastic part 2101, and the first metal support 2102 and the first plastic part 2101 are connected to form a first integrated mechanical part 2100. In this way, the first integrated mechanical part 2100 may be formed by using an insert molding (insert molding) process. The first metal portion 214 may be located in the bottom plate 211, to strengthen rigidity of a part that is of the fastening base 21 and that is located on the bottom plate 211. The second metal portion 215 is disposed in the side plate 213, to strengthen rigidity of a part that is of the fastening base 21 and that is located on the side plate 213.

Because the fastening base 21 has the first metal support 2102, a mechanical strength of the fastening base 21 can be increased, and in a process of performing a reliability test (such as a rolling test or a drop test) on the variable aperture 20 and a use process of a user, when a collision occurs on the fastening base 21, a probability that the fastening base 21 is damaged can be reduced, thereby prolonging a service life of a product. It can be learned from the foregoing that the material of the first metal support 2102 may include stainless steel. In the following embodiments, a material of a metal part that is located in a plastic part and that is formed by using an insert molding process may also include the foregoing stainless steel.

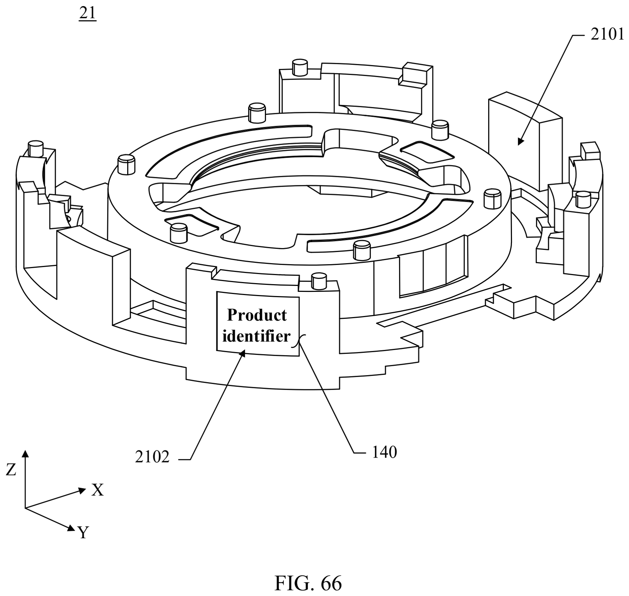

On this basis, as shown in FIG. 66, the first plastic part 2101 may have a first hollow zone 140, and a part of a surface of the first metal support 2102 may be exposed from the first hollow zone 140. For example, as shown in FIG. 64, the second metal portion 215 of the first metal support 2102 may include a metal plate 2151. At least a part of the metal plate 2151 may be exposed from the first hollow zone 140 in FIG. 66. An exposed surface of the metal plate 2151 is used to create a product identifier. In this way, the product identifier representing product-related information may be directly prepared on the first metal support 2102, and a steel sheet used to create and attach the product identifier does not need to be separately disposed, thereby reducing a quantity of components and simplifying a manufacturing process. For example, the product identifier may be a two-dimensional code, a digit, a letter, a character code, or the like. This is not limited in this application.

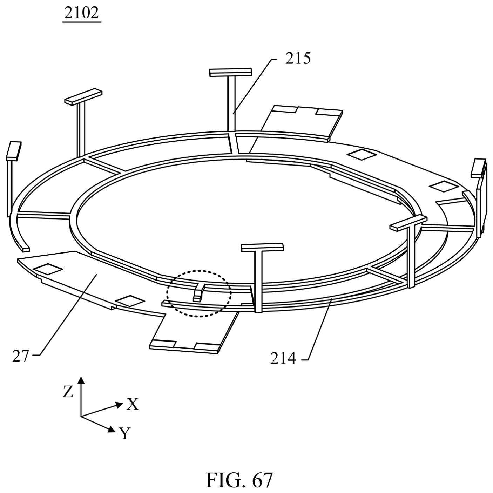

In addition, as shown in FIG. 67, the first metal support 2102 may be further grounded on the FPC 27. For example, a part (a part circled by a dashed line in FIG. 67) of the first metal portion 214 of the first metal support 2102 may be electrically connected to a copper exposure region (not shown in the figure) on the FPC 27 by using a conductive adhesive, to implement grounding of the first metal support 2102, thereby reducing electromagnetic interference. A material of the conductive adhesive is not limited in this application, provided that it can be ensured that the conductive adhesive can ground the first metal support 2102 on the FPC 27.

The foregoing describes a disposing manner of the coil 242 by using an example in which the coil 242 in the third drive mechanism 24 is disposed on the FPC 27, and the FPC 27 is connected to the bottom of the fastening base 21, so that the coil 242 is indirectly connected to the fastening base 21 through the FPC 27.

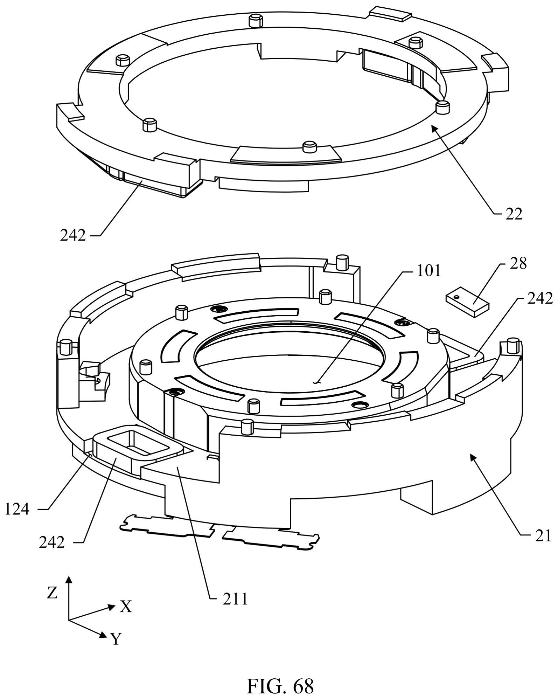

Alternatively, in some other embodiments of this application, as shown in FIG. 68, the coil 242 is directly disposed on the fastening base 21, and the coil 242 is connected to the fastening base 21. For example, a coil mounting groove 124 may be provided on the bottom plate 211 of the fastening base 21, the coil 242 may be located in the coil mounting groove 124, and a bottom of the coil mounting groove 124 may carry the coil 242. Similarly, the fastening base 21 used as a stator is in a static state relative to the rotating carrier 22 in a process of changing the hole diameter of the aperture hole 100 of the variable aperture 20. In this way, the coil 242 disposed on the fastening base 21 may be in a static state relative to the magnet component 241 disposed on the rotating carrier 22, so that the variable aperture 20 is still the foregoing moving-magnet variable aperture 20.

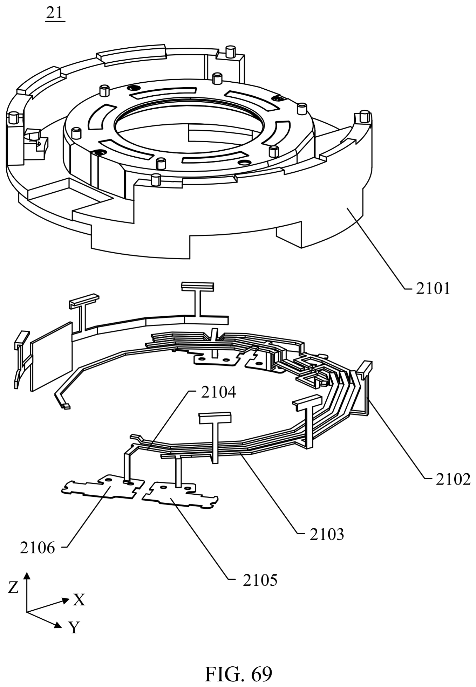

Similarly, the fastening base 21 shown in FIG. 68 may also be prepared by using the foregoing insert molding process. In this case, as shown in FIG. 69, the fastening base 21 may include a first plastic part 2101 and a first metal support 2102. Structures and technical effects of the first plastic part 2101 and the first metal support 2102 are the same as those described above, and details are not described herein again.

On this basis, further as shown in FIG. 68, the second drive chip 28 may be disposed in the coil 242. Based on this, in some embodiments of this application, an FPC electrically connected to the second drive chip 28 may not be disposed in the variable aperture 20. To electrically connect the circuit board 80 shown in FIG. 3 and the second drive chip 28, as shown in FIG. 69, the fastening base 21 may further include a metal ground trace 2103, a metal signal trace 2104, a metal ground terminal 2105, and a metal signal terminal 2106. Materials of the metal ground trace 2103, the metal signal trace 2104, the metal ground terminal 2105, and the metal signal terminal 2106 may be the same as or different from the material of the first metal support 2102. This is not limited in this application.

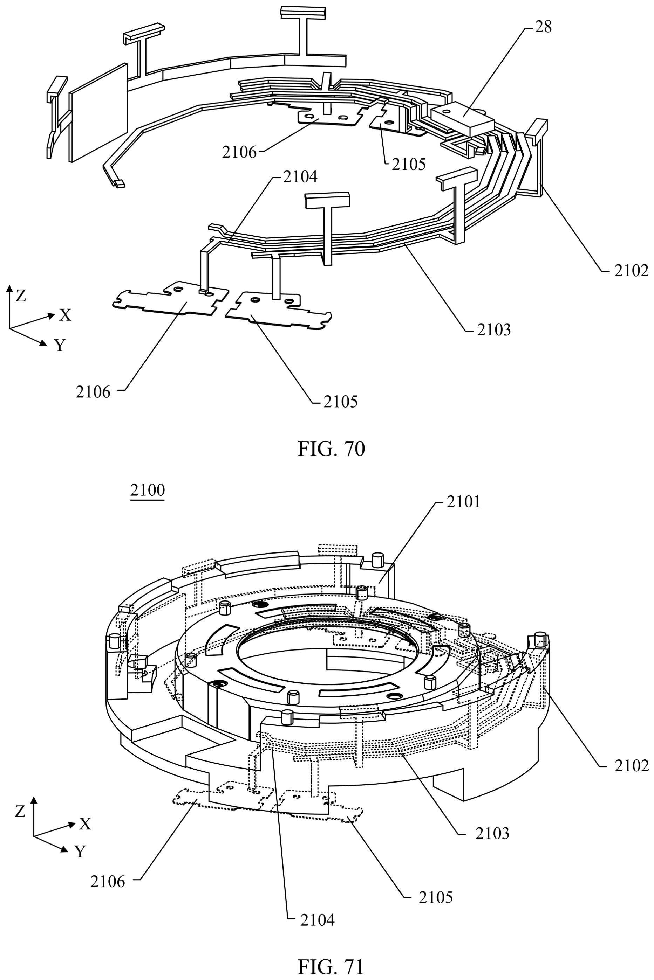

As shown in FIG. 70, the metal signal trace 2104 may be electrically connected to the second drive chip 28 and the metal signal terminal 2106, and the metal ground trace 2103 may be electrically connected to the second drive chip 28 and the metal ground terminal 2105. The metal signal terminal 2106 and the metal ground terminal 2105 may be electrically connected to the circuit board 80 shown in FIG. 3.

In this way, the metal ground trace 2103, the metal signal trace 2104, the metal ground terminal 2105, and the metal signal terminal 2106 may replace the FPC 27, so that a control signal sent by a processor on the circuit board 80 may be transmitted to the second drive chip 28 through the metal ground trace 2103, the metal signal trace 2104, the metal ground terminal 2105, and the metal signal terminal 2106. Quantities of metal ground terminals 2105 and metal signal terminals 2106 are not limited in this application. In FIG. 70, two metal ground terminals 2105 and two metal signal terminals 2106 are used as an example for description.

In addition, the metal ground terminal 2105 may be grounded on the circuit board 80 shown in FIG. 3. Therefore, further as shown in FIG. 70, the metal ground trace 2103 may be further electrically connected to the first metal support 2102, so that the first metal support 2102 may be grounded on the circuit board 80 through the metal ground trace 2103 and the metal ground terminal 2105.

In this case, as shown in FIG. 71, the first metal support 2102, the metal ground trace 2103, and the metal signal terminal 2106 are embedded in the first plastic part 2101, and the metal signal terminal 2106, the metal ground trace 2103, the first metal support 2102, and the first plastic part 2101 are connected to form a first integrated mechanical part 2100. Same as described above, the first integrated mechanical part 2100 may be formed by using an insert molding process. A technical effect of the first integrated mechanical part 2100 is the same as that described above, and details are not described herein again. At least a part of the metal ground terminal 2105 and the metal signal terminal 2106 is exposed outside the first plastic part 2101.

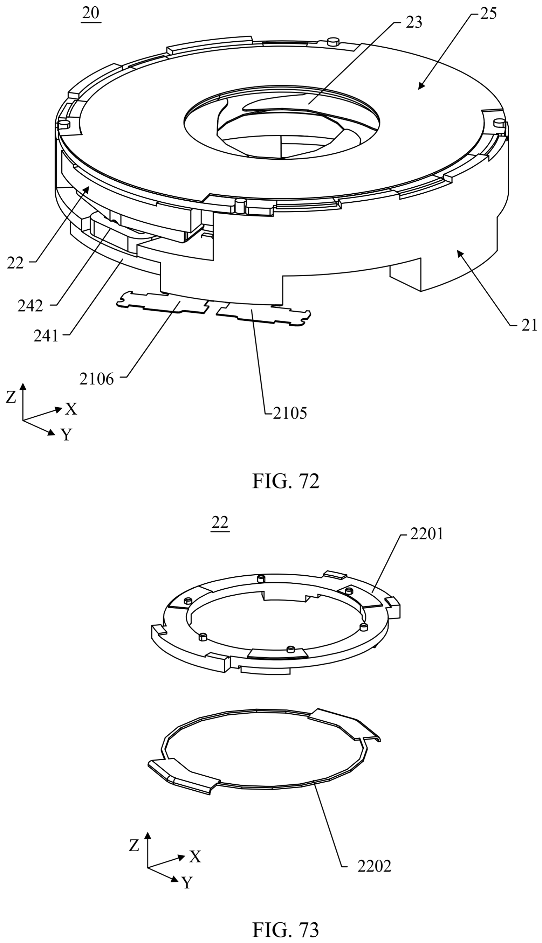

In this way, as shown in FIG. 72, components such as the rotating carrier 22, the magnet component 241, the coil 242, and the blade 23 are disposed in the accommodating space between the cover plate 25 and the fastening base 21 to form the variable aperture 20. The variable aperture 20 may be electrically connected to the circuit board 30 shown in FIG. 3 through the metal ground terminal 2105 and the metal signal terminal 2106 exposed outside the accommodating space, so that no FPC needs to be disposed inside the variable aperture 20, thereby simplifying a structure.

In conclusion, the foregoing describes a disposing manner of the coil 242 in the variable aperture 20 by using an example. In the variable aperture 20 shown in FIG. 4, the coil 242 is disposed on the FPC 27, and the FPC 27 is connected to the fastening base 21. In the variable aperture 20 shown in FIG. 72, no FPC needs to be disposed, and the coil 242 is directly connected to the fastening base 21. For any one of the foregoing variable apertures 20, the rotating carrier 22 may be rotatably connected to the fastening base 21. For ease of description, the variable aperture 20 having the FPC 27 shown in FIG. 4 is used as an example below for description.

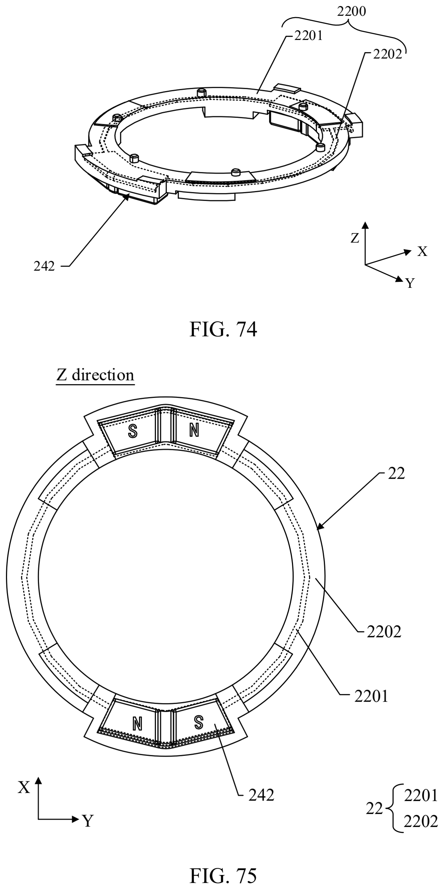

In some embodiments of this application, as shown in FIG. 73, the rotating carrier 22 may include a second plastic part 2201 and a second metal support 2202. Materials of the second plastic part 2201 and the second metal support 2202 may be obtained similarly, and details are not described herein again. As shown in FIG. 74, the second metal support 2202 is embedded in the second plastic part 2201, and the second metal support 2202 and the second plastic part 2201 are connected to form a second integrated mechanical part 2200.

Similarly, the second integrated mechanical part 2200 may be formed by using the foregoing insert molding process. Because the rotating carrier 22 has the second metal support 2202, a mechanical strength of the rotating carrier 22 can be increased, and in a process of performing a reliability test (such as a rolling test or a drop test) on the variable aperture 20 and a use process of the user, when a collision occurs on the rotating carrier 22, a probability that the rotating carrier 22 is damaged can be reduced, thereby prolonging a service life of a product.

In addition, further as shown in FIG. 74, the magnet component 241 and the second metal support 2202 are connected to each other and attract each other. In this way, for example, as shown in FIG. 75 (a bottom view obtained in the Z direction in FIG. 74), a part of the second metal support 2202 may be used as a bearing portion of the magnet component 241, and gel is dispensed on a side surface that is of the bearing portion and that faces the magnet component 241, so that the magnet component 241 is connected to the second metal support 2202.

On this basis, further as shown in FIG. 75, because the second metal support 2202 can be attracted by the magnet component 241, and there is a relatively large attraction force between the second metal support 2202 and the magnet component 241, the magnet component 241 can be prevented to a maximum extent from falling off. Therefore, reliability of a connection between the component and the second metal support 2202 is improved in this case. In addition, separate disposing of a steel sheet for connecting the rotating carrier 22 and the magnet component 241 may be avoided, thereby simplifying a manufacturing process.

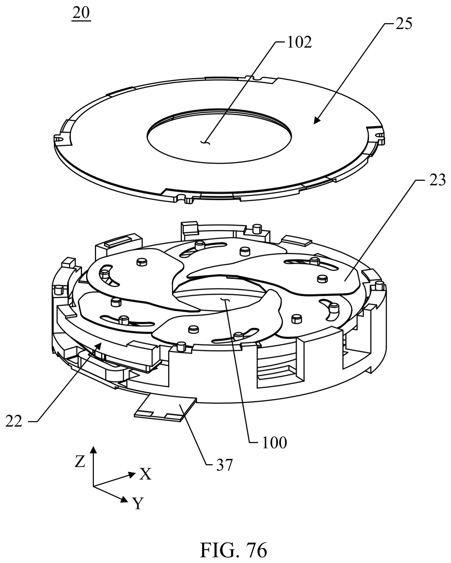

In some embodiments of this application, the variable aperture 20 further includes a cover plate 25 shown in FIG. 76. The cover plate 25 is disposed on a side that is of the plurality of blades 23 and that is away from the rotating carrier 22, and the cover plate 25 covers the fastening base 21. A second light transmitting hole 102 is provided on the cover plate 25. When the cover plate 25 covers the fastening base 21, the second light transmitting hole 102 may be in communication with the aperture hole 100.

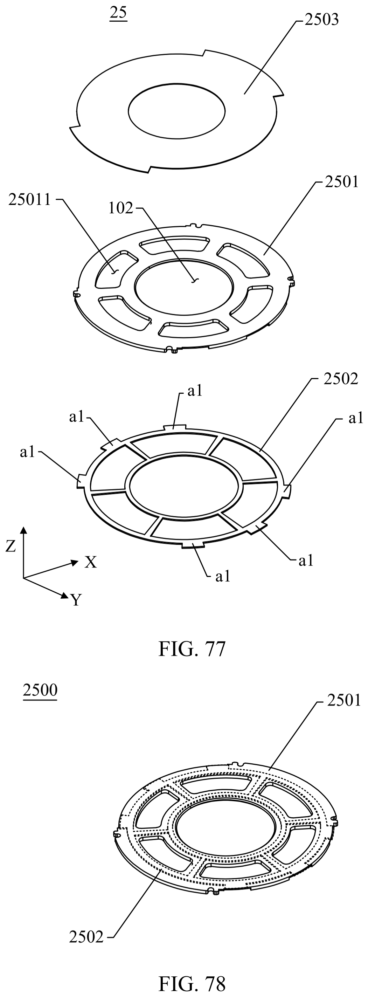

In addition, in some embodiments of this application, as shown in FIG. 77, the cover plate 25 may include a third plastic part 2501, a third metal support 2502, and a first soma 2503 (soma). Materials of the third plastic part 2501 and the third metal support 2502 may be obtained similarly, and details are not described herein again. As shown in FIG. 78, the third metal support 2502 is embedded in the third plastic part 2501, and the third metal support 2502 and the third plastic part 2501 are connected to form a third integrated mechanical part 2500.

Similarly, the third integrated mechanical part 2500 may be formed by using the foregoing insert molding process. Because the cover plate 25 has the third metal support 2502, a mechanical strength of the cover plate 25 can be increased, and in a process of performing a reliability test (such as a rolling test or a drop test) on the variable aperture 20 and a use process of a user, when a collision occurs on the cover plate 25, a probability that the cover plate 25 is damaged can be reduced, thereby prolonging a service life of a product.

In some embodiments of this application, further as shown in FIG. 77, the third metal support 2502 has a plurality of hollow portions 25011 that penetrate the third metal support 2502, and the hollow portions 25011 are disposed on a periphery of the second light transmitting hole 102. In this way, the second light transmitting hole 102 is in communication with the aperture hole 100, and the second light transmitting hole 102 may be used to enable external light to enter the aperture hole 100 through the second light transmitting hole. In addition, the plurality of hollow portions 25011 are disposed on the third metal support 2502, so that compared with that of a cover plate 25 that is made of metal as a whole, a weight of the entire third metal support 2502 can be reduced, thereby reducing a weight of the cover plate 25 and a weight of the entire variable aperture 20.

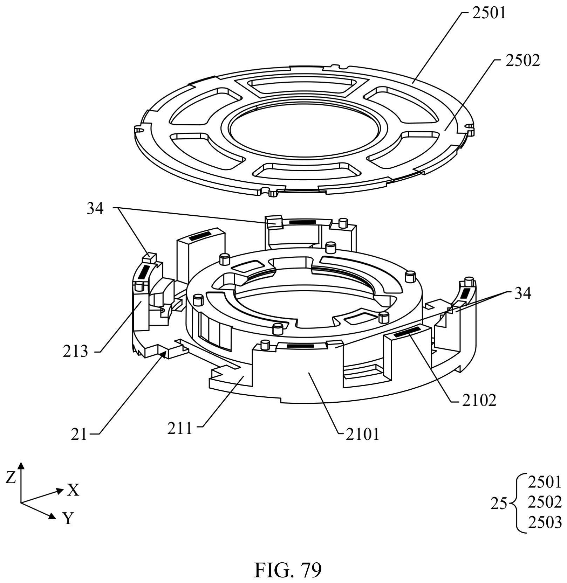

In addition, as shown in FIG. 79, the third metal support 2502 is connected to the first metal support 2102. For example, the third metal support 2502 in the cover plate 25 may be connected to the first metal support 2102 in the fastening base 21 through welding, so that reliability of a connection between the cover plate 25 and the fastening base 21 can be improved, and a probability that the cover plate 25 falls off can be reduced.

In some embodiments of this application, a plurality of welding positions a1 (as shown in FIG. 77, six welding positions a1 are used as an example) may be provided on the cover plate 25, and the plurality of welding positions a1 may be provided around the aperture hole 100. In addition, as shown in FIG. 64, the second metal portion 215 of the first metal support 2102 may further include a plurality of metal rods 2152 and a plurality of welding portions 2153, and one metal rod 2152 is connected to one welding portion 2153. When the cover plate 25 has six welding positions a1 (as shown in FIG. 79), the first metal support 2102 may have six metal rods 2152 and six welding portions 2153. In this case, one welding portion 2153 of the first metal support 2102 may be welded at one welding position a1 of the cover plate 25, thereby improving connection stability between the cover plate 25 and the fastening base 21. In addition, a riveting process and a gel dispensing process may be avoided, and a process flow of the motor 41 is reduced while reliability strength is enhanced, thereby reducing overall costs.

On this basis, further as shown in FIG. 79, after the third metal support 2502 is welded to the first metal support 2102, the third metal support 2502 may be electrically connected to the first metal support 2102, so that the third metal support 2502 may be grounded on the FPC 27 (as shown in FIG. 76) through the first metal support 2102.

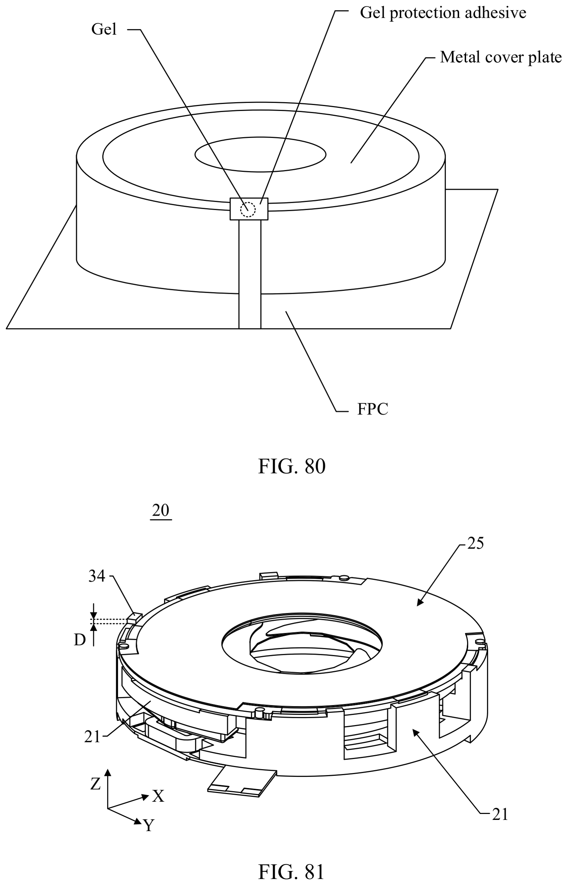

In this way, a manufacturing process for grounding of the cover plate 25 may be simplified. In a related technology, as shown in FIG. 80, a metal cover plate mainly including a steel plate needs to be electrically connected to a lead-out part of an FPC in a gel dispensing manner for grounding, and then a gel dispensing position is covered with a gel protection adhesive. Compared with the related technology, in this application, only the third metal support 2502 in the cover plate 25 shown in FIG. 79 needs to be electrically connected to the first metal support 2102 in the fastening base 21, for example, through welding or gel dispensing, so that the lead-out part of the FPC and two processes of a gel dispensing layer and the gel protection adhesive for electrically connecting the lead-out part of the FPC and the metal cover plate do not need to be additionally disposed, thereby simplifying a structure, reducing a manufacturing process, and reducing costs of the variable aperture 20.

Alternatively, in some other embodiments of this application, the third metal support 2502 in the cover plate 25 shown in FIG. 79 and the first metal support 2102 in the fastening base 21 may be grounded through gel dispensing (for example, silver gel dispensing) or the like.

In addition, further as shown in FIG. 77, the first soma 2503 is stacked on a side that is of the third integrated mechanical part 2500 (including the third plastic part 2501 and the third metal support 2502) and that is away from the blade 23 (as shown in FIG. 76), and the first soma 2503 is located on a top surface of the variable aperture 20. The first soma 2503 may block a part of a structure of the blade 23 below the cover plate 25, so that a side surface that is of the first soma 2503 and that is away from the third integrated structure is used as a user-visible appearance surface, thereby achieving an effect of decoration and improving appearance quality and appearance fineness, increasing a control area of a product appearance to a maximum extent, and meeting an industrial design (industrial design, ID) requirement.

In addition, the third metal support 2502 in the cover plate 25 is located in the third plastic part 2501, and the cover plate 25 is disposed on a side that is of the plurality of blades 23 and that is away from the rotating carrier 22. In this way, in a rotation process of the blade 23, a component that is directly in contact with the blade 23 and rubs the blade 23 is the third plastic part 2501 in the cover plate 25. Compared with a surface of a metal material, a surface of the third plastic part 2501 may have a relatively small friction coefficient, so that a friction force between the blade 23 and the third plastic part 2501 can be reduced, thereby further reducing a probability of wear (for example, a whitening phenomenon) of the blade 23 in a reliability test or use process.

In some embodiments of this application, the second soma 26 in FIG. 60, the first soma 2503 in FIG. 77, and the blade 23 in FIG. 76 may use a same material. A specular reflectance G (Gloss) and an optical density value OD of the material, and an L value, an a value, and a b value in a color triplet of the material may be respectively as follows: R≤0.3%; OD≥5.0; L≤8; |a|≤1; and |b|≤1.

The specular reflectance G may be tested by using a multi-angle gloss meter (for example, tested by using a common visual angle of 60°). A lower specular reflectance G indicates being more matte. A smaller L value indicates a higher blackness. The a value and the b value indicate chroma indexes, and represent color cast degrees. A larger a value and a larger b value indicate a deeper hue. In addition, a larger optical density value OD indicates a lower transmittance and a higher absorption rate. When the optical density value OD is greater than 5, the transmittance is far less than 1%.

In this way, when the specular reflectance G and the optical density value OD of the material of the second soma 26, the first soma 2503, and the blade 23, and the L value, the a value, and the b value in the color triplet of the material may be respectively as follows: R≤0.3%; OD≥5.0; L≤8; |a|≤1; and |b|≤1, the material of all of the second soma 26, the first soma 2503, and the blade 23 may be a super-black material, so that in a moving process of the blade 23, the user can see that colors and glosses of parts of the first soma 2503, the second soma 26, and the blade 23 are consistent, thereby reducing a probability of a color difference between the three components and improving appearance quality.

In addition, when the material used for all of the second soma 26, the first soma 2503, and the blade 23 is the super-black material, the super-black material has a relatively good blackness, meets an appearance design requirement, and has relatively good wear resistance performance. Alternatively, the second soma 26, the first soma 2503, and the blade 23 may use a base material, and a surface of the base material is coated with or attached with the super-black material, so that an appearance consistency requirement can also be met.

In addition, mechanical performance of the same material used for the second soma 26, the first soma 2503, and the blade 23 may meet the following requirement: modulus≥3000 MPa, yield strength/break strength≥80 MPa (if there is no significant yield phenomenon, only the break strength needs to be focused on), and elongation at break≥10%. In this way, in a reliability test process, two or five rounds of drop tests can be passed, and 500 roller tests can be passed. When the roller test is performed on the variable aperture 20 more than 1000 times, there is a specific risk. In addition, a service life of the variable aperture 20 may reach 250,000 times.

In some embodiments of this application, as shown in FIG. 81, the fastening base 21 may further include an anti-collision structure 34. The anti-collision structure 34 may be disposed around a periphery of the rotating carrier 22, and protrude from a surface that is of the cover plate 25 and that is away from the blade 23. For example, a height D of the anti-collision structure 34 may be about 0.08 mm. For example, the anti-collision structure is shown in FIG. 79. The anti-collision structure 34 may be disposed on a side that is of the side plate 213 of the fastening base 21 and that is away from the bottom plate 211, and the fastening base 21 may have four anti-collision structures 34. A quantity of anti-collision structures 34 is not limited in this application.

In this way, a part of the fastening base 21 that is around the periphery of the rotating carrier 22 and that protrudes from the cover plate 25, for example, the anti-collision structure 34, may be in contact with a lens or another decorative component that is on the rear housing 03 (as shown in FIG. 1) of the electronic device 01 and that covers the camera module 10, so that in a product test (for example, a rolling reliability test) process or a use process of the user, an appearance defect caused by wear of a top surface of the cover plate 25 when direct contact friction occurs between the cover plate 25 and the lens or the another apparatus component can be reduced, thereby improving an appearance, a service life, and reliability of the product.

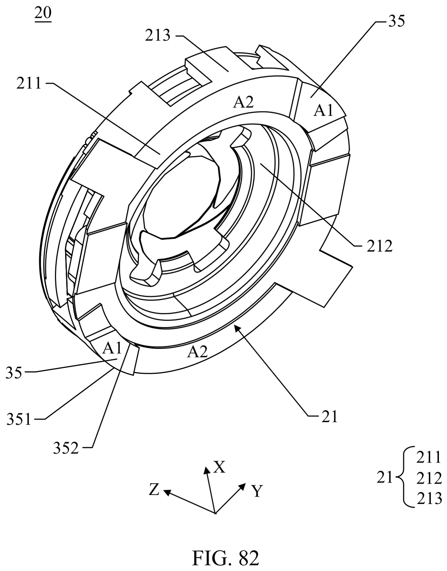

In addition, it can be learned from the foregoing that the variable aperture 20 may be connected to the lens assembly 40 in FIG. 3. Based on this, to improve reliability of a connection between the variable aperture 20 and the lens assembly 40, in some embodiments of this application, as shown in FIG. 82, the fastening base 21 further includes a bonding structure 35. The bonding structure 35 may be disposed on a surface that is of the bottom plate 211 of the fastening base 21 and that is away from the side plate 213. Both a bottom surface A1 of the bonding structure 35 and a surface A2 that is of the bottom plate 211 and that is away from the side plate 213 may be connected to the lens assembly 40 located below the variable aperture 20.

In some embodiments, a protrusion is disposed on a side that is of the variable aperture and that is close to the lens assembly, a groove is provided on the lens assembly, and the protrusion matches the groove.

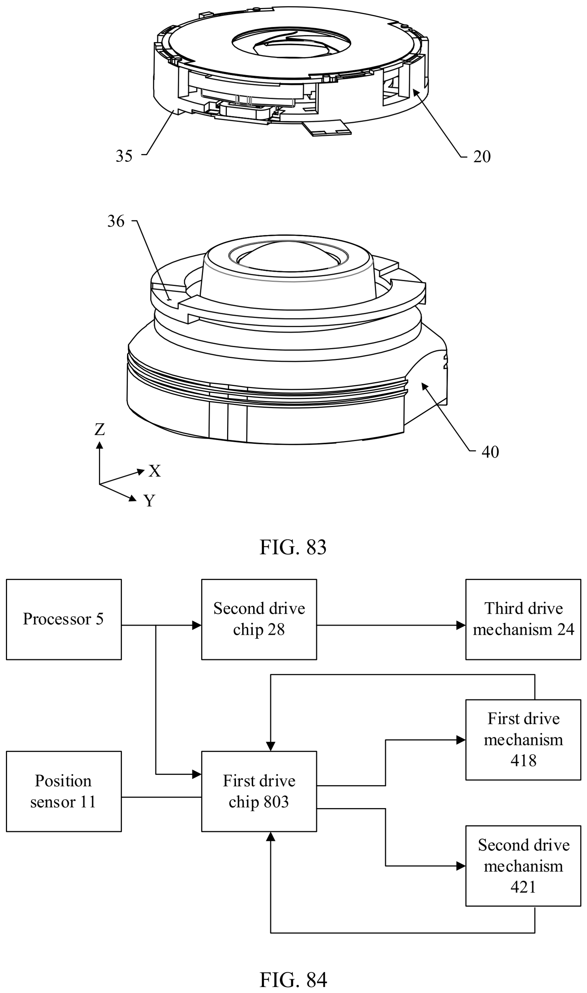

In this way, surfaces (that is, the surfaces A1 and A2 of the fastening base 21) that are of the variable aperture 20 and that are connected to the lens assembly 40 may be uneven surfaces. On this basis, as shown in FIG. 83, the lens assembly 40 may have a bonding groove 36 that fits the bonding structure 35. Therefore, a surface that is of the lens assembly 40 and that is connected to the variable aperture 20 may also be an uneven surface that matches the foregoing surfaces A1 and A2, so that when the variable aperture 20 is bonded to the lens assembly 40, stability of the connection between the variable aperture 20 and the lens assembly 40 can be improved.

For example, further as shown in FIG. 82, a vertical projection of the bonding structure 35 on the bottom plate 211 is in a shape of a sector, the sector has a first arc-shaped edge 351 and a second arc-shaped edge 352, and an arc length of the first arc-shaped edge 351 may be greater than an arc length of the second arc-shaped edge 352. The first arc-shaped edge 351 is provided farther away from the boss 212 than the second arc-shaped edge 352. In this case, the bonding structure 35 may be a dovetail structure. As shown in FIG. 83, the bonding groove 36 that is of the lens assembly 40 and that fits the bonding structure 35 may be a dovetail groove that matches the dovetail structure.

Based on this, when the camera module 10 works, the variable aperture 20 is in a horizontal plane (a surface perpendicular to the optical axis of the variable aperture 20), and the bonding structure 35 and the bonding groove 36 that fit each other and that are of a dovetail shape can prevent cutting in the horizontal plane in both the X direction and the Y direction. In addition, in a rotation direction of the blade 23 in the variable aperture 20, a contact area between a side wall of the dovetail structure and the dovetail groove is relatively large, and the variable aperture 20 may be effectively limited, to limit a position of the variable aperture 20.

The structure of the camera module is described in the foregoing embodiments. The following describes, with reference to FIG. 84, FIG. 85, and FIG. 86, a circuit and an application scenario that are related to the camera module in the electronic device.

As shown in FIG. 84, the electronic device further includes a processor 5, and the camera module 10 is electrically connected to the processor 5.

Refer to FIG. 39. The camera module 10 includes a module circuit board 80, and the module circuit board 80 is electrically connected to the processor 5, for example, through a third FPC 804.

In some embodiments, the processor 5 may include one or more processing units. For example, the processor may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

In this application, the processor 5 may be a microprocessor. The processor 5 is configured to receive and process an electrical signal that is from the camera module and that includes image information. The processor 5 may calculate a lens movement amount based on a lens position, and control, based on the lens movement amount, to drive a lens of the camera module to move.

The processor 5 is electrically connected to a drive chip, and may separately control, by using the drive chip, the first drive mechanism 418, the second drive mechanism 421, and the third drive mechanism 24 to work, to implement the foregoing control functions of image stabilization, focusing, and adjusting an amount of incident light.

As shown in FIG. 39, the first drive chip 803 is disposed on the module circuit board 80. For example, both the first drive mechanism 418 and the second drive mechanism 421 are electrically connected to the first drive chip 803, and the first drive chip 803 is electrically connected to the processor 5.

Refer to FIG. 33 to FIG. 39. The first drive mechanism 418 is electrically connected to the first FPC 61 through the first conductive lead 621, and is electrically connected to the first drive chip 803 through the first FPC 61. The second drive mechanism 421 is electrically connected to the first drive chip 803 through the second conductive lead 63.

In this way, the first drive chip 803 may control the first drive mechanism 418 and the second drive mechanism 421.

During working, the first drive chip may apply a first current to the first drive mechanism, so that the first drive mechanism drives the first support and the lens assembly to move along the optical axis of the lens assembly.

The first drive chip may further apply a second current to the second drive mechanism, so that the second drive mechanism drives the first support, the second support, and the lens assembly to move along a plane perpendicular to the optical axis of the lens assembly.

In addition, as shown in FIG. 34, the electronic device further includes the position sensor 11. The position sensor 11 is electrically connected to the first drive chip 803, the position sensor 11 is configured to detect a position of the second support 414 relative to the base 413, and the first drive chip 803 is configured to control the second drive mechanism 421 based on position information detected by the position sensor 11.

A structure of the position sensor 11 is not limited in embodiments of this application. The position sensor 11 includes, for example, a Hall sensor and a gyroscope.

The first drive chip 803 is electrically connected to the position sensor 11. The first drive chip 803 may obtain measured data of the position sensor 11. The measured data includes, for example, a jitter amount and a jitter direction of the camera module that are measured by the gyroscope, and current pose data of the camera module that is measured by the Hall sensor. The first drive chip 803 determines target adjustment data of the second support through calculation based on the obtained jitter amount, the obtained jitter direction, and the obtained current pose data of the second support, and controls a second support adjustment apparatus to adjust a pose of the second support based on the target adjustment data, to implement image stabilization shooting.

Next, refer to FIG. 38. The camera module further includes the second drive chip 28. The second drive chip 28 is electrically connected to the processor 5, the second drive chip 28 is electrically connected to the third drive mechanism, and the second drive chip 28 is configured to control the third drive mechanism 24.

The third drive mechanism 24 is electrically connected to the second drive chip 28, the second drive chip 28 is electrically connected to the second FPC 27, a first end of the second spring arm 58 is connected to the second FPC 27, and a second end of the second spring arm 58 is electrically connected to the first FPC 61 through the third conductive lead 622, so that the second drive chip 28 is electrically connected to the module circuit board 80 through the second FPC 27, the second spring arm 58, the third conductive lead 622, and the first FPC 61.

In this way, the second drive chip 28 may control the third drive mechanism 24.

During working, the second drive chip 28 may apply a third current to the third drive mechanism, so that the third drive mechanism drives the rotating carrier of the variable aperture to rotate relative to the fastening base.

In an optional implementation, a Hall sensor is integrated into the second drive chip 28.

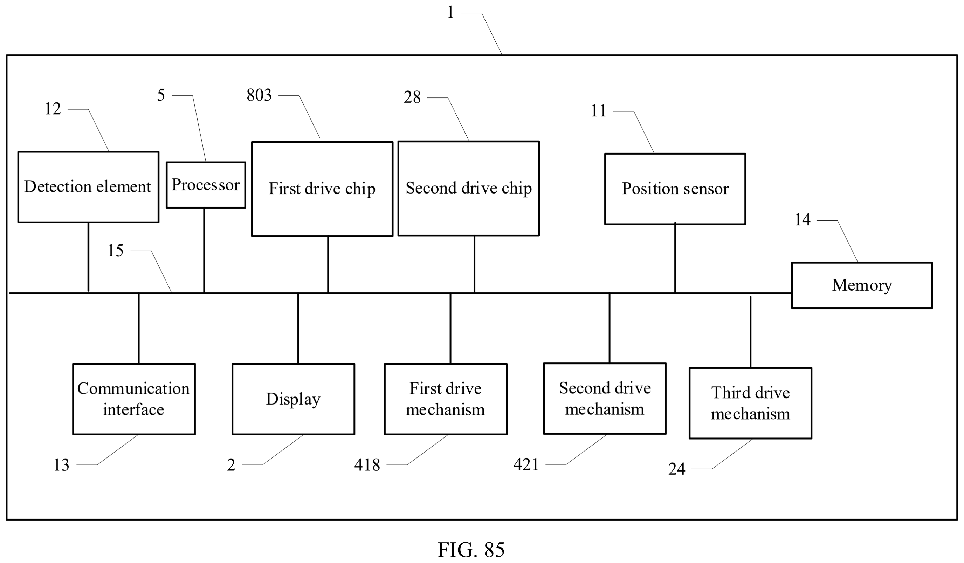

FIG. 85 is a block diagram of a structure of an electronic device according to an embodiment of this application. Refer to FIG. 85. The electronic device 1 further includes a communication bus 15, at least one communication interface 13, and a memory 14. It may be understood that FIG. 85 is merely an example of the electronic device 1, and does not constitute a limitation on the electronic device 1. The electronic device 1 may include more or fewer components than those shown in FIG. 85, or may combine some components, or have different components. For example, the electronic device 1 may further include an input/output device, a network access device, and the like.

The position sensor includes a gyro (gyro) sensor and a Hall sensor (Hall sensor).

The electronic device further includes an interface for external memory, an internal memory, a universal serial bus (universal serial bus, USB) interface, a charging management module, a power management module, a battery, an antenna, a mobile communication module, a wireless communication module, an audio module, a speaker, a receiver, a microphone, a headset jack, a sensor module, a button, a camera, and the like. The sensor module may include a pressure sensor, a gyro sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

The processor 5 is communicatively connected to the at least one communication interface 13, the memory 14, the display 2, and the control circuit through the communication bus 15. The processor 5 may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field-programmable gate array (Field-Programmable Gate Array, FPGA) or another programmable logic device, a discrete gate or a transistor logic device, a discrete hardware component, or the like. The general-purpose processor may be a microprocessor, or the processor may be any conventional processor, or the like. The processor is a control center of the electronic device 1, and is connected to various parts of the entire electronic device 1 through various interfaces and lines.

The communication bus 15 may include a path for transmitting information between the foregoing components.

The communication interface 13 is any apparatus such as a transceiver, and is configured to communicate with another device or a communication network, such as the Ethernet, a radio access network (radio access network, RAN), or a wireless local area network (wireless local area network, WLAN).

The memory 14 may be configured to store a computer program and/or a module. The processor 5 runs or executes the computer program and/or the module stored in the memory 14 and invokes data stored in the memory 14, to implement various functions of the electronic device 1. The memory 14 may mainly include a program storage area and a data storage area. The program storage area may store an operating system, an application required by a plurality of functions (such as a sound playing function and an image playing function), and the like. The data storage area may store data (such as audio data or a phone book) created based on use of the device 1, and the like. In addition, the memory 14 may include a high-speed random access memory, and may further include a nonvolatile memory, for example, a hard disk, a memory, a plug-in hard disk, a smart media card (Smart Media Card, SMC), a secure digital (Secure Digital, SD) card, a flash card (Flash Card), a plurality of disk storage devices, a flash memory device, or another volatile solid-state storage device. The memory 14 may exist independently and is connected to the processor 5 by using the communication bus 15. The memory 14 may be alternatively integrated with the processor 5.

During specific implementation, in an embodiment, the processor 5 may include one or more CPUs, for example, a CPU 0 and a CPU 1.

During specific implementation, in an embodiment, the electronic device 1 may include a plurality of processors, for example, the processor 5 in FIG. 85. Each of these processors may be a single-core (single-CPU) processor, or may be a multi-core (multi-CPU) processor. The processor herein may be one or more devices, circuits, and/or processing cores configured to process data (for example, computer program instructions).

It should be understood that function implementation of the foregoing system is described by using only division into the foregoing functional modules as an example. In actual application, the foregoing functions may be allocated to different functional modules for implementation based on a requirement. That is, an internal structure of the device is divided into different functional modules to implement all or some of the functions described above. In addition, the apparatus provided in the foregoing embodiments pertain to a same concept as the method embodiments. For a specific implementation process of the apparatus, refer to the method embodiments. Details are not described herein again.

In some embodiments of this application, the processor 5 may control a drive mechanism to work in response to a trigger operation input by a user. The following describes an example of a specific case in which the processor 5 of the electronic device 1 determines that the trigger operation input by the user is received.

As shown in FIG. 85, the electronic device 1 further includes, for example, a detection element 12 electrically connected to the processor 5. The detection element 12 is configured to detect a trigger operation input by the user. The processor 5 is configured to control the first drive chip 171 in response to the trigger operation of the user, to implement automatic focusing or image stabilization. Alternatively, the processor 5 may control the second drive chip 172 in response to the trigger operation of the user, to adjust an amount of incident light.

In some implementations, the trigger operation input by the user includes a trigger operation used to start a camera. For example, the trigger operation of the user includes a tap trigger, a voice trigger, or an action trigger.

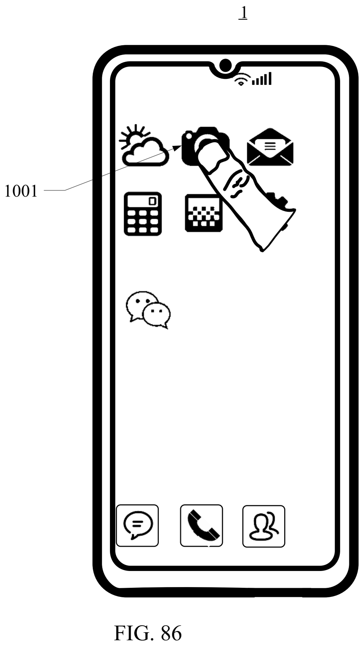

In an implementation of embodiments of this application, as shown in FIG. 86, an example in which the electronic device is a mobile phone is used for description in this case. As shown in FIG. 86, when a camera application corresponding to the camera module is installed on the electronic device shown in this embodiment, a first icon 1001 of the camera application may be displayed in an interface of the electronic device 1. The camera application includes application software that can use the camera module, for example, WeChat or QQ. The detection element is, for example, a display of the electronic device. As shown in FIG. 86, when the display of the electronic device detects that the first icon 1001 of the camera application receives a tap trigger event input by the user, the processor may control, in response to the tap operation, the camera module 10 to implement the foregoing control functions of image stabilization, focusing, and adjusting an amount of incident light.

It should be noted that, for brief description, the foregoing embodiments are expressed as a series of action combinations. However, a person skilled in the art should appreciate that this application is not limited to the described order of the actions, because according to this application, some steps may be performed in other orders or simultaneously.

In the foregoing embodiments, descriptions of the embodiments have respective focuses. For a part that is not described in detail in an embodiment, refer to related descriptions in other embodiments.

The steps of the method in embodiments of this application may be adjusted in sequence, combined, or deleted based on an actual requirement.

The foregoing descriptions are merely specific implementations of this application. However, the protection scope of this application is not limited thereto. Any change or replacement within the technical scope disclosed in this application shall fall within the protection scope of this application. Therefore, the protection scope of this application shall be subject to the protection scope of the claims.

## Claims

1. A camera module (10), comprising a base (413), a first support (415), a second support (414), a lens assembly (40), a variable aperture (20), a first drive mechanism (418), a second drive mechanism (421), and a third drive mechanism (24), wherein
both the first support (415) and the second support (414) are disposed on the base (413), and the second support (414) is sleeved on an outer side of the first support (415);
the first support (415) has a cavity, the lens assembly (40) is disposed in the cavity, and an optical axis of the lens assembly (40) is parallel to a central axis of the cavity;
the variable aperture (20) is disposed on a side that is of the lens assembly (40) and that is away from the base (413), and the third drive mechanism (24) is connected to the variable aperture (20);
the first drive mechanism (418) is disposed between the first support (415) and the second support (414), and the first drive mechanism (418) is configured to drive the first support (415) and the lens assembly (40) to move along the optical axis of the lens assembly (40); and
the second drive mechanism (421) is disposed between the second support (414) and the base (413), the second drive mechanism (421) is configured to drive the first support (415), the second support (414), and the lens assembly (40) to move along a plane perpendicular to the optical axis of the lens assembly (40), the second drive mechanism (421) comprises an SMA wire (4212), and the second support (414) is connected to the base (413) through the SMA wire (4212).

2. The camera module (10) according to claim 1, wherein the lens assembly (40) comprises a first side surface (4001) and a second side surface (4002), and a radian of the first side surface (4001) is less than a radian of the second side surface (4002).

3. The camera module (10) according to claim 2, wherein the first side surface (4001) is a plane, and the second side surface (4002) is an arc-shaped surface.

4. The camera module (10) according to claim 2 or 3, wherein a shape of the first support (415) fits a shape of the lens assembly (40).

5. The camera module (10) according to any one of claims 1 to 4, wherein the camera module (10) further comprises an elastic member (50), the elastic member (50) is configured to provide an elastic force for the second support (414) and the lens assembly (40) to move from a first position to a second position, a direction pointing from the first position to the second position is along the optical axis of the lens assembly (40), the first position is closer to the base (413) than the second position, the first drive mechanism (418) drives the second support (414) and the lens assembly (40) to move between the second position and a third position along the optical axis of the lens assembly (40), and the second position is between the first position and the third position.

6. The camera module (10) according to claim 5, wherein the elastic member (50) is disposed below the first support (415); and when the first support (415) and the lens assembly (40) are located at the first position, the first support (415) is in contact with the elastic member (50), and the elastic member (50) deforms and generates an elastic force pointing from the first position to the second position.

7. The camera module (10) according to claim 6, wherein when the first support (415) and the lens assembly (40) move between the second position and the third position, the first support (415) is separated from the elastic member (50).

8. The camera module (10) according to any one of claims 5 to 7, wherein the elastic member (50) comprises a first support lug (501), a second support lug (502), and an elastic section (503) connected between the first support lug (501) and the second support lug (502), both the first support lug (501) and the second support lug (502) are fastened on the second support (414), and the elastic section (503) extends to a lower side of the first support (415); and
when the first support (415) and the lens assembly (40) are located at the first position, the first support (415) is in contact with the elastic section (503), and the elastic section (503) deforms and generates an elastic force pointing from the first position to the second position.

9. The camera module (10) according to any one of claims 1 to 8, wherein the camera module (10) comprises a sliding rod (53), the sliding rod (53) is connected to the second support (414), a sliding slot (531) is provided on the first support (415), and the sliding rod (53) is slidably connected to the sliding slot (531).

10. The camera module (10) according to claim 9, wherein the camera module (10) further comprises a first magnetic component (54), and the first magnetic component (54) is configured to generate an attraction force between the first support (415) and the sliding rod (53).

11. The camera module (10) according to claim 10, wherein the first drive mechanism (418) comprises a magnet (4181) and a first coil (4182) opposite to the magnet (4181), one of the magnet (4181) and the first coil (4182) is disposed on the second support (414), the other is disposed on the first support (415), and the first magnetic component (54) is farther away from the magnet (4181) than the sliding rod (53).

12. The camera module (10) according to any one of claims 1 to 11, wherein the camera module (10) comprises a plurality of balls (424), and the plurality of balls (424) are disposed between the base (413) and the second support (414).

13. The camera module (10) according to claim 12, wherein the camera module (10) further comprises a second magnetic component (426), the second magnetic component (426) is disposed between the base (413) and the second support (414), the second support (414) is in contact with the ball (424) under the action of a magnetic attraction force of the second magnetic component (426), and there is a gap between the second support (414) and the base (413) in a state in which the second support (414) is in contact with the ball (424).

14. The camera module (10) according to any one of claims 1 to 13, wherein the second drive mechanism (421) comprises a movable clamping jaw (4213) and a stationary clamping jaw (4211), the SMA wire (4212) connects the movable clamping jaw (4213) and the stationary clamping jaw (4211), the movable clamping jaw (4213) is fastened on the second support (414), and the stationary clamping jaw (4211) is fastened on the base (413).

15. The camera module (10) according to any one of claims 1 to 14, wherein the second support (414) comprises:
a main body portion (414A), wherein the main body portion (414A) has a cavity, the first support (415) is disposed in the cavity, and the first drive mechanism (418) is disposed between the main body portion (414A) and the first support (415); and
an extension portion (414B), wherein the extension portion (414B) is disposed on a side that is of the main body portion and that is close to the base (413), the extension portion (414B) extends away from the main body portion (414A) in a circumferential direction of an outer edge of the main body portion, there is a gap between the extension portion (414B) and the base (413), and the second drive mechanism (421) is disposed in the gap.

16. The camera module (10) according to any one of claims 1 to 15, wherein the camera module (10) further comprises a module circuit board (80) and an electrical connection structure; and
the first drive mechanism (418), the second drive mechanism (421), and the third drive mechanism (24) are all electrically connected to the circuit board of the camera drive motor through the electrical connection structure.

17. The camera module (10) according to claim 16, wherein the electrical connection structure comprises:
a first FPC (61), wherein the first FPC (61) is disposed on the second support (414), and the first FPC (61) is electrically connected to the module circuit board (80);
a first conductive lead (621), wherein the first conductive lead (621) is disposed on the second support (414), a first end of the first conductive lead (621) is electrically connected to the first drive mechanism (418), and a second end of the first conductive lead (621) is electrically connected to the first FPC (61);
a first spring arm (427), wherein a first end of the first spring arm (427) is connected to the second support (414), and a second end of the first spring arm (427) is fastened to the base (413);
a second conductive lead (63), wherein the second conductive lead (63) is disposed on the base (413), and the second drive mechanism (421) is electrically connected to the module circuit board (80) through the second conductive lead (63);
a ground lead (66), wherein the ground lead (66) is disposed on the base (413), one end of the ground lead (66) is electrically connected to the second end of the first spring arm (427), and the other end of the ground lead (66) is electrically connected to the module circuit board (80) of the camera module (10); and
a second spring arm (58), wherein a part of the second spring arm (58) is electrically connected to the variable aperture (20).

18. The camera module (10) according to claim 17, wherein a first drive chip (803) is disposed on the module circuit board (80); and the first drive mechanism (418) is electrically connected to the first FPC (61) through the first conductive lead (621), and is electrically connected to the first drive chip (803) through the first FPC (61).

19. The camera module (10) according to claim 18, wherein the second drive mechanism (421) is electrically connected to the first drive chip (803) through the second conductive lead (63).

20. The camera module (10) according to claim 18 or 19, wherein the camera module (10) further comprises a position sensor (11), the position sensor (11) is configured to detect a position of the second support (414) relative to the base (413), and the position sensor (11) is electrically connected to the first drive chip (803) through the first FPC (61).

21. The camera module (10) according to any one of claims 17 to 20, wherein the electrical connection structure further comprises a third conductive lead (622), the third conductive lead (622) is disposed in the second support (414), the variable aperture (20) comprises a second drive chip (28) and a second FPC (27), the third drive mechanism (24) is electrically connected to the second drive chip (28), the second drive chip (28) is electrically connected to the second FPC (27), a part of the second spring arm (58) is connected to the second FPC (27), and the other part of the second spring arm (58) is electrically connected to the first FPC (61) through the third conductive lead (622), so that the second drive chip (28) is electrically connected to the module circuit board (80) through the second FPC (27), the second spring arm (58), the third conductive lead (622), and the first FPC (61).

22. The camera module (10) according to claim 21, wherein the variable aperture (20) further comprises: a fastening base (21), having a first light transmitting hole (101), wherein the fastening base (21) comprises a bottom plate (211) and a side plate (213), the side plate (213) is disposed on the bottom plate (211) and encloses a periphery of the first light transmitting hole (101), the side plate (213) is provided with a first opening (130), and the first opening (130) penetrates the side plate (213) in a direction perpendicular to the bottom plate (211);
a rotating carrier (22), located in the fastening base (21) and rotatably connected to the fastening base (21), wherein the rotating carrier (22) is disposed around the periphery of the first light transmitting hole (101), the rotating carrier (22) comprises an annular portion (221) and a convex lug (222), the annular portion (221) is disposed around the periphery of the first light transmitting hole (101), the convex lug (222) is disposed on a side wall of the annular portion (221), the convex lug (222) is located in the first opening (130), and a side surface of the convex lug (222) is exposed from the first opening (130); and
a plurality of blades (23), disposed on the rotating carrier (22), wherein the blades (23) are slidably connected to the annular portion (221) and rotatably connected to the fastening base (21), the plurality of blades (23) are distributed annularly to enclose an aperture hole (100), and the aperture hole (100) is in communication with the first light transmitting hole (101); and
the third drive mechanism (24) comprises:
a magnet component (241), disposed on a side that is of the convex lug (222) and that is away from the blade (23), and connected to the rotating carrier (22); and
a second coil (242), disposed on a side that is of the magnet component (241) and that faces the fastening base (21).

23. The camera module (10) according to claim 22, wherein the second FPC (27) is disposed on a side that is of the fastening base (21) and that is away from the blade (23), and the second FPC (27) is connected to the fastening base (21); and
the second coil (242) passes through the fastening base (21) and is disposed on a side that is of the second FPC (27) and that faces the rotating carrier (22), and the second coil (242) is connected to the second FPC (27).

24. The camera module (10) according to claim 22, wherein the fastening base (21) comprises:
a first plastic part (2101); and
a first metal support (2102), embedded in the first plastic part (2101), wherein the first metal support (2102) and the first plastic part (2101) are connected to form a first integrated mechanical part (2100), and the first metal support (2102) is grounded on the second FPC (27).

25. The camera module (10) according to claim 22, wherein
the second coil (242) is disposed on the fastening base (21) and directly connected to the fastening base (21).

26. The camera module (10) according to claim 25, wherein the fastening base (21) comprises:
a first plastic part (2101);
a first metal support (2102), embedded in the first plastic part (2101);
a metal ground trace (2103), embedded in the first plastic part (2101), wherein the metal ground trace (2103) is connected to the first metal support (2102);
a metal signal trace (2104), embedded in the first plastic part (2101), wherein the metal signal trace (2104), the metal ground trace (2103), the first metal support (2102), and the first plastic part (2101) are connected to form a first integrated mechanical part (2100);
a metal ground terminal (2105), disposed outside the first plastic part (2101), wherein the metal ground terminal (2105) is connected to the metal ground trace (2103); and
a metal signal terminal (2106), disposed outside the first plastic part (2101), wherein the metal signal terminal (2106) is connected to the metal signal trace (2104).

27. The camera module (10) according to any one of claims 1 to 26, wherein a protrusion is disposed on a side that is of the variable aperture (20) and that is close to the lens assembly (40), a groove is provided on the lens assembly (40), and the protrusion matches the groove.

28. The camera module (10) according to claim 27, wherein a cross section of the groove is in a dovetail shape.

29. An electronic device, comprising a housing and the camera module (10) according to any one of claims 1 to 28, wherein the housing comprises at least one lens assembly (40) hole, and the camera module (10) is disposed in the lens assembly (40) hole.

30. The electronic device according to claim 29, wherein the electronic device further comprises a processor (5); and
the camera module (10) comprises a module circuit board (80), and the module circuit board (80) is electrically connected to the processor (5) through a third FPC (804).

31. The electronic device according to claim 29 or 30, wherein a first drive chip (803) is disposed on the module circuit board (80), both the first drive mechanism (418) and the second drive mechanism (421) are electrically connected to the first drive chip (803), and the first drive chip (803) is electrically connected to the processor (5); and
the first drive chip (803) is configured to control the first drive mechanism (418) and the second drive mechanism (421).

32. The electronic device according to claim 31, wherein the electronic device further comprises a position sensor (11), the position sensor (11) is electrically connected to the first drive chip (803), the position sensor (11) is configured to detect a position of the second support (414) relative to the base (413), and the first drive chip (803) is configured to control the second drive mechanism (421) based on position information detected by the position sensor (11).

33. The electronic device according to claim 32, wherein the position sensor (11) comprises a Hall sensor and a gyroscope.

34. The electronic device according to any one of claims 30 to 33, wherein the variable aperture (20) comprises a second drive chip (28), the second drive chip (28) is electrically connected to the processor (5), the second drive chip (28) is electrically connected to a third drive mechanism, and the second drive chip (28) is configured to control the third drive mechanism.

35. The electronic device according to claim 34, wherein a Hall sensor is integrated into the second drive chip (28).
